# EUROPEAN PATENT SPECIFICATION

(11) **EP 3 234 243 B1**
(45) Date of publication and mention of the grant of the patent: **18.09.2019**
(21) Application number: 15805655.6
(22) Date of filing: 05.11.2015
(51) Int. Cl.: A43D 25/18, D04H 1/593, D04H 1/70, D04H 1/76, D04H 13/00, A43B 23/02, A43B 23/04

(54) **NONWOVEN MATERIAL, METHODS OF MAKING SAME, AND ARTICLES INCORPORATING THE NONWOVEN MATERIAL**
VLIESMATERIAL, VERFAHREN ZUR HERSTELLUNG DAVON UND ARTIKEL MIT DEM VLIESMATERIAL
MATÉRIAU NON-TISSÉ, SON PROCÉDÉ DE FABRICATION, ET ARTICLES INCORPORANT LE MATÉRIAU NON-TISSÉ

(30) Priority: 16.12.2014 US 201462092517 P; 04.11.2015 US 201514932702
(43) Date of publication of application: 25.10.2017
(73) Proprietor: Nike Innovate C.V., Beaverton, OR 97005-6453 (US)
(72) Inventor: BREITHAUPT, Chris, Beaverton, OR 97005-6453 (US); WOOD, Christina M., Beaverton, OR 97005-6453 (US)
(74) Representative: Müller-Boré & Partner Patentanwälte PartG mbB
(86) International application number: PCT/US2015/059207
(87) International publication number: WO 2016/099687

(56) References cited:
- WO-A2-02/052071
- CN-A- 102 345 210
- US-A- 4 899 411
- US-A1- 2006 276 095
- US-A1- 2013 320 584

## Description

### BACKGROUND

The present invention relates generally to nonwoven materials, methods of making nonwoven materials, and articles made from nonwoven materials. In particular, the present invention relates to a breathable nonwoven material, methods of making the nonwoven material, and articles incorporating the nonwoven material.

Fabrics may be incorporated into a variety of products for both personal and industrial purposes. Nonwoven fabrics may be used in various products, and nonwoven fabrics may be manufactured for incorporation into a particular type of article. Breathable nonwoven fabrics may be desirable for articles of footwear and articles of apparel. Certain types of conventional nonwoven materials made with a backing material may not be sufficiently breathable for incorporation into articles of footwear and articles of apparel, while other types of conventional nonwoven material made without a backing material may not be sufficiently durable for incorporation into articles of footwear and articles of apparel.

US 2006/0276095 A1 describes a method for producing a shoe upper by depositing a mat of fibre particles onto a last.

### SUMMARY

A nonwoven fabric may form an article, a component of an article, or form a material that can be used to form an article or a component of an article. A method of making the nonwoven fabric includes depositing a plurality of fiber particles onto a substrate. The fiber particles may be relatively long compared to the industry standard. The substrate may have any shape, including a flat surface, a curved surface, or a three-dimensional surface. The shape of the substrate is imparted to the resultant fabric, so the resultant fabric can be formed into the shape of the desired article or a component of the desired article in addition to a sheet of fabric from which components of the desired article may be cut.

The substrate may be prepared to accept the fiber particles, such as by spreading a gelatinous substance on the surface of the substrate to which the fiber particles may temporarily adhere or by charging the substrate with an electromagnetic charge. The fiber particles are then deposited onto the substrate using any method known in the art, such as by blowing the fiber particles onto the substrate. An adhesive is applied to the fiber particles prior to matting the fiber particles into a nonwoven fabric layer.

This process of depositing fiber particles, applying adhesive, and matting the fiber particles may be repeated until a desired number of layers or a desired thickness of the resultant nonwoven fabric is achieved. Optionally, some layers may include a mask to prevent fiber particles from accumulating in selected areas to manipulate the thickness, flexibility, breathability, and other properties of the nonwoven fabric in those selected areas. The adhesive is then cured, and the resultant nonwoven fabric is removed from the substrate and optionally sent for additional processing. Nonwoven articles made using this method include articles of apparel and articles of footwear.

In one aspect, the invention provides a method of making a nonwoven article, the method comprising the steps of: preparing a substrate to receive a plurality of fiber particles, depositing the plurality of fiber particles onto the substrate, applying an adhesive to the plurality of fiber particles, depositing a second plurality of fiber particles onto the adhesive and the first plurality of fiber particles, matting the fiber particles to form a matted layer, and removing the resultant nonwoven article from the substrate, as defined in claim 1.

In one aspect, the invention provides a method of making a nonwoven upper, the method comprising the steps of preparing a last to receive a plurality of fiber particles, depositing the plurality of fiber particles onto the last in the shape of an upper, including a throat opening, applying an adhesive to the plurality of fiber particles, depositing a second plurality of fiber particles onto the adhesive and the first plurality of fiber particles, matting the fiber particles to form a matted layer of the upper; curing the adhesive; and removing the resultant upper from the last, as defined in claim 6.

In one aspect, the invention provides a method of making a nonwoven fabric, the method comprising the steps of preparing a substantially flat substrate to receive a plurality of fiber particles, depositing the plurality of fiber particles onto the substantially flat substrate, applying an adhesive to the plurality of fiber particles, depositing a second plurality of fiber particles onto the adhesive and the first plurality of fiber particles, matting the fiber particles to form a matted layer of the nonwoven fabric, curing the adhesive, and removing the resultant nonwoven fabric from the substantially flat substrate, as defined in claim 9.

In one aspect the invention provides an article incorporating a nonwoven fabric. The article includes a first layer incorporating a first plurality of matted fiber particles and an adhesive, wherein each fiber in the first plurality of matted fiber particles is a monofilament, and where all of the fibers in the first plurality of matted fiber particles is the same monofilament. The article also includes a second layer incorporating a second plurality of matted fiber particles and the adhesive, wherein each fiber in the second plurality of matted fiber particles is a monofilament, and where all of the fibers in the second plurality of matted fiber particles is the same monofilament, as defined in claim 13.

Other systems, methods, features and advantages of the invention will be, or will become, apparent to one of ordinary skill in the art upon examination of the following figures and detailed description. It is intended that all such additional systems, methods, features and advantages be included within this description and this summary, be within the scope of the invention, and be protected by the following claims.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like reference numerals designate corresponding parts throughout the different views.
FIG. 1 is a perspective view of an embodiment of an article of footwear having a nonwoven upper;
FIG. 2 is a perspective, exploded view of the embodiment of the article of footwear having a nonwoven upper shown in FIG. 1;
FIG. 3 is a perspective view of an embodiment of a nonwoven upper;
FIG. 4 is a flowchart of an embodiment of a method of making a nonwoven upper;
FIG. 5 shows a last for use in the embodiment of a method of making a nonwoven upper;
FIG. 6 shows the last of FIG. 5 being prepared to receive a first layer of fiber particles;
FIG. 7 shows an embodiment of the depositing of the first layer of fiber particles onto the last;
FIG. 8 shows an embodiment of applying an adhesive to the first layer of fiber particles;
FIG. 9 shows an embodiment of applying a second layer of fiber particles onto the first layer of fiber particles and adhesive;
FIG. 10 shows an embodiment of mechanically matting the first and second layers of fiber particles to form a first ply of nonwoven material;
FIG. 11 shows an embodiment of applying an adhesive to the third layer of fiber particles, using a mask to inhibit the application of adhesive in a selected location;
FIG. 12 shows an embodiment of depositing a third layer of fiber particles onto the last and the first ply of nonwoven material, using a mask to inhibit the deposition of fiber particles in a selected location;
FIG. 13 shows an embodiment of mechanically matting the third layer of fiber particles to form a second ply of nonwoven material and curing the nonwoven material;
FIG. 14 shows an embodiment of removing the completed seamless nonwoven upper from the last;
FIG. 15 shows an embodiment of a nonwoven upper with void areas due to the masking;
FIG. 16 shows a perspective view of an embodiment of a flat substrate;
FIG. 17 shows an embodiment of preparing the flat substrate to receive fiber particles;
FIG. 18 shows an embodiment of the depositing of a fourth layer of fiber particles onto the flat substrate;
FIG. 19 shows an embodiment of applying an adhesive to the fourth layer of fiber particles;
FIG. 20 shows an embodiment of applying a fifth layer of fiber particles onto the fourth layer and the adhesive binder;
FIG. 21 shows an embodiment of mechanically matting the fourth and fifth layers of fiber particles to form a first ply of nonwoven material;
FIG. 22 shows an embodiment of applying an adhesive to the first ply of nonwoven material;
FIG. 23 shows an embodiment of depositing a sixth layer of fiber particles onto the first ply of nonwoven material and the applied adhesive;
FIG. 24 shows an embodiment of matting the sixth layer of fiber particles to form a second ply of nonwoven material interconnected with the first ply of nonwoven material;
FIG. 25 shows an embodiment of curing the nonwoven material in a convection oven;
FIG. 26 shows an embodiment of removing the resultant nonwoven fabric from the substrate;
FIG. 27 shows an embodiment of a resultant nonwoven fabric;
FIG. 28 shows a charged last for use in the embodiment of a method of making a seamless nonwoven upper;
FIG. 29 shows an embodiment of the depositing of a seventh layer of fiber particles onto the charged last;
FIG. 30 shows an embodiment of applying an adhesive to the seventh layer of fiber particles;
FIG. 31 shows an embodiment of applying an eighth layer of fiber particles onto the seventh layer of fiber particles and the charged last;
FIG. 32 shows an embodiment of mechanically matting the seventh and eighth layers of fiber particles to form a ply of nonwoven material;
FIG. 33 shows an embodiment of applying an adhesive to the ply of nonwoven material;
FIG. 34 shows an embodiment of applying a ninth layer of fiber particles onto the ply of nonwoven material and the adhesive binder;
FIG. 35 shows an embodiment of mechanically matting the ninth layer of fiber particles to form a second ply of nonwoven material;
FIG. 36 shows an embodiment of removing the completed seamless nonwoven upper from the uncharged last;
FIG. 37 shows a perspective view of an embodiment of a seamless nonwoven upper;
FIG. 38 shows a perspective view of an embodiment of a charged flat substrate;
FIG. 39 shows an embodiment of the depositing of a tenth layer of fiber particles onto the charged substrate;
FIG. 40 shows an embodiment of applying an adhesive to the tenth layer of fiber particles;
FIG. 41 shows an embodiment of depositing an eleventh layer of fiber particles onto the charged substrate, tenth layer of fiber particles, and adhesive binder;
FIG. 42 shows an embodiment of mechanically matting the tenth and eleventh layers of fiber particles to form a ply of nonwoven material;
FIG. 43 shows an embodiment of applying an adhesive to the ply of nonwoven material;
FIG. 44 shows an embodiment of depositing a twelfth layer of fiber particles onto the first ply of nonwoven material and the adhesive binder;
FIG. 45 shows an embodiment of mechanically matting the twelfth layer of fiber particles to form a second layer of nonwoven material and curing the nonwoven material;
FIG. 46 shows an embodiment of removing the completed seamless nonwoven fabric from the uncharged substrate;
FIG. 47 shows an embodiment of an article of apparel being made from a nonwoven material on a body last; and
FIG. 48 shows an embodiment of an article of apparel and its pattern on a nonwoven material.

### DETAILED DESCRIPTION

A variety of products are at least partially formed from fabrics. As examples, articles of apparel (e.g., shirts, pants, socks, jackets, undergarments, footwear), containers (e.g., backpacks, bags), and upholstery for furniture (e.g., chairs, couches, car seats) are often formed from various fabric elements that are joined through stitching or adhesive bonding. Fabrics may also be utilized in bed coverings (e.g., sheets, blankets), table coverings, towels, flags, tents, sails, and parachutes. Fabrics utilized for industrial purposes are commonly referred to as technical fabrics and may include structures for automotive and aerospace applications, filter materials, medical fabrics (e.g. bandages, swabs, implants), and industrial apparel that protects or insulates against heat and radiation.

Although some products are formed from one type of fabric, many products may also be formed from two or more types of fabrics in order to impart different properties to different areas. As an example, shoulder and elbow areas of a shirt may be formed from a fabric that imparts durability (e.g., abrasion-resistance) and stretch-resistance, whereas other areas may be formed from a fabric that imparts breathability, comfort, stretch, and moisture-absorption. As another example, an upper for an article of footwear may have a structure that includes numerous layers formed from various types of fabrics and other materials (e.g., polymer foam, leather, synthetic leather), and some of the layers may also have areas formed from different types of fabrics to impart different properties. As yet another example, straps of a backpack may be formed from non-stretch fabric elements, lower areas of a backpack may be formed from durable and water-resistant fabric elements, and a remainder of the backpack may be formed from comfortable and compliant fabric elements. Accordingly, many products may incorporate various types of fabrics in order to impart different properties to different portions of the products.

In order to impart the different properties to different areas of a product, fabric elements or components formed from the materials may be cut to desired shapes and then joined together, usually with stitching or adhesive bonding. As the number and types of fabric elements incorporated into a product increases, the time and expense associated with transporting, stocking, cutting, and joining the fabric elements may also increase. Waste material from cutting and stitching processes also accumulates to a greater degree as the number and types of fabric elements incorporated into a product increases. Moreover, products with a greater number of fabric elements and other materials may be more difficult to recycle than products formed from few elements and materials. By decreasing the number of elements and materials utilized in a product, therefore, waste may be decreased while increasing the manufacturing efficiency and recyclability.

Fabrics may be defined as any manufacture from fibers, filaments, or yarns having a generally two-dimensional structure (i.e., a length and a width that are substantially greater than a thickness). In general, fabrics may be classified as mechanically-manipulated fabrics or non-woven fabrics. Mechanically-manipulated fabrics are often formed by weaving or interlooping (e.g., knitting) a yarn or a plurality of yarns, usually through a mechanical process involving looms or knitting machines. Non-woven fabrics are webs or mats of filaments that are bonded, fused, interlocked, or otherwise joined. Felt and nonwoven material are common examples of non-woven fabrics.

Flocking, generally, is the process of depositing many small fiber particles, called fiber particles, onto a surface or backing layer. The fiber particles affix onto the surface. However, flocking includes retaining the surface or backing layer as part of the resultant article. The technique described below for making nonwoven material is inspired by conventional flocking techniques, but no backing layer remains in the resultant nonwoven material; the fiber particles and binder are matted to produce a flexible fabric. The resultant nonwoven material may have enhanced breathability as compared to other types of woven or nonwoven materials because the process of depositing fiber particles and matting those particles together allows for large pores or air gaps between the fiber particles. This breathability may be desirable for articles of footwear and articles of apparel.

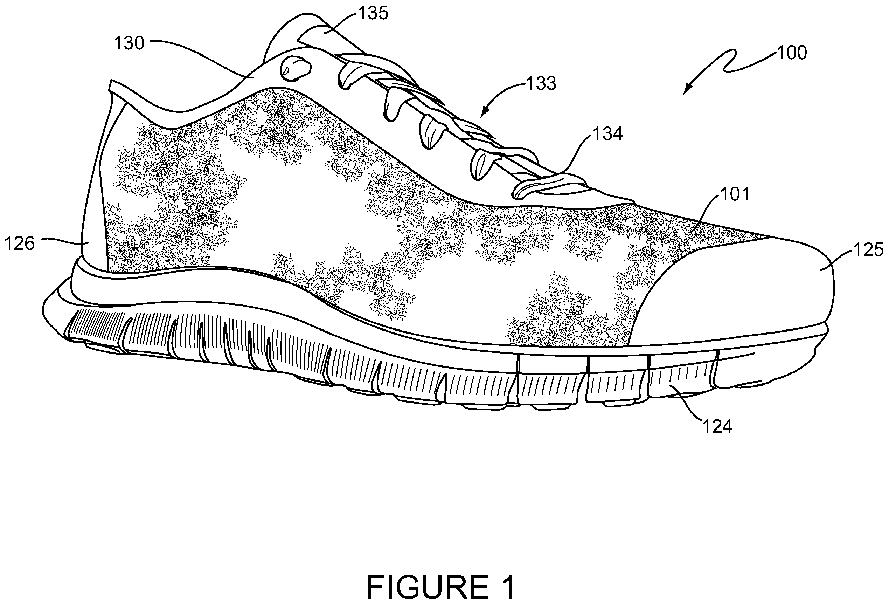

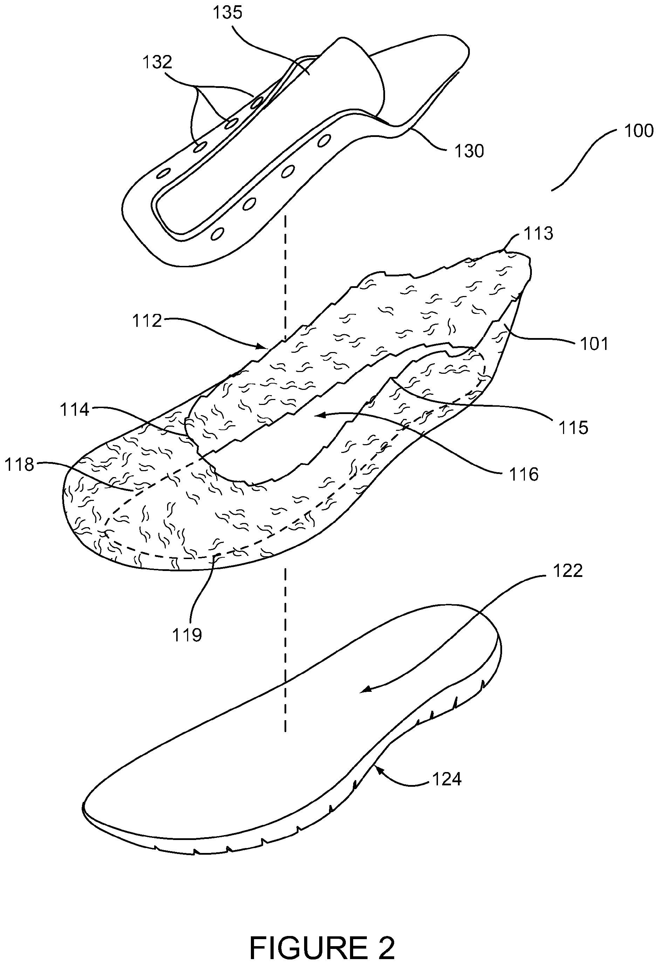

FIGS. 1 and 2 show an embodiment of one type of article of footwear 100 incorporating a nonwoven material. Nonwoven upper 101 is a breathable seamless upper. For the purposes of this disclosure, a seamless upper means that the upper lacks overlapping edges or portions that are joined together by any conventional method, such as stitching, welding, or with adhesives. A seamless upper may be joined to another component, such as a sole 124 and other finishing or decorative elements, such as an eyestay reinforcing element 130, a first protective portion or toe counter 125 disposed on a toe of nonwoven fabric upper 101, a second protective portion or heel counter 126 disposed on a heel of nonwoven fabric upper 101. In the embodiment shown in FIG. 2, finishing element 130 includes a tongue 135 and a portion 132 configured to accommodate a fastening system 133 (shown in FIG. 1). Fastening system 133 may include eyelets 132 and a lace 134. In other embodiments, nonwoven fabric upper 101 may include additional components or nonwoven fabric upper 101 may eliminate one or more of these described components.

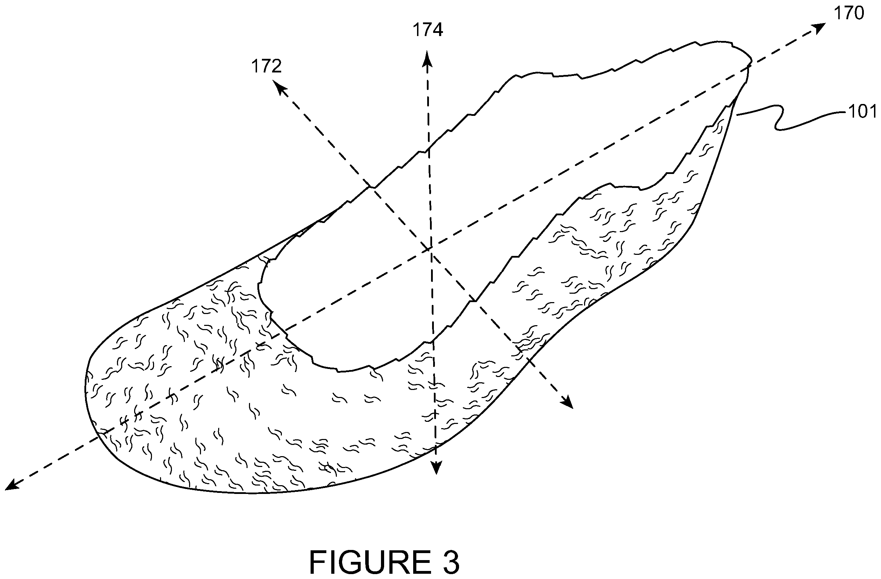

As shown in FIGS. 2 and 3, nonwoven fabric upper 101 may be made from a nonwoven material. The nonwoven material may be shaped with curvature along one or more axes of nonwoven fabric upper 101 so that the nonwoven material is produced in the shape of nonwoven fabric upper 101. As shown in FIG. 3, nonwoven fabric upper 101 includes curvature along each of a longitudinal axis 170 that extends in a heel-to-toe direction, a transverse axis 172 that extends in a medial-to-lateral direction, and a vertical axis 174 that extends in through nonwoven fabric upper 101 in a direction that is substantially orthogonal to longitudinal axis 170 and transverse axis 172.

In the embodiment shown in FIG. 2, nonwoven fabric upper 101 includes a throat opening 112, where the throat opening is defined by a heel edge 113, a medial edge 114, and a lateral edge 115. In the embodiment shown in FIG. 2, nonwoven fabric upper 101 also includes an optional lower opening 116 defined by a medial edge 118 and a lateral edge 119. Lower opening 116 is disposed opposite to throat opening 112. When nonwoven fabric upper 101 is associated with an upper surface 122 of sole 120 to produce article of footwear 100, sole 120 closes and seals lower opening 116. In other embodiments, no lower opening 116 is provided; nonwoven fabric upper 101 may include a solid portion of material connecting medial edge 118 to lateral edge 119 across the bottom of nonwoven fabric upper 101. In such embodiments, sole 120 is affixed to this solid portion of material. These components of article of footwear 100 may be attached to each other using any method known in the art, such as with adhesives, stitching, and/or welding.

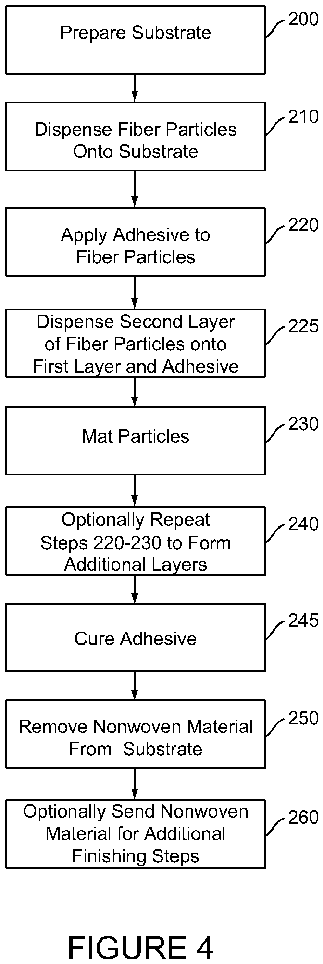

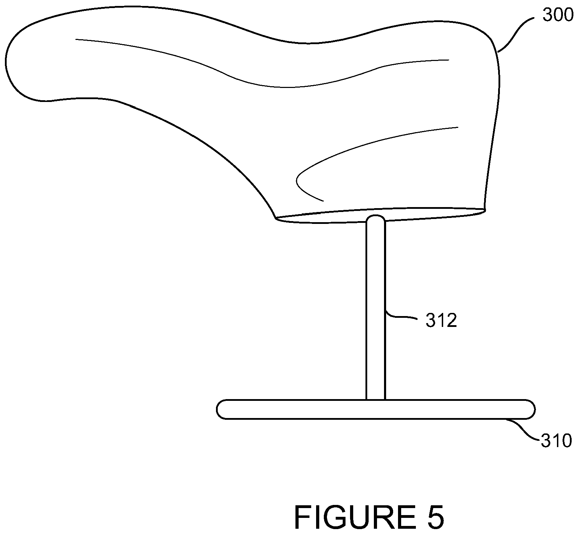

The material for a nonwoven article may be made according to the method shown in FIG. 4. By utilizing the method shown in the flow diagram of FIG. 4, the nonwoven material may be made so that the entire thickness of the nonwoven material is made from fiber particles and binder. No additional backing or substrate needs to be incorporated into the final material, though a substrate may be used during the method to support the uncured layers of fiber particles and binder. Further, in some embodiments of the method, a substrate shaped in all three dimensions may be used so that the nonwoven material may be manufactured in the shape of the article to avoid the need for additional processing steps or to limit the number of additional processing steps. Conventional methods for making articles such as an article of footwear generally include multiple preparation and cuttings steps to shape the article and to form multiple seams to hold the shape. The article may then be sent for additional finishing work, such as associating a sole with an upper or adding other finishing elements or components to the article. One embodiment of the method of FIG. 4 is shown in FIGS. 5-13, and the method is described below with reference to FIGS. 4-13.

The method described in FIG. 4 for making the nonwoven material occurs on a substrate. In some embodiments, the method of FIG. 4 allows for a shaped nonwoven article to be made on the shaped substrate. In some embodiments, the substrate may be a last for an article of footwear or a body last. In other embodiments, the method of FIG. 4 allows for a substantially flat portion of nonwoven material to be made on a substantially flat substrate. When a flat substrate is used, the resultant nonwoven material may then be finished into a flat article or cut and/or shaped to form a shaped article.

Generally, the method described in FIG. 4 begins by preparing a substrate to receive fiber particles in a first step 200. The substrate may be any type of surface capable of supporting fiber particles and binder. In some embodiments, the substrate may be a non-porous surface. In some embodiments, the substrate may be made from thermoplastic materials, such as various types of known polymers, thermoset materials, such as rubber or various types of known polymers, ceramic materials, metals, composite materials, or combinations thereof.

The resultant nonwoven fabric will take on the shape of the substrate. In some embodiments, the substrate may be a substantially flat surface so that the resultant nonwoven fabric is also substantially flat. In some embodiments, the substrate may include a surface shaped with curvature along at least two axes so that the resultant nonwoven fabric is formed with the same curvature. In some embodiments, the substrate may include multiple shaped and/or curved surfaces so that the resultant nonwoven fabric is formed into a shaped, three-dimensional article.

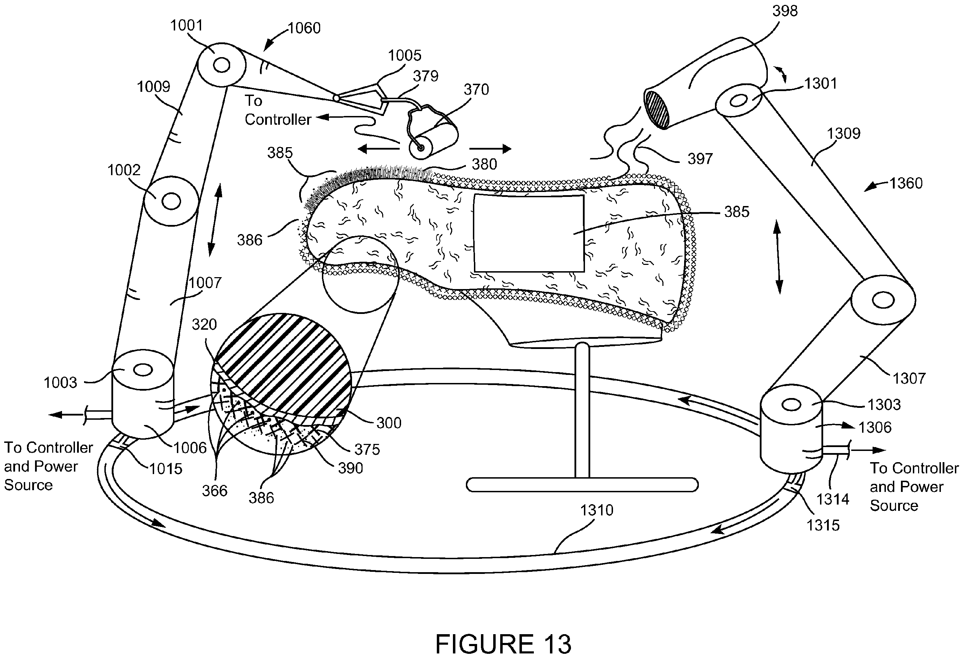

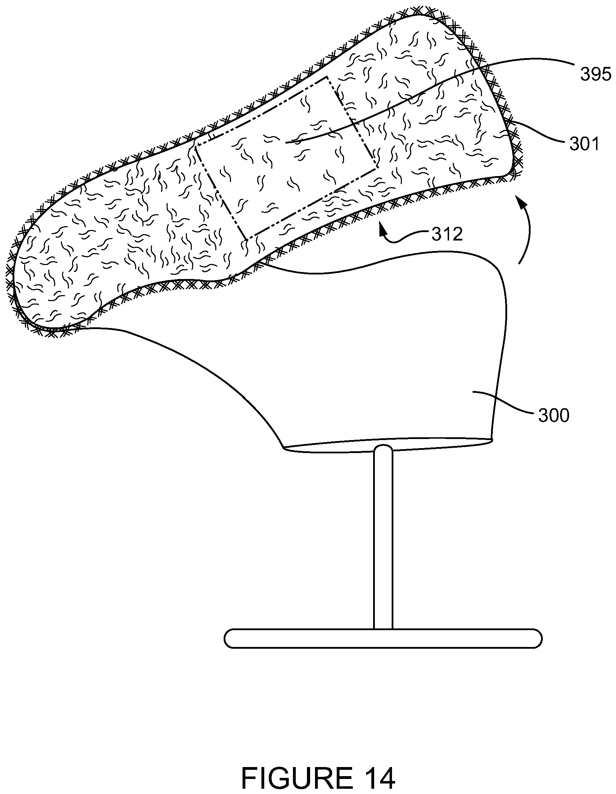

FIG. 5 shows an embodiment of a substrate 300 used in an embodiment of a method of making a nonwoven upper 301 (shown in FIGS. 13 and 14). In the embodiment shown in FIG. 5, substrate 300 is a last for an article of footwear. Substrate 300 may be supported on a manufacturing floor, preparation table, or otherwise in a manufacturing facility by a base 310. Base 310 may be any type of structure capable of supporting and stabilizing substrate 300, such as a weighted plate. In some embodiments, a pole 312 may be associated with base 310 so that substrate 300 may be positioned at a predetermined height above base 310. In some embodiments, pole 312 may position substrate 300 so that substrate 300 is positioned at a comfortable working height for a user standing or sitting on the manufacturing floor. In other embodiments, pole 312 may position substrate 300 so that all sides of substrate 300 are accessible to the manufacturing process. In some embodiments, substrate 300 may include provisions for associating with pole 312. For example, in one embodiment substrate 300 may include a recess or hole configured to receive a free end of pole 312. The free end of pole 312 may be inserted into substrate 300 and fitted there by an interference fit or with threading. In other embodiments, pole 312 may be an integral extension of substrate 300.

Substrate 300 may be any type of last known in the art. In some embodiments, substrate 300 may be a solid, rigid material but in other embodiments may be made of any substrate material discussed above. In other embodiments, substrate 300 may be an inflatable last. Substrate 300 may be a last configured for any type of foot in terms of size or shape, such as shapes and sizes for adult males, adult females, and children.

Substrate 300 may be a material to which fiber particles may not adhere without an additional adhesive or other substance to which the fiber particles may temporarily adhere. The fiber particles may be any types of fiber particle known in the art, but are, in general, small pieces of cut fiber. In some embodiments, the fiber particles may be natural or synthetic fibers, yarns, or threads. In some embodiments, the fiber particles may be wool, cotton, Nylon, Polyester, Rayon, Kevlar, or combinations of these materials. In some embodiments, only one type of fiber particle is used in the manufacture of the nonwoven material. In other embodiments, different types of fiber particle may be used in the manufacture of the nonwoven material.

Fiber particles are generally small cut pieces of fiber. While the fiber particles may have any denier known in the art, in some embodiments, the denier may be less than 100. In some embodiments, the denier of the fiber particles may be less than about 75. In some embodiments, the denier of the fiber particles may be less than about 50. In some embodiments, the denier of the fiber particles may be less than about 20. In some embodiments, the fiber particles have a length of 1 mm or less. In other embodiments, however, the fiber particles may be longer than 1 mm. In some embodiments, the fiber particles may be 1.5 mm or less in length. In some embodiments, the fiber particles may be at least 2 mm in length. In some embodiments, the fiber particles may be between .25 mm and 5 mm in length. In some embodiments, the fiber particles may be between .5 mm and 4 mm in length. In some embodiments, the fiber particles may be about 2 mm in length. Fiber particles having a length of 2 mm or greater may produce articles that have enhanced durability over articles produced with fiber particles having a length of less than 2 mm. Fiber particles having a length of less than 2 mm may produce articles with less porosity than articles produced with fibers having a length of 2 mm or greater.

In some embodiments, all of the fiber particles used to make a single nonwoven fabric may have substantially the same length. In other embodiments, the fiber particles used to make a single nonwoven fabric may have different lengths. In one embodiment, the fiber particles are a mix of lengths between about .5 mm and about 4 mm. In one embodiment, the fiber particles are a mix of lengths between about .5 mm and about 4 mm with a denier of less than 20.

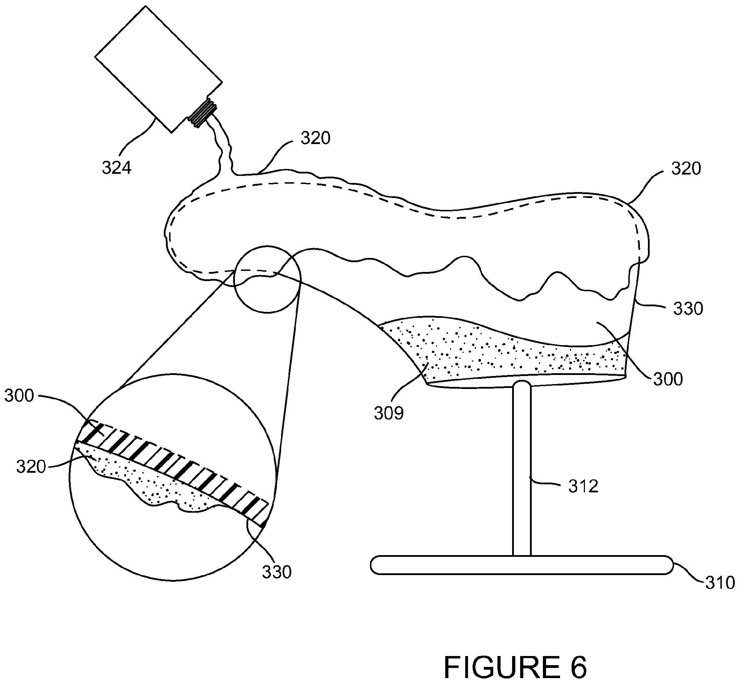

In order to receive the fiber particles and hold the fiber particles in position on the surface of substrate 300, substrate 300 may be prepared with a substance to which the fiber particles may temporarily adhere. In the embodiment shown in FIG. 6, substrate 300 is prepared by spreading a substance 320 onto the surface of substrate 300. Substance 320 may be any type of substance to which the fiber particles may adhere and may be cleaned off of substrate 300 and the resultant article when the article is removed from substrate 300. In some embodiments, substance 320 may be a gelatinous substance such as silicone or petroleum jelly. In other embodiments, substance 320 may be a release film, such as polyurethane film.

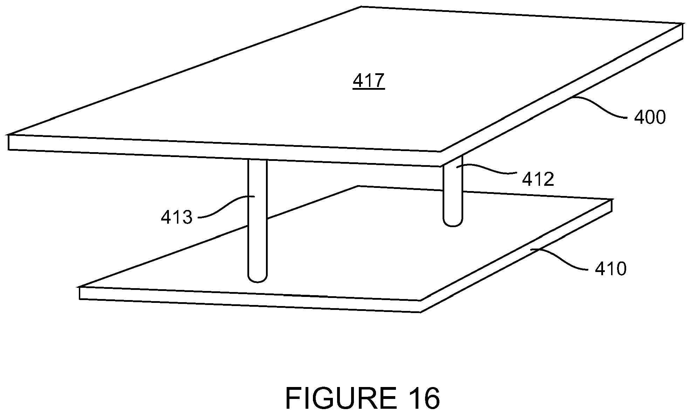

Substance 320 may be applied onto the surface of substrate 300 using any method known in the art. In one embodiment, such as the embodiment shown in FIG. 6, substance 320 is dispensed from a container 324 and spreads onto surface 330 of substrate 300, with or without additional mechanical manipulation such as with a brush. A mask or masking agent such as mask 309 is placed onto substrate 300 prior to the application of substance 320 onto substrate 300. In some embodiments, such as the embodiment shown in FIG. 6, mask 309 may be used to provide a shape to the edges of substance 320 so that the resultant nonwoven material has edges with a specific contour. For example, mask 309 may be provided on substrate 300 so that a resultant nonwoven upper 301 (shown in FIG. 16) has a throat opening 302 (shown in FIG. 16) without a subsequent cutting step, as an edge 303 of throat opening 302 may be adequately finished without any subsequent cutting or trimming steps.

Mask 309 may be any type of material capable of blocking the application of substance 320 to a selected or predetermined area of substrate 300. In some embodiments, mask 309 may be a flexible sheet, screen, or film so that mask 309 may be wrapped around or otherwise fitted to substrate 300. For example, mask 309 may be a sheet or film of thermoset material, such as rubber, a thermoplastic material, such as polyurethane, paper, a fabric, or a metal. In other embodiments, mask 309 may be a hard or relatively rigid piece of material that is formed to fit onto substrate 300 in the desired configuration. For example, mask 309 may be cardboard, a molded thermoplastic or thermoset material, metal, glass, composite material, ceramic, or any other kind of material. Mask 309 may be positioned proximate to substrate 300 or affixed to substrate 300.

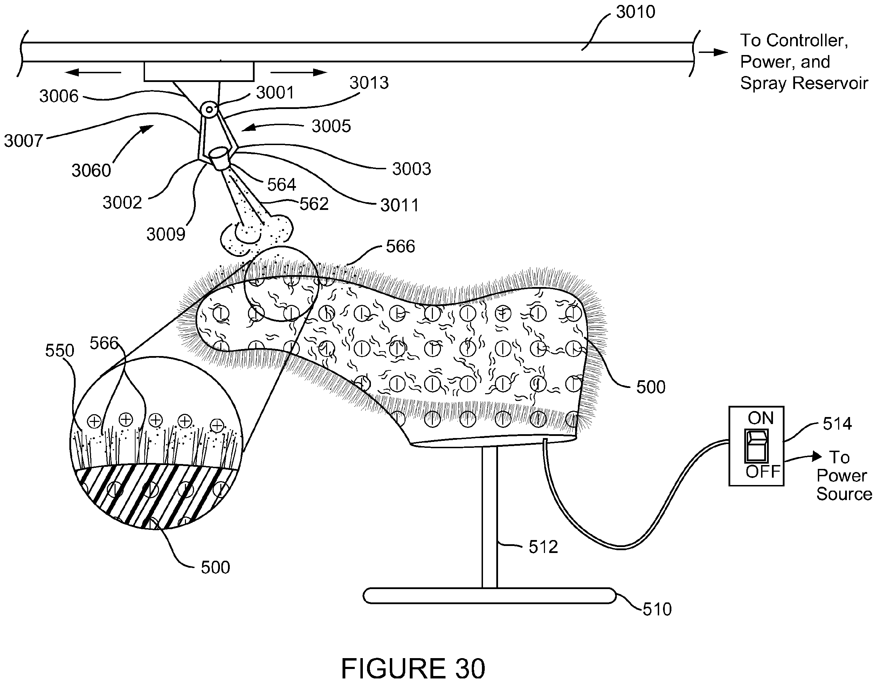

In other embodiments, first step 200 may include other ways to prepare substrate 300 to receive the fiber particles. For example, in the electrostatic embodiments discussed below with respect to FIGS. 30-50, first step 200 may be achieved by applying a charge to the substrate.

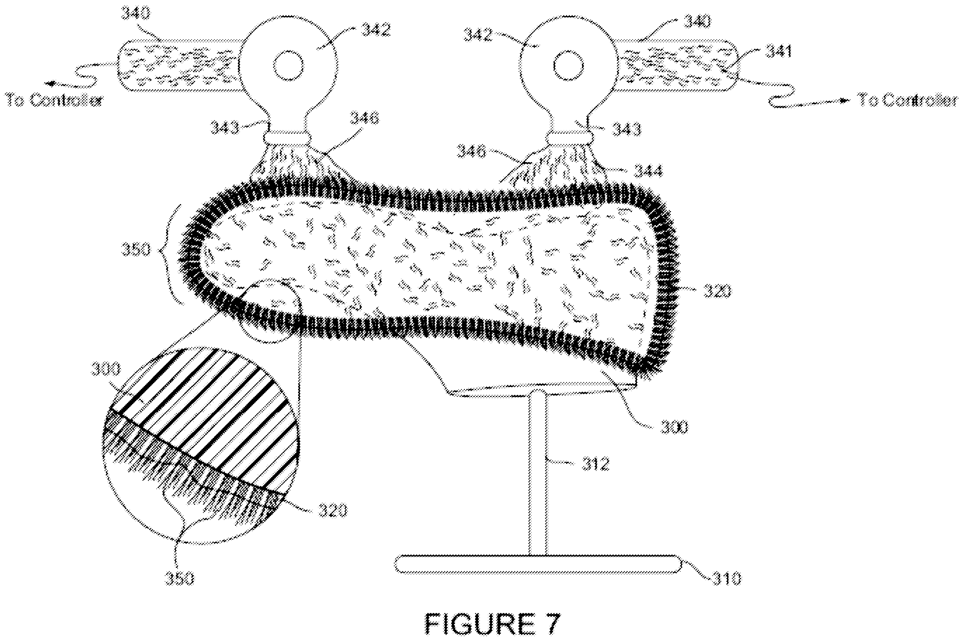

A second step 210 of the method shown in FIG. 4 includes dispensing or depositing a plurality of the fiber particles onto the substrate. FIG. 7 shows an embodiment of second step 210. In the embodiment shown in FIG. 7, substrate 300 has been prepared with substance 320. A dispenser 342 is associated with a reservoir 340 containing a plurality of fiber particles 341, which may be any type of fiber particle as discussed above. Reservoir 340 may be any container capable of holding a desired quantity of fiber particle 341 and communicating that fiber particle to dispenser 342. Dispenser 342 is configured to dispense fiber particles 341 onto substance 320. Dispenser 342 may be any type of dispenser capable of propelling fiber particles 341 from reservoir 340 onto substance 320. Dispenser 342 may be manual or automated.

In the embodiment shown in FIG. 7, dispenser 342 is a blower or other type of pneumatic device equipped with a nozzle 343. Dispenser 342 may be any type of blower known in the art. Dispenser 342 is configured to draw fiber particles 341 from reservoir 340 and expel the fiber particles through nozzle 343 towards substance 320 and substrate 300. Once expelled, the fiber particles become ambient fiber particles 346. Ambient fiber particles 346 are carried along streams of flowing air 344 propelled from dispenser 342. Ambient fiber particles 346 move towards substance 342 until the ambient fiber particles 346 alight on to substance 320. Once ambient fiber particles 346 come into contact with substance 320, the fiber particles become embedded fiber particles 350. In some embodiments, embedded fiber particles 350 are positioned within substance 320 so that embedded fiber particles 350 are substantially normal to the surface of substrate 300. In other embodiments, embedded fiber particles 350 are embedded at other angles with respect to the surface of substrate 300. In some embodiments, embedded fiber particles 350 are positioned at random angles with respect to the surface of substrate 350.

Dispenser 342 and substrate 300 may move relative to one another to ensure that the entire surface of substrate 300 is exposed to ambient fiber particles 346. In one embodiment, dispenser 342 may move around a stationary substrate 300. In another embodiment, substrate 300 may move and rotate relative to a stationary dispenser 342. In some embodiments, more than one dispenser 342 may be positioned at various locations around substrate 300.

In some embodiments, dispenser 342 may be configured to dispense fiber particles 341 until ambient fiber particles 346 no longer adhere to substance 320. In some embodiments, the duration of dispensing may be controlled by one or more sensors positioned proximate substrate 300 that may send a signal to dispenser 342 to cease dispensing fiber particles. In some embodiments, the duration of dispensing may be determined by an operator visually inspecting substrate 300 and ambient fiber particles 346. Excess ambient fiber particles 346 may be removed from the proximity of substrate 300 by additional blowing air or a vacuum.

A third step 220 of the method shown in FIG. 4 includes applying an adhesive to the embedded fiber particles. The applied adhesive enhances the matting of the fiber particles in subsequent manufacturing steps and enhances the ability of each layer of the matted fiber particles to accept an additional layer of fiber particles. The adhesive may be any type of adhesive known in the art. In some embodiments, the adhesive may be an aerosolized adhesive configured to spray small droplets of adhesive onto the embedded fiber particles. In some embodiments, the adhesive may be a liquid adhesive that may be brushed or rolled onto the embedded fiber particles or into which the substrate and embedded fibers may be dipped. In some embodiments, the adhesive may be water based. In other embodiments, the adhesive may be polyvinyl acetate based. In other embodiments, the adhesive may be rubber based. In some embodiments, the adhesive may be LocTite® spray adhesive or liquid adhesive, 3M® spray or liquid adhesives, KIWO® fiber particles adhesive, and/or spray or liquid Plasti Dip®.

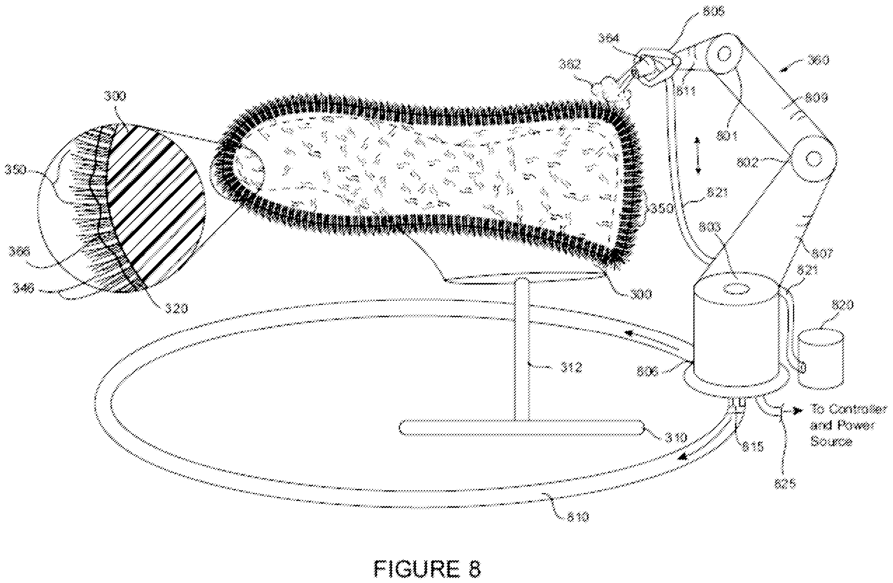

FIG. 8 shows an embodiment of third step 220. In the embodiment shown in FIG. 8, a sprayer 360 is configured to apply an adhesive 362 onto embedded fiber particles 350. Sprayer 360 may be any kind of spray device known in the art capable of aerosolizing and propelling adhesive 362 towards embedded fiber particles 350. In some embodiments, sprayer 360 may be a trigger-type intermittent sprayer, such as a manual spray bottle or handheld spray unit. In some embodiments, sprayer 360 may be a compressor-driven continuous sprayer, such as a power sprayer. In some embodiments, sprayer 360 may be a manually operated sprayer. In other embodiments, such as the embodiment shown in FIG. 8, sprayer 360 may be automated. In some embodiments, sprayer 360 may include a nozzle 364 is configured to expel aerosolized adhesive 362. In some embodiments, sprayer 360 may be a robot programmed to operate and manipulate the position of nozzle 364. The general operation of a robotic arm is well known in the art. Sprayer 360 may in some embodiments be an articulated robotic arm connected to a controller, such as a processor with associated memory, and a power source such as a battery or a connection to a power grid via a power cord such as cord 825. In some embodiments, nozzle 364 may be associated with a source of adhesive, such as source 820. In some embodiments, a feeder tube 821 may establish a fluid connection between adhesive source 820 and nozzle 364. In some embodiments, feeder tube 821 may be exposed, such as in the embodiment shown in FIG. 8. In other embodiments, feeder tube 821 may be integrated into sprayer 360 and may be threaded through sprayer 360 to connect source 820 to nozzle 364.

Sprayer 360 may include multiple members and joints so that the height and/or orientation of nozzle 364 may be manipulated. While sprayer 360 may include any number of members and joint, in some embodiments such as the embodiment shown in FIG. 8, sprayer 360 may include a base 806, a first member 807, a second member 809, a third member 811, and a grip 805. A first joint 801 may connect third member 811 and second member 809. A second joint 802 may connect second member 809 and first member 807. A third joint 803 may connect first member 807 and base 806. Each member such as base 806, first member 807, second member 809, third member 811, and grip 805, may be any type of member known in the art, such as solid rods, hollow tubes, flat bars, and combinations of these types of members. Each joint such as first joint 801, second joint 802, and third joint 803 may be any type of joint known in the art, such as hinge joints and rotary joints. Each joint may be independently moved by controller. Moving the joints to push the members apart may control the height of sprayer 360. Each joint may be configured to allow the attached member to move, pivot, swivel, rotate, or otherwise move with respect to each other.

Sprayer 360 and substrate 300 may move relative to one another to ensure that adhesive 362 is applied to the entire surface of substrate 300. In one embodiment, sprayer 360 may move around a stationary substrate 300. For example, in the embodiment shown in FIG. 8, sprayer 360 may be mounted onto a track 810 that encircles, surrounds, or partially surrounds substrate 300. A connector 815 may be attached to base 806 and slidably positioned within track 810. Connector 815 may be actuated by the controller and the power source using known techniques to translate connector 815, and, by extension, sprayer 360, along track 810. In this manner, sprayer 360 may move to multiple positions around substrate 300. Further, base 360 may be configured to rotate with respect to connector 815 to allow nozzle 364 to face substrate 300 regardless of the position of sprayer 360 on track 810. In another embodiment, substrate 300 may move and rotate relative to a stationary sprayer 360. In some embodiments, more than one sprayer 360 may be positioned at various locations around substrate 300. The operation of robotic arms for manufacturing

In some embodiments, a large amount of adhesive may be applied to embedded fiber particles 350, such as when a dip-type adhesive is used. In other embodiments, such as shown in the enlarged view in FIG. 8, a relatively light coating of adhesive is applied to embedded fiber particles 350. The enlarged view in FIG. 8 shows adhesive droplets 366 dispersed within embedded fiber particles 350. Adhesive droplets 366 may be adhered to an individual fiber particle 346 or adhesive droplets 366 may be adhered to multiple embedded fiber particles 350. Adhesive droplets 366 remain uncured at this point in the manufacturing process.

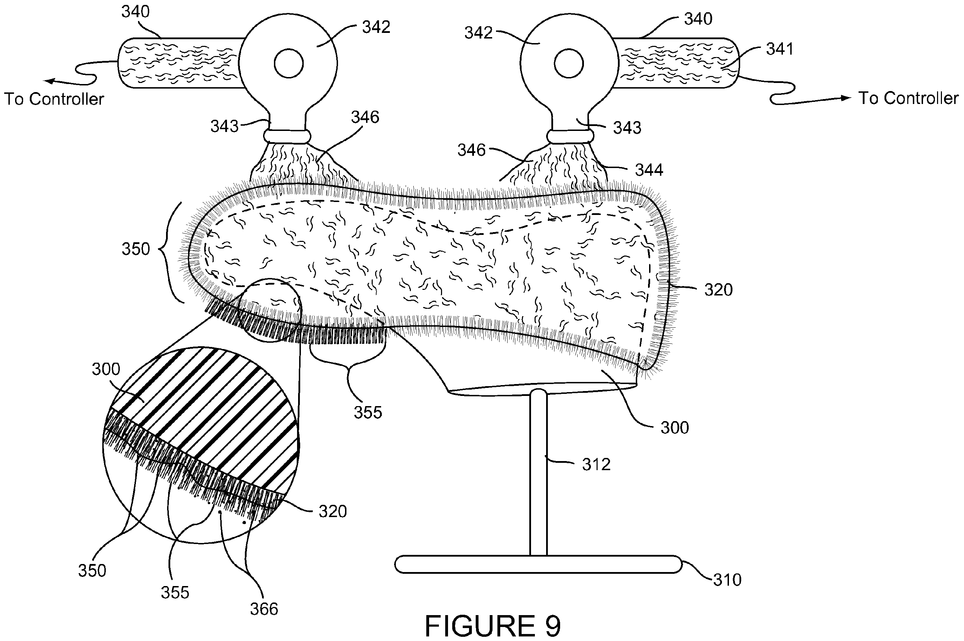

A fourth step 225 of the method shown in FIG. 4 includes dispensing a second layer of fiber particles onto the first layer of fiber particles, the adhesive binder, and the last/substrate. In most respects, fourth step 225 is a repetition of second step 210. FIG. 9 shows an embodiment of fourth step 225, in which dispenser 342 deposits an additional plurality of fiber particles onto embedded fiber particles 350. Dispenser 342 may be manually operated or automated using factory or other robotic mechanisms like an articulated robotic arm. Adhesive particles 366 assist in capturing second embedded fibers 355 and holding second embedded fibers 355 to embedded fibers 350.

A fifth step 230 of the method shown in FIG. 4 includes matting the fiber particles. Matting the fiber particles causes the individual fibers to bend, intertwine, and adhere to each other. This matting process transforms the individual fiber particles into a continuous if porous layer of fabric. In some embodiments, fifth step 230 involves mechanically manipulating embedded fiber particles 350 and second embedded fiber particles 355 by rubbing, grinding, rolling, compressing, or otherwise moving the embedded fiber particles to entangle the embedded fiber particles together. In other embodiments, fifth step 230 may involve a vacuum matting process in which the substrate in positioned in a vacuum chamber to compress the embedded fibers when a vacuum is applied. In other embodiments, fifth step 230 may involve a manual matting process in which an operator or technician uses his or her hands to entangle the embedded fiber particles together.

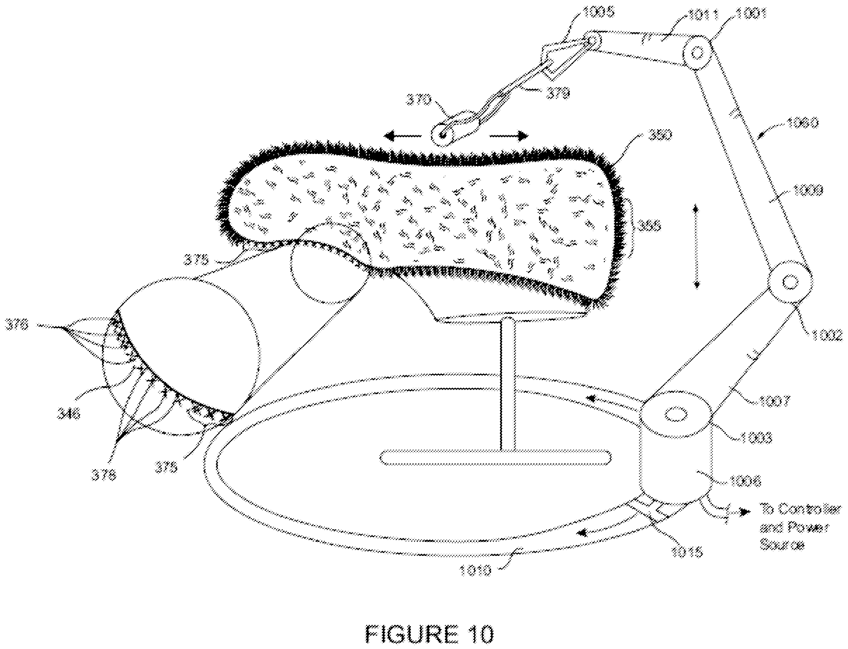

FIG. 10 shows an embodiment of fifth step 230 in which a roller 370 is passed over embedded fiber particles 350 and second embedded fiber particles 355. Roller 370 may be any type of roller known in the art, such as a roller on a robotic arm, as shown in FIG. 10, or a manually-manipulated roller. Roller 370 may have a smooth surface or a textured surface. A textured surface, such as with projections, may assist in the matting and entangling of the fiber particles. The movement of a robotic arm may be guided by a controller such as a processor, a computer, or a handheld mobile device that send movement signals to the roller 370. Roller 370 compresses and entangles embedded fiber particles 350 and second embedded fiber particles 355 together to form a first ply 375 of nonwoven fabric. As shown in the enlarged portion of FIG. 10, individual fiber particles 346 become entangled at connection points 376. The matting process leaves relatively large pores 378 in first ply 375. Large pores 378 may contribute to the breathability of the resultant nonwoven fabric upper 301 (shown in FIG. 16).

Robotic arm 1060 may include multiple members and joints so that the height and/or orientation of roller 370 may be manipulated. While robotic arm 1060 may include any number of members and joint, in some embodiments such as the embodiment shown in FIG. 10, robotic arm 1060 may include a base 1006, a first member 1007, a second member 1009, a third member 1011, and a grip 1005. A first joint 1001 may connect third member 1011 and second member 1009. A second joint 1002 may connect second member 1009 and first member 1007. A third joint 1003 may connect first member 1007 and base 1006. Each member such as base 1006, first member 1007, second member 1009, third member 1011, and grip 1005, may be any type of member known in the art, such as solid rods, hollow tubes, flat bars, and combinations of these types of members. Grip 1005 may be a clamp or similar mechanism. In some embodiments, roller 370 may include a handle 379 configured to be securely and optionally removably or interchangeably held by grip 1005. Each joint such as first joint 1001, second joint 1002, and third joint 1003 may be any type of joint known in the art, such as hinge joints and rotary joints. Each joint may be independently moved by controller. Moving the joints to push the members apart may control the height of robotic arm 1060. Each joint may be configured to allow the attached member to move, pivot, swivel, rotate, or otherwise move with respect to each other.

Robotic arm 1060 and embedded fiber particles 350 on substrate 300 may move relative to one another to ensure that roller 370 may contact all of the embedded fiber particles 350 on the surface of substrate 300. In one embodiment, robotic arm 1060 may move around a stationary substrate 300. For example, in the embodiment shown in FIG. 10, robotic arm 1060 may be mounted onto a track 1010 that encircles, surrounds, or partially surrounds substrate 300. A connector 1015 may be attached to base 1006 and slidably positioned within track 1010. Connector 1015 may be actuated by the controller and the power source using known techniques to translate connector 1015, and, by extension, robotic arm 1060, along track 1010. In this manner, robotic arm 1060 may move to multiple positions around substrate 300. Further, base 360 may be configured to rotate with respect to connector 1015 to allow roller 370 to face substrate 300 regardless of the position of robotic arm 1060 on track 1010. In another embodiment, substrate 300 may move and rotate relative to a stationary robotic arm 1060. In some embodiments, more than one robotic arm 1060 may be positioned at various locations around substrate 300.

An optional sixth step 240 of the method shown in FIG. 4 may be performed. Sixth step 240 involves repeating third step 220 through sixth step 240 to build up additional plies of nonwoven fabric. Sixth step 240 may be repeated as many times as desired until the desired number of layers are formed. In some embodiments, the resultant nonwoven fabric material or article may include one to twenty layers. In some embodiments, resultant nonwoven fabric may include two to ten layers.

The thickness of each ply depends on the type of fiber particles used. In some embodiments, the thickness of each ply may be .5 mm or less. In some embodiments, the thickness of each ply may range from about .1 mm to about .4 mm. In some embodiments, the thickness of each ply may range from about .1 mm to about .15 mm. In some embodiments, the thickness of each ply may be about .138 mm. The overall thickness of the resultant matted fiber fabric is the aggregate of the thickness of the individual plies. In some embodiments, the thickness of the resultant nonwoven fabric may be less than 1 mm. In some embodiments, the thickness of the resultant nonwoven fabric may be between .5 mm and 5 mm. In some embodiments, the thickness of the resultant nonwoven fabric may be between 1 mm and 3 mm. In some embodiments, the thickness of the resultant nonwoven fabric may be greater than 5 mm. In one embodiment, the resultant nonwoven fabric includes 10 plies with an overall thickness of about 1.38 mm.

In some embodiments, when forming the first ply or additional plies of the nonwoven fabric, one or more areas of the substrate or an existing ply of fabric may be masked so that the next ply is not formed or built up in that selected area. Leaving selected areas devoid of additional fiber particles in any given ply or plies may tailor the properties of the resultant fabric ply. For example, in areas devoid of additional fiber particles in a selected region or area of a ply, the thickness of the overall fabric is reduced. In those areas devoid of additional fiber particles, breathability and flexibility may be increased over areas in which the thickness is greater due to the additional material present in completed areas. In those areas which include complete plies and greater thickness, durability, stability, and support may be increased. Creating areas of different thickness in the nonwoven fabric permits a designer to create performance zones to tailor an article for a specific purpose, such as building a thick zone in a heel region to create a stiff heel cup or a building a relatively thin zone proximate a toe box to create a flexible region.

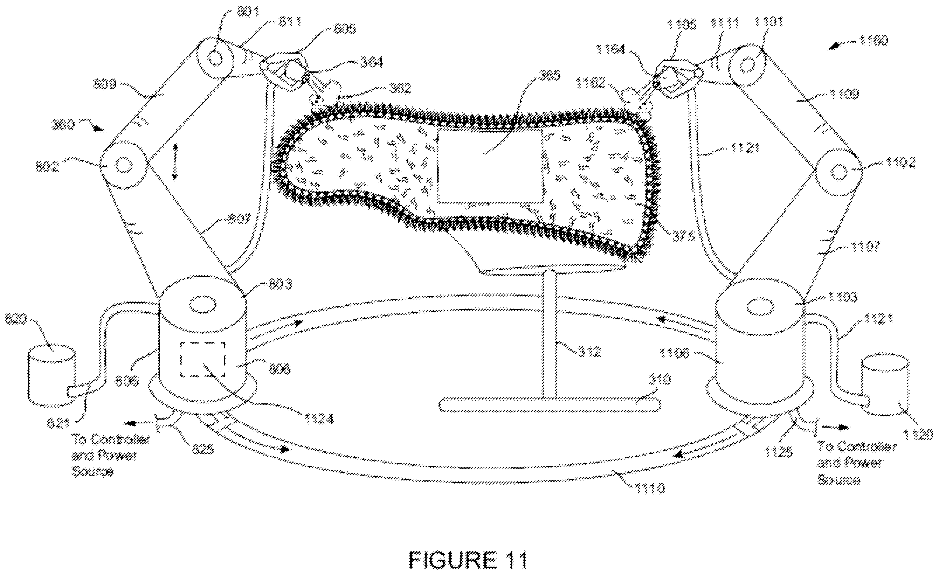

FIGS. 11-13 show an embodiment of forming a second ply of nonwoven fabric on top of first ply 375 of nonwoven fabric 301. Additionally, a mask 385 may be employed to prevent additional fiber particles and binder from accumulating proximate mask 385. Mask 385 may be any type of mask discussed above, such as a film, screen, paper, or cardboard. In the embodiment shown in FIGS. 11-13, mask 385 is positioned centrally along a side of substrate 300. This kind of mask creates a zone with increased flexibility and breathability compared to the rest of nonwoven fabric upper 301. In other embodiments, mask 385 may be positioned in different locations. In some embodiments, more than one mask may be used. In some embodiments, some plies may be masked in first locations while in other plies, the mask may be positioned in different locations. A person of ordinary skill in the art will understand how to use a mask or masks to manipulate the properties of the resultant nonwoven fabric.

As shown in FIG. 11, after mask 385 has been placed on first ply 375 in the selected location, third step 220 of the method shown in FIG. 4 is essentially repeated. In the embodiment shown in FIG. 11, sprayer 360 is configured to apply an adhesive 362 onto first ply 375. Sprayer 360 and substrate 300 may again move relative to one another to ensure that adhesive 362 is applied to the entirety of first ply 375. In one embodiment, sprayer 360 may move around a stationary substrate 300. In another embodiment, substrate 300 may move and rotate relative to a stationary sprayer 360. In some embodiments, more than one sprayer 360 may be positioned at various locations around substrate 300. Mask 385 prevents/inhibits adhesive from being applied underneath mask 385 on first ply 375. As shown, first ply 375 may include pile from unmated or loosely matted fibers.

As in the embodiment shown in FIG. 8, sprayer 360 may be automated as an articulated robot as shown in FIG. 8. In some embodiments, such as the embodiment shown in FIG. 11, a second sprayer 1160 may be provided so that the spraying step may be achieved more quickly. Coverage of first ply 375 may also be enhanced with multiple sprayers. Second sprayer 1160 may be similar or identical to sprayer 1160.

In some embodiments, second sprayer 1160 may include a secondary nozzle 1164 is configured to expel aerosolized secondary adhesive 1162. In some embodiments, second sprayer 1160 may be a robot programmed to operate and manipulate the position of secondary nozzle 1164. The general operation of a robotic arm is well known in the art. Second sprayer 1160 may in some embodiments be an articulated robotic arm connected to a controller, such as a processor with associated memory, and a power source such as a battery or a connection to a power grid via a power cord such as secondary cord 1125. In some embodiments, secondary nozzle 1164 may be associated with a source of adhesive, such as secondary source 1120. In some embodiments, a secondary feeder tube 1121 may establish a fluid connection between secondary source 1120 and secondary nozzle 1164. In some embodiments, secondary feeder tube 1121 may be exposed, such as in the embodiment shown in FIG. 11. In other embodiments, secondary feeder tube 1121 may be integrated into second sprayer 1160 and may be threaded through second sprayer 1160 to connect secondary source 1120 to secondary nozzle 1164.

Second sprayer 1160 may include multiple members and joints so that the height and/or orientation of secondary nozzle 1164 may be manipulated. While second sprayer 1160 may include any number of members and joint, in some embodiments such as the embodiment shown in FIG. 11, second sprayer 1160 may include a secondary base 1106, a secondary first member 1107, a secondary second member 1109, a secondary third member 1111, and a secondary grip 1105. A secondary first joint 1101 may connect secondary third member 1111 and secondary second member 1109. A secondary second joint 1102 may connect secondary second member 1109 and secondary first member 1107. A secondary third joint 1103 may connect secondary first member 1107 and secondary base 1106. Each member such as secondary base 1106, secondary first member 1107, secondary second member 1109, secondary third member 1111, and secondary grip 1105, may be any type of member known in the art, such as solid rods, hollow tubes, flat bars, and combinations of these types of members. Each joint such as secondary first joint 1101, secondary second joint 1102, and secondary third joint 1103 may be any type of joint known in the art, such as hinge joints and rotary joints. Each joint may be independently moved by controller. Moving the joints to push the members apart may control the height of second sprayer 1160. Each joint may be configured to allow the attached member to move, pivot, swivel, rotate, or otherwise move with respect to each other.

Second sprayer 1160 and substrate 300 may move relative to one another to ensure that secondary adhesive 1162 is applied to the entire surface of substrate 300. In one embodiment, second sprayer 1160 may move around a stationary substrate 300. For example, in the embodiment shown in FIG. 11, second sprayer 1160 may be mounted onto a secondary track 1110 that encircles, surrounds, or partially surrounds substrate 300. A secondary connector 1115 may be attached to secondary base 1106 and slidably positioned within secondary track 1110. Secondary connector 1115 may be actuated by the controller and the power source using known techniques to translate secondary connector 1115, and, by extension, second sprayer 1160, along secondary track 1110. In this manner, second sprayer 1160 may move to multiple positions around substrate 300. Further, secondary base 1160 may be configured to rotate with respect to secondary connector 1115 to allow secondary nozzle 1164 to face substrate 300 regardless of the position of second sprayer 1160 on secondary track 1110. In another embodiment, substrate 300 may move and rotate relative to a stationary second sprayer 1160. In some embodiments, more than one second sprayer 1160 may be positioned at various locations around substrate 300.

In some embodiments, a relatively light coating of adhesive may be applied to first ply 375. The enlarged view in FIG. 11 shows second set of adhesive droplets 386 dispersed within first ply 375. Second set of adhesive droplets 386 also remain uncured at this point in the manufacturing process.

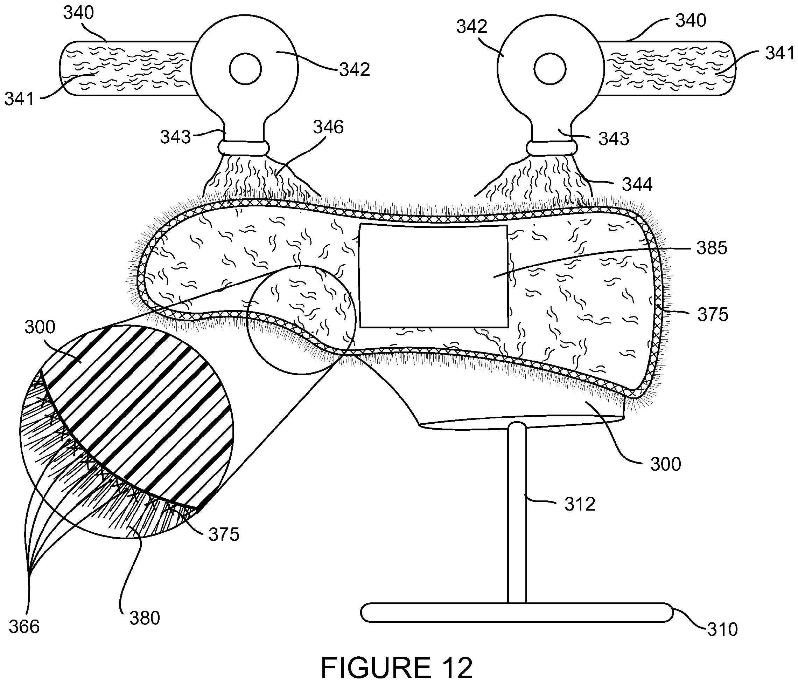

FIG. 12 shows an embodiment of repeating fourth step 225 in which a third layer of particles is deposited onto the last. Third embedded fiber particles 380 are deposited onto last 300 and into first ply 375 by dispenser 342 in the manner described above with respect to second embedded fiber particles 355. Second set of adhesive droplets 386 assist in retaining third embedded fiber particles 380 in position.

FIG. 13 shows an embodiment of repeating fifth step 230 in which roller 370 is passed over first ply 375. As discussed above with respect to FIG. 10, roller 370 may be any type of roller known in the art, such as a roller on a robotic arm or a manually-manipulated roller. A controller such as a processor, a computer, or a handheld mobile device that sends signals to the roller 370 may guide the movement of a robotic arm. Roller 370 compresses and entangles second embedded fiber particles 380 together and to first ply 375 to form a second layer 390 of nonwoven fabric. In other embodiments, repeating fifth step 230 may involve other methods of matting first ply 375, such as vacuum entanglement or manual entanglement.

Third step 220 through fifth step 230 may be repeated in this manner until the desired number of layers and/or thickness of the nonwoven material is achieved. Once the desired number of layers is laid down, a seventh step 245 in the method shown in FIG. 4 may be performed: the adhesive may be cured to finish the nonwoven material. Depending upon the type of adhesive, curing may be achieved by exposing the layers to heat, convection, and/or the flow of ambient temperature air over the layers. As shown in FIG. 13, heated air 397 may be applied to the nonwoven fabric to cure the adhesive. In some embodiments, the adhesive may be cured at temperatures less than 100 degrees C, less than 120 degrees C, and less than 200 degrees C. In some embodiments, the adhesive may be cured at temperatures between 100 degrees C and 150 degrees C, between 110 degrees C and 130 degrees C, or between 115 degrees C and 125 degrees C. Heat 397 may be applied using any method known in the art, such as a convection blow heater such as heater 398 or an oven (not shown). The heat and/or convection air flow may be applied for any duration. The duration may be influenced by such factors as the type of adhesive, the type of fiber particles, and the thickness of the nonwoven fabric. In some embodiments, the duration of cure may be less than a minute or for longer than a minute.

In some embodiments, such as the embodiment shown in FIG. 13, heater 398 may be mounted on a heater articulated robotic arm 1360. Heater articulated robotic arm 1360 may be similar to the articulated robotic arms shown and discussed above with respect to FIGS. 8, 10, and 11. In some embodiments, heater articulated robotic arm 1360 may include multiple members such as base 1306, heater first member 1307, and heater second member 1309. In some embodiments, heater articulated robotic arm 1360 may include multiple joints connecting the members to each other, such as first heater joint 1301, second heater joint 1302, and third heater joint 1303. As noted above, members 1306, 1307, and 1309 may be any type of member known in the art. Similarly, joints 1301, 1302, and 1303 may be any type of joint known in the art. Heater articulated robotic arm 1360 maybe controlled by a processor with a memory programmed to manipulate articulated robotic arm as is known in the art. Heater articulated robotic arm 1360 may be powered by a power source such as a battery or a connection to a power grid by a heater cord 1314.

Robotic arm 1360 and substrate 300 may move relative to one another to ensure that roller 370 may contact the entire surface of substrate 300. In one embodiment, robotic arm 1360 may move around a stationary substrate 300. For example, in the embodiment shown in FIG. 13, robotic arm 1360 may be mounted onto a heater track 1310 that encircles, surrounds, or partially surrounds substrate 300. A heater connector 1315 may be attached to base 1306 and slidably positioned within track 1310. Connector 1315 may be actuated by the controller and the power source using known techniques to translate connector 1315, and, by extension, robotic arm 1360, along track 1310. In this manner, robotic arm 1360 may move to multiple positions around substrate 300. Further, base 1360 may be configured to rotate with respect to connector 1315 to allow nozzle 364 to face substrate 300 regardless of the position of robotic arm 1360 on track 1310. In another embodiment, substrate 300 may move and rotate relative to a stationary robotic arm 1360. In some embodiments, more than one robotic arm 1360 may be positioned at various locations around substrate 300.

Once the adhesive is cured, the nonwoven fabric is completed. At this point, an eighth step 250 in the method shown in FIG. 4 may be performed. Eighth step 250 includes removing the nonwoven fabric from the substrate. Because the layers of the nonwoven fabric were built up and cured directly on the surface of the substrate, the nonwoven fabric will have the same contours as the substrate.

FIG. 14 shows an embodiment of eighth step 250. Nonwoven fabric 301 has conformed to the shape of the last-shaped substrate 300. In this embodiment, nonwoven fabric 301 is a seamless nonwoven upper. Nonwoven fabric upper 301 includes a throat opening 312 that allows nonwoven fabric upper 301 to be pulled off of substrate 300 as shown in FIG. 14. Substance 320 may facilitate the removal of nonwoven fabric upper 301. In addition to making substrate 300 able to receive fiber particles, substance 320 may lubricate the surface of substrate 300 so that nonwoven fabric upper 301 slips more easily off of substrate 300.

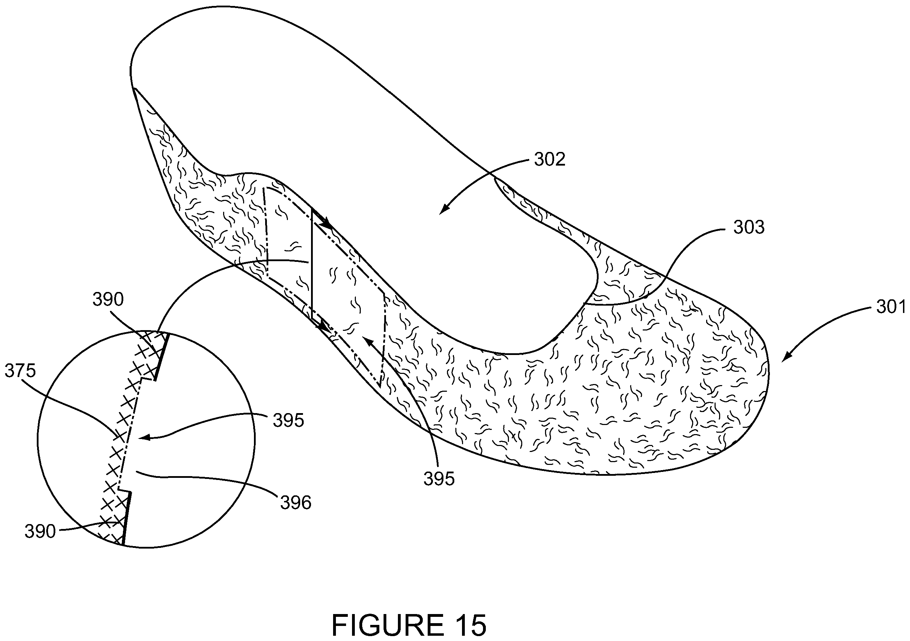

FIG. 15 shows the completed nonwoven fabric upper 301. Nonwoven fabric upper 301 is seamless, having been made by building up layers on last substrate 300 so that nonwoven fabric upper 301 was made in the shape of an upper. No additional cutting or shaping may be required to use nonwoven fabric upper 301 in an article of footwear. A breathable region 395 of nonwoven fabric upper 301 was formed using the masking technique shown above. A void 396 was formed in matted layer 390. Within void 396, the no fiber particles accumulated, so matted layer 390 is discontinuous. The discontinuity is not reflected in adjacent matted layer 375. Therefore, nonwoven fabric upper 301 is continuous through breathable region 395, but the density of the nonwoven fabric is reduced in breathable region 395. This lower density leads to greater breathability, increased flexibility, and reduced stiffness in breathable region 395 compared to the rest of nonwoven fabric upper 301. This type of zonal manipulation of the properties of nonwoven fabric upper 301 can be located in different positions in other embodiments of nonwoven fabric upper 301, in multiple positions in other embodiments of nonwoven fabric upper 301, or eliminated entirely is some embodiments of nonwoven fabric upper 301 for an upper having uniform properties throughout.

In some embodiments, nonwoven fabric upper 301 may be made using only one type of fiber particles to produce a monofiber upper nonwoven fabric a fabric containing only one type of fiber and a binder (the adhesive). For example, nonwoven fabric upper 301 may be a mono-polymer upper, composed of a single type of polymeric fiber particle and an adhesive binder. In other embodiments, multiple types of fiber particle and/or multiple types of binder may be used in any given matted layer or in adjacent matted layers.

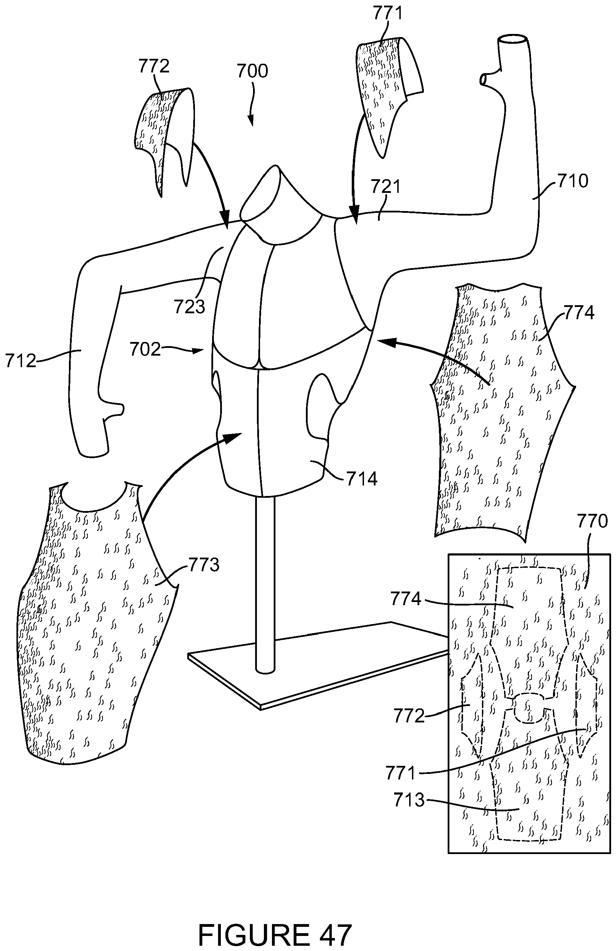

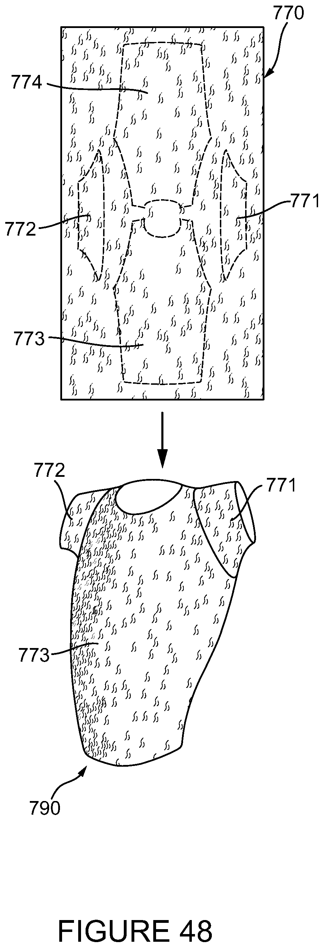

An optional ninth step 260 of the method of FIG. 4 includes additional finishing steps for the nonwoven material. Depending upon the final article for which the nonwoven material is intended, no additional finishing steps may be necessary. In some embodiments, an additional finishing step may be washing or otherwise laundering the nonwoven material to remove any remnants of the substance used to coat the substrate. In other embodiments, such as the article shown in FIGS. 1 and 2, components such as a sole, a tongue, or an eyestay reinforcement may be associated with the nonwoven fabric to complete an article like an article of footwear. In other embodiments, such as when making an article of apparel, the additional finishing steps may include cutting the nonwoven fabric and joining the cut pieces to each other or to other pieces of fabric to make another article, like an article of apparel. An embodiment of these types of finishing steps is discussed below with respect to FIGS. 47 and 48.

FIGS. 16-25 show another embodiment of the method generally set forth in FIG. 4. In this embodiment, a substantially flat substrate is provided to make a substantially flat nonwoven material.

Generally, the method described in FIG. 4 begins by preparing a substrate to receive fiber particles in first step 200. The substrate 400 may be any type of surface capable of supporting fiber particles and binder and may be any type of substrate described above capable of being formed as a flat surface or having a flat surface. FIG. 16 shows an embodiment of a flat substrate 400 used in an embodiment of a method of making a nonwoven upper. In the embodiment shown in FIG. 16, flat substrate 400 is a substantially flat surface like a table configured to make a substantially flat nonwoven fabric.

Flat substrate 400 may be supported on a manufacturing floor or otherwise a manufacturing facility by a second base 410. Second base 410 may be any type of structure capable of supporting and stabilizing flat substrate 400, such as a weighted plate. In some embodiments, a first leg 412 and a second leg 413 may be associated with second base 410 so that flat substrate 400 may be positioned at a predetermined height above second base 410. In some embodiments, first leg 412 and second leg 413 may elevate flat substrate 400 so that flat substrate 400 is positioned at a comfortable working height for a user standing or sitting on the manufacturing floor. In other embodiments, first leg 412 and second leg 413 may position flat substrate 400 so that all sides of flat substrate 400 are accessible to the manufacturing process. In some embodiments, flat substrate 400 may include provisions for associating with first leg 412 and second leg 413. For example, in one embodiment flat substrate 400 may include a recess or hole configured to receive free ends of first leg 412 and second leg 413. The free end of first leg 412 and second leg 413 may be inserted into flat substrate 400 and fitted there by an interference fit or with threading. In other embodiments, first leg 412 and second leg 413 may be an extension of flat substrate 400.

In some embodiments, flat substrate 400 may be a solid, rigid material. Flat substrate 400 may be a table configured for any size of nonwoven fabric in terms of size or shape.

Like substrate 300 discussed above, flat substrate 400 is generally a material to which fiber particles may not adhere without an additional adhesive or other substance to which the fiber particles may adhere. The fiber particles may be any types of fiber particle discussed above. The fiber particles may have any length or denier discussed above. In order to receive the fiber particles and hold the fiber particles in position on the surface of flat substrate 400, flat substrate 400 may be prepared with a substance to which the fiber particles may temporarily adhere. In the embodiment shown in FIG. 16, flat substrate 400 is prepared by spreading a second substance 420 onto the surface of flat substrate 400. Second substance 420 may be any type of substance to which the fiber particles may adhere and may be cleaned off of flat substrate 400. In some embodiments, second substance 420 may be a gelatinous substance such as silicone or petroleum jelly. In other embodiments, second substance 420 may be a release film, such as polyurethane film.

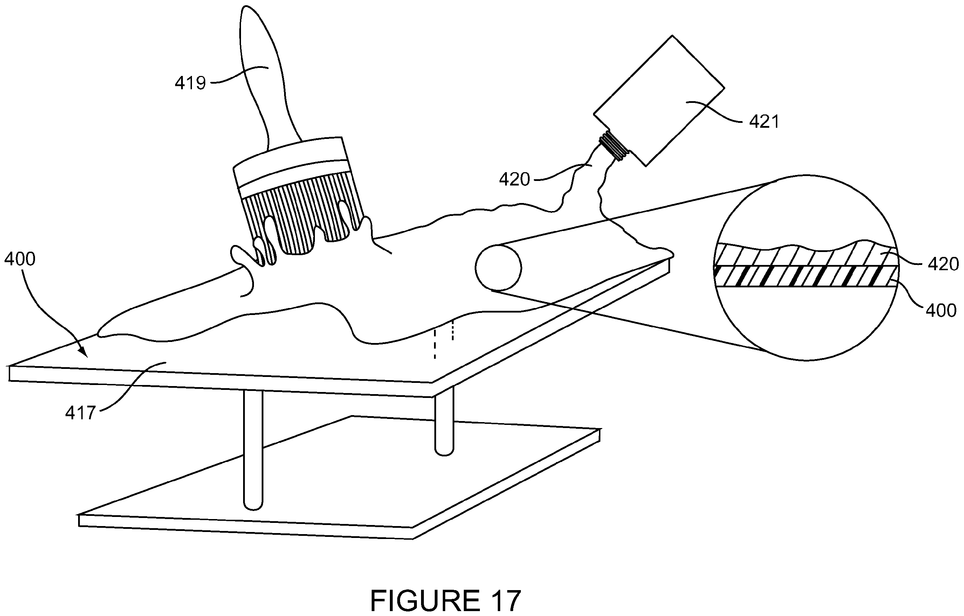

Second substance 420 may be applied onto the surface of flat substrate 400 using any method known in the art. In one embodiment, such as the embodiment shown in FIG. 17, second substance 420 is dispensed from a second container 421 and spreads onto surface 417, with or without additional mechanical manipulation such as with a brush 419. Brush 419 may be automated, such as with a robotic arm like the robotic arm shown above with respect to, for example, FIGS. 10 and 13. In this embodiment, no mask such as mask 309 is provided. In other embodiments, a mask like mask 309 may be provided to establish edges of the resultant nonwoven fabric.

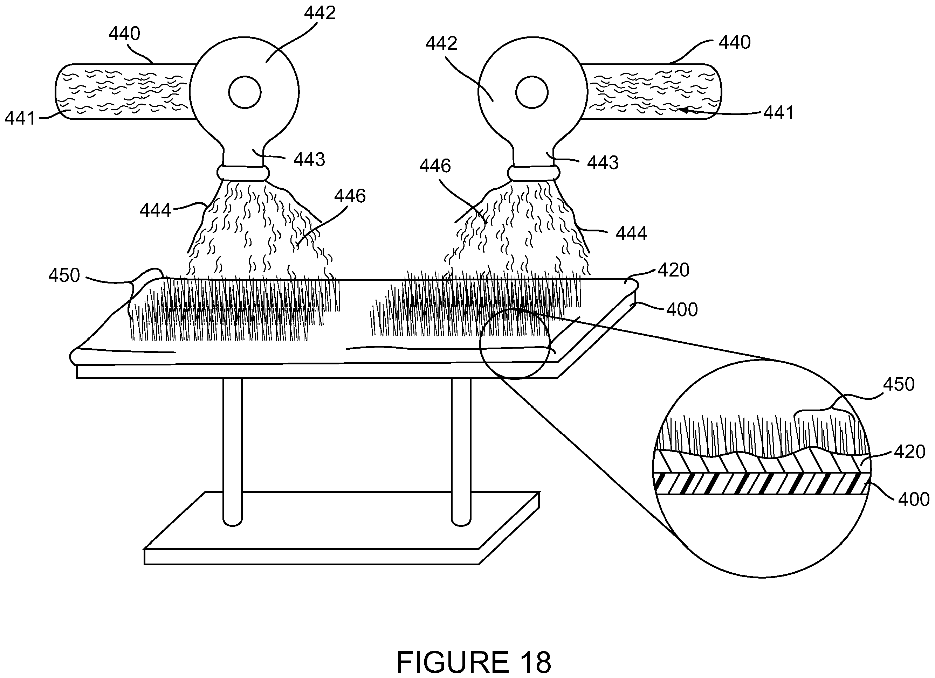

Second step 210 of the method shown in FIG. 4 includes dispensing the fiber particles onto the substrate. FIG. 18 shows an embodiment of second step 210. In the embodiment shown in FIG. 18, flat substrate 400 has been prepared with second substance 420. A second dispenser 442 is associated with a second reservoir 440 containing a plurality of second fiber particle 441, which may be any type of fiber particle as discussed above. Second reservoir 440 may be any container capable of holding a desired quantity of second fiber particle 441 and communicating that fiber particle to second dispenser 442. Second dispenser 442 is configured to dispense second fiber particles 441 onto second substance 420. Second dispenser 442 may be any type of dispenser capable of propelling second fiber particle 441 from second reservoir 440 onto second substance 420.

In the embodiment shown in FIG. 18, second dispenser 442 is a blower or other type of pneumatic device equipped with a second nozzle 443. Second dispenser 442 may be any type of blower known in the art. Second dispenser 442 is configured to draw second fiber particle 441 from reservoir 440 and expel the fiber particles through second nozzle 443 towards second substance 420 and flat substrate 400. Once expelled, the fiber particles become second ambient fiber particles 446. Second ambient fiber particles 446 are carried along streams of second air flow 444 propelled from second dispenser 442. Second ambient fiber particles 446 move towards substance 420 until ambient fiber particles 446 alight upon second substance 420. Once in contact with and adhered to second substance 420, the fiber particles become fourth embedded fiber particles 450. In some embodiments, fourth embedded fiber particles 450 are positioned within second substance 420 so that fourth embedded fiber particles 450 are substantially normal to the surface of flat substrate 400. In other embodiments, fourth embedded fiber particles 450 are embedded at other angles with respect to the surface of flat substrate 400. In some embodiments, fourth embedded fiber particles 450 are positioned at random angles with respect to the surface of substrate 400.

Second dispenser 442 and flat substrate 400 may move relative to one another to ensure that the entire surface of flat substrate 400 is exposed to second ambient fiber particles 446. In one embodiment, second dispenser 442 may move around a stationary flat substrate 400. In another embodiment, flat substrate 400 may move and rotate relative to a stationary second dispenser 442. In some embodiments, more than one second dispenser 442 may be positioned at various locations around flat substrate 400.

Second dispenser 442 is configured to dispense second fiber particle 441 until second ambient fiber particles 446 no longer adhere to second substance 420. In some embodiments, the duration of dispensing may be sensed by one or more sensors positioned proximate flat substrate 400. In some embodiments, the duration of dispensing may be determined by an operator visually inspecting flat substrate 400 and second ambient fiber particles 446. Excess second ambient fiber particles 446 may be removed from the proximity of flat substrate 400 by additional blowing air or a vacuum.

Third step 220 of the method shown in FIG. 4 includes applying an adhesive to the embedded fiber particles, which is achieved in substantially the same manner as the embodiment of third step 220 shown in FIG. 8. The types and application styles for the adhesive are also the same.

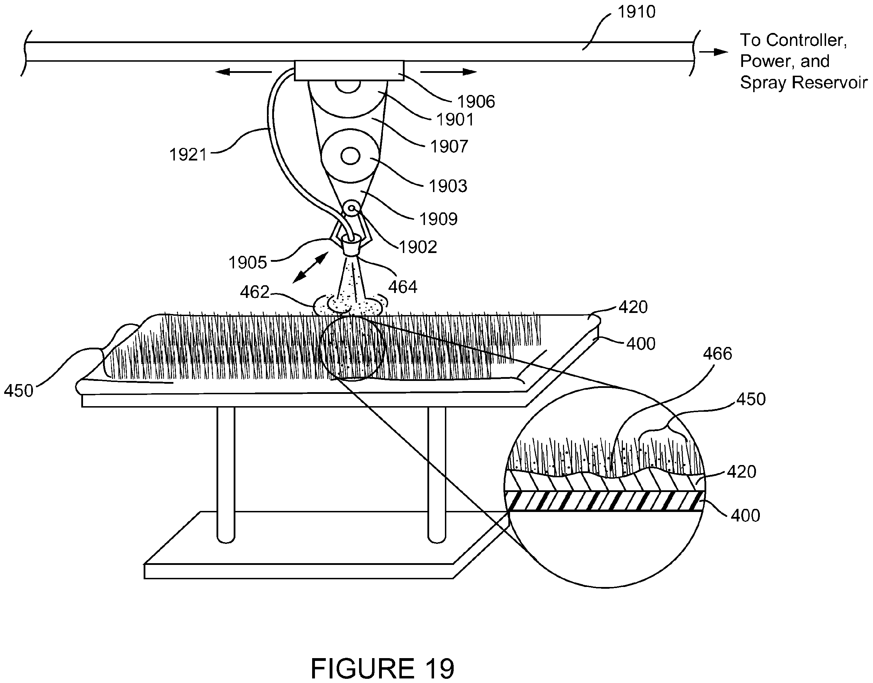

FIG. 19 shows an embodiment of third step 220. In the embodiment shown in FIG. 19, a second nozzle 464 is configured to apply a second adhesive 462 onto fourth embedded fiber particles 450. Second nozzle 464 may be any kind of spray device known in the art capable of aerosolizing and propelling second adhesive 462 towards fourth embedded fiber particles 450. In some embodiments, second nozzle 464 may be a trigger-type intermittent sprayer, such as a manual spray bottle. In some embodiments, second nozzle 464 may be a compressor-driven continuous sprayer, such as a power sprayer. In other embodiments, an articulated robotic arm such as sprayer 360 shown in FIG. 8 may be used. In another embodiment, such as the embodiment shown in FIG. 19, a factory line mechanism may be used to support and control second nozzle 464.

In some embodiments, the factory line mechanism may include a factory track 1910 disposed on a ceiling or otherwise suspended above flat substrate 400. A base 1906 is attached to factory track 1910 so that base 1906 may translate along track 1910 using known techniques such as servo motors and rollers or wheels. A controller such as a processor with associated memory containing a program for manipulating base 1906 and/or nozzle 464 may be linked wirelessly or via wireline to base 1906 or any other part of the factory line mechanism. The factory line mechanism may include any number of members and joints to allow nozzle 464 to move over the entire surface of flat substrate 400. In the embodiment shown in FIG. 19, a first factory joint 1901 may attach base 1906 to a first factory member 1907. A second factory joint 1903 may attach first factory member 1907 to a second factory member 1909. A third factory joint 1902 may attach second factory member to factory grip 1905. Each joint may be any type of joint known in the art, such as hinge joints and rotary joints. Each joint may be independently moved by a controller. Moving the joints to push the members apart may control the height of sprayer 460. Each joint may be configured to allow the attached member to move, pivot, swivel, rotate, or otherwise move with respect to each other.

Second sprayer 460 and flat substrate 400 may move relative to one another to ensure that second adhesive 462 is applied to the entire surface of flat substrate 400. In one embodiment, second sprayer 460 may move around a stationary flat substrate 400. In another embodiment, flat substrate 400 may move and rotate relative to a stationary second sprayer 460. In some embodiments, more than one second sprayer 460 may be positioned at various locations around flat substrate 400.

In some embodiments, a large amount of adhesive may be applied to fourth embedded fiber particles 450, such as when a dip-type adhesive is used. In other embodiments, such as shown in the enlarged view in FIG. 8, a relatively light coating of adhesive is applied to fourth embedded fiber particles 450. The enlarged view in FIG. 19 shows third adhesive droplets 466 dispersed within fourth embedded fiber particles 450. Third adhesive droplets 466 may be adhered to an individual fiber particle 446 or third adhesive droplets 466 may be adhered to multiple fourth embedded fiber particles 450. Third adhesive droplets 466 remain uncured at this point in the manufacturing process.

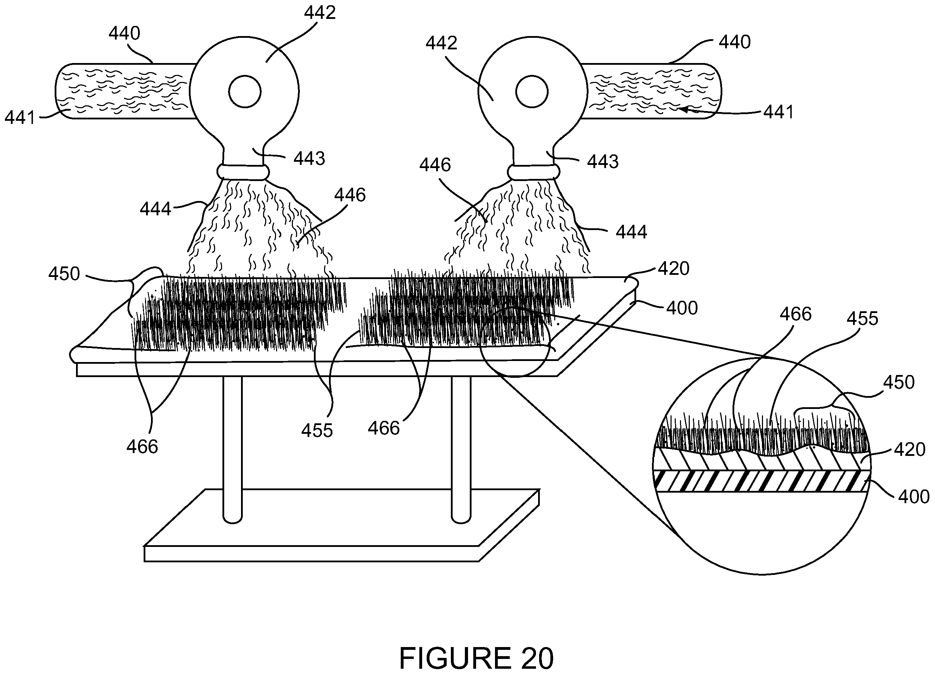

Fourth step 225 of the method shown in FIG. 4 includes depositing another layer of fiber particles onto fourth embedded fiber particles 450 and third adhesive droplets 466. FIG. 20 shows an embodiment of fourth step 225 for a flat substrate 400. Fifth embedded fiber particles 455 are deposited onto substrate 400 and into fourth embedded fiber particles 450 by dispenser 442. Uncured third adhesive droplets 466 assist in holding fifth embedded fiber particles 455 in position.

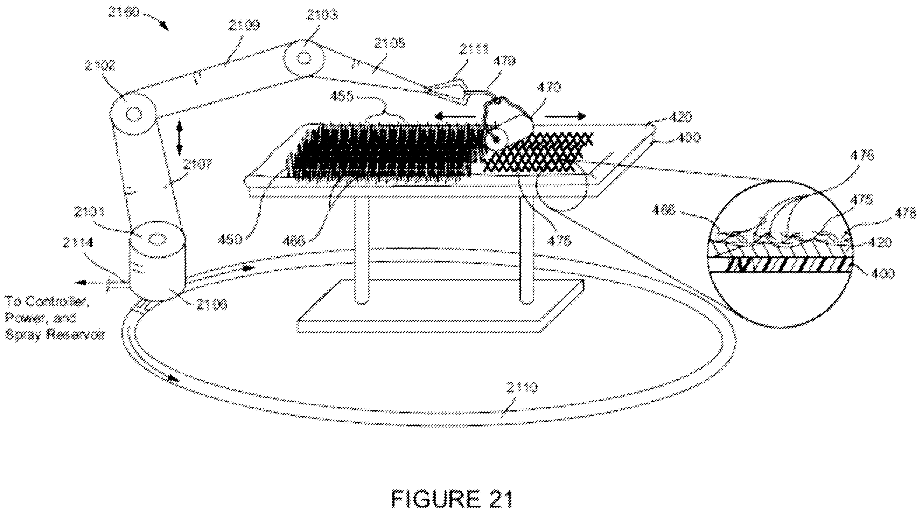

Fifth step 230 of the method shown in FIG. 4 includes matting the fiber particles. In this embodiment, fifth step 230 may be achieved as discussed above. FIG. 21 shows an embodiment of fifth step 230 in which a second roller 470 is passed over fourth embedded fiber particles 450 and fifth embedded fiber particles 455. Second roller 470 may be any type of roller known in the art, such as a roller on a robotic arm or a manually-manipulated roller. The movement of a robotic arm may be guided by a controller such as a processor, a computer, or a handheld mobile device that send movement signals to the second roller 470. Second roller 470 compresses and entangles fourth embedded fiber particles 450 together to form an initial ply 475 of nonwoven fabric. Other features of the matting process are similar to those described above with respect to FIG. 9.

Like roller 370, second roller 470 may be automated. Second roller 470 may be controlled by a roller robotic arm 2160, which may be similar to the robotic arm discussed above with respect to roller 370. The movement of a robotic arm may be guided by a controller such as a processor, a computer, or a handheld mobile device that send movement signals to the roller 470. Robotic arm 2160 may include multiple members and joints so that the height and/or orientation of roller 470 may be manipulated. While robotic arm 2160 may include any number of members and joint, in some embodiments such as the embodiment shown in FIG. 21, robotic arm 2160 may include a base 2106, a first member 2107, a second member 2109, a third member 2111, and a grip 2105. A first joint 2101 may connect third member 2111 and second member 2109. A second joint 2102 may connect second member 2109 and first member 2107. A third joint 2103 may connect first member 2107 and base 2106. Each member such as base 2106, first member 2107, second member 2109, third member 2111, and grip 2105, may be any type of member known in the art, such as solid rods, hollow tubes, flat bars, and combinations of these types of members. Grip 2105 may be a clamp or similar mechanism. In some embodiments, roller 470 may include a handle 479 configured to be securely and, optionally, removably held by grip 2105. Each joint such as first joint 2101, second joint 2102, and third joint 2103 may be any type of joint known in the art, such as hinge joints and rotary joints. Each joint may be independently moved by controller. Moving the joints to push the members apart may control the height of robotic arm 2160. Each joint may be configured to allow the attached member to move, pivot, swivel, rotate, or otherwise move with respect to each other.

Robotic arm 2160 and substrate 400 may move relative to one another to ensure that roller 470 may contact the entire surface of substrate 400. In one embodiment, robotic arm 2160 may move around a stationary substrate 400. For example, in the embodiment shown in FIG. 21, robotic arm 2160 may be mounted onto a track 2110 that encircles, surrounds, or partially surrounds substrate 400. A connector 2115 may be attached to base 2106 and slidably positioned within track 2110. Connector 2115 may be actuated by the controller and the power source using known techniques to translate connector 2115, and, by extension, robotic arm 2160, along track 2110. In this manner, robotic arm 2160 may move to multiple positions around substrate 400. Further, base 2106 may be configured to rotate with respect to track 2110 to allow roller 470 to face substrate 400 regardless of the position of robotic arm 2160 on track 2110. In another embodiment, substrate 400 may move and rotate relative to a stationary robotic arm 2160. In some embodiments, more than one robotic arm 2160 may be positioned at various locations around substrate 400.

As with the embodiments discussed above, an optional sixth step 240 of the method shown in FIG. 4 involves repeating third step 220 through fifth step 230 to build up additional plies of nonwoven fabric. Sixth step 240 may be repeated until the desired number of plies is formed. The number and thicknesses of the layers are the same as those discussed above.

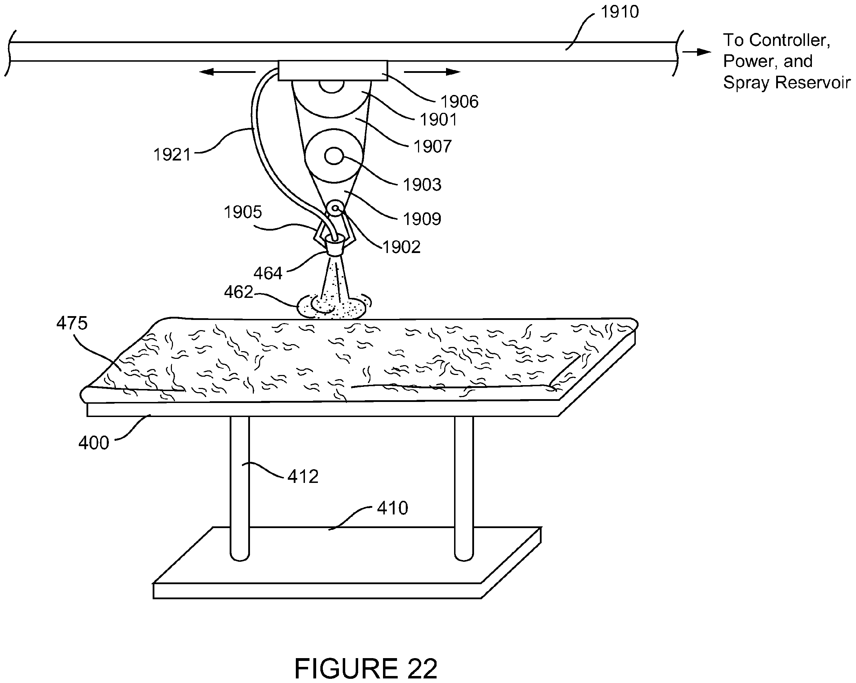

FIGS. 22-24 show an embodiment of forming a second ply of nonwoven fabric on top of initial ply 475 of second nonwoven fabric 401. As shown in FIG. 22, third step 220 of the method shown in FIG. 4 is essentially repeated. In the embodiment shown in FIG. 22, a second sprayer 460 is configured to apply a second adhesive 462 onto initial ply 475. Second sprayer 460 may be any kind of spray device known in the art capable of aerosolizing and propelling second adhesive 462 towards initial ply 475. In some embodiments, second sprayer 460 may be a trigger-type intermittent sprayer, such as a manual spray bottle with a third nozzle 464. In some embodiments, second sprayer 460 may be a compressor-driven continuous sprayer, such as a power sprayer.

Second sprayer 460 and flat substrate 400 may move relative to one another to ensure that second adhesive 462 is applied to the entirety of initial ply 475, which may or may not include a pile from unmated or poorly matted fibers and uncured adhesive. In one embodiment, second sprayer 460 may move around a stationary flat substrate 400. In another embodiment, flat substrate 400 may move and rotate relative to a stationary second sprayer 460. In some embodiments, more than one second sprayer 460 may be positioned at various locations around flat substrate 400.

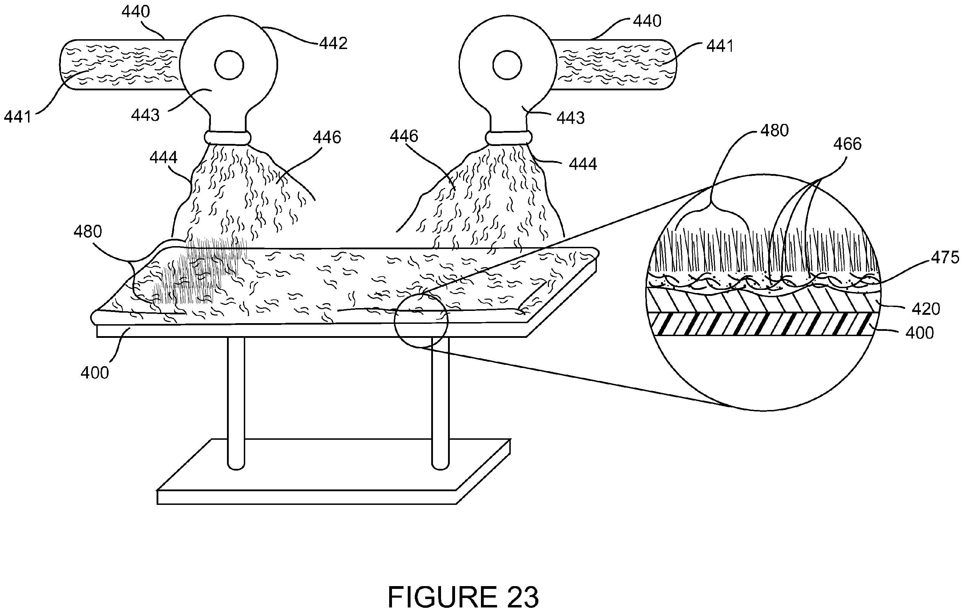

FIG. 23 shows an embodiment of repeating fourth step 225 in which another layer of fiber particles is deposited onto substrate 400, similar to the process discussed above with respect to FIG. 20. Sixth embedded fiber particles 480, once deposited by dispenser 442, may be held in position by the geometry of sixth embedded fiber particles 480 and uncured adhesive droplets 486.

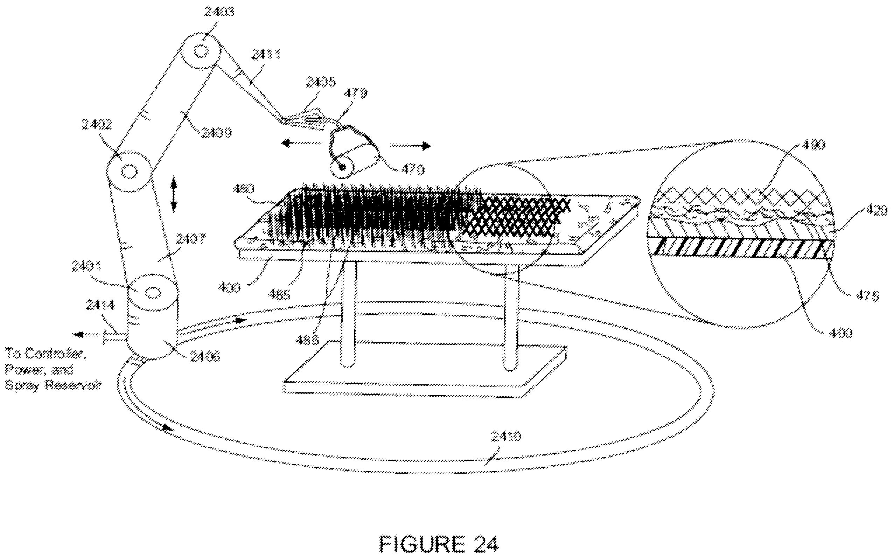

FIG. 24 shows an embodiment of repeating fifth step 230 in which second roller 470 is passed over sixth embedded fiber particles 480 to mat the embedded fiber particles together into a fourth ply 490 and to initial ply 475. As discussed above with respect to FIG. 9, second roller 470 may be any type of roller known in the art, such as a roller on a robotic arm or a manually-manipulated roller. A controller such as a processor, a computer, or a handheld mobile device that sends signals to the second roller 470 may guide the movement of a robotic arm. Second roller 470 compresses and entangles sixth embedded fiber particles 480 together to form a fourth ply 490 of nonwoven fabric. In other embodiments, repeating fifth step 230 may involve other methods of matting sixth embedded fiber particles 480, such as vacuum entanglement or manual entanglement.

The movement of a robotic arm may be guided by a controller such as a processor, a computer, or a handheld mobile device that send movement signals to the roller 470. The robotic arm may include multiple members and joints so that the height and/or orientation of roller 470 may be manipulated. While the robotic arm may include any number of members and joint, in some embodiments such as the embodiment shown in FIG. 24, the robotic arm may include a base 2406, a first member 2407, a second member 2409, a third member 2411, and a grip 2405. A first joint 2401 may connect third member 2411 and second member 2409. A second joint 2402 may connect second member 2409 and first member 2407. A third joint 2403 may connect first member 2407 and base 2406. Each member such as base 2406, first member 2407, second member 2409, third member 2411, and grip 2405, may be any type of member known in the art, such as solid rods, hollow tubes, flat bars, and combinations of these types of members. Grip 2405 may be a clamp or similar mechanism. In some embodiments, roller 470 may include a handle 479 configured to be securely and optionally removably held by grip 2405. Each joint such as first joint 2401, second joint 2402, and third joint 2403 may be any type of joint known in the art, such as hinge joints and rotary joints. Each joint may be independently moved by controller. Moving the joints to push the members apart may control the height of the robotic arm. Each joint may be configured to allow the attached member to move, pivot, swivel, rotate, or otherwise move with respect to each other.

The robotic arm and substrate 400 may move relative to one another to ensure that roller 470 may contact the entire surface of substrate 400. In one embodiment, the robotic arm may move around a stationary substrate 400. For example, in the embodiment shown in FIG. 24, the robotic arm may be mounted onto a track 2424 that encircles, surrounds, or partially surrounds substrate 400. A connector may be attached to base 2406 and slidably positioned within track 2424. The connector may be actuated by the controller and the power source using known techniques to translate the connector, and, by extension, the robotic arm, along track 2424. In this manner, the robotic arm may move to multiple positions around substrate 400. Further, base 2406 may be configured to rotate with respect to track 2410 to allow roller 470 to face substrate 400 regardless of the position of the robotic arm on track 2424. In another embodiment, substrate 400 may move and rotate relative to a stationary the robotic arm. In some embodiments, more than one the robotic arm may be positioned at various locations around substrate 400.

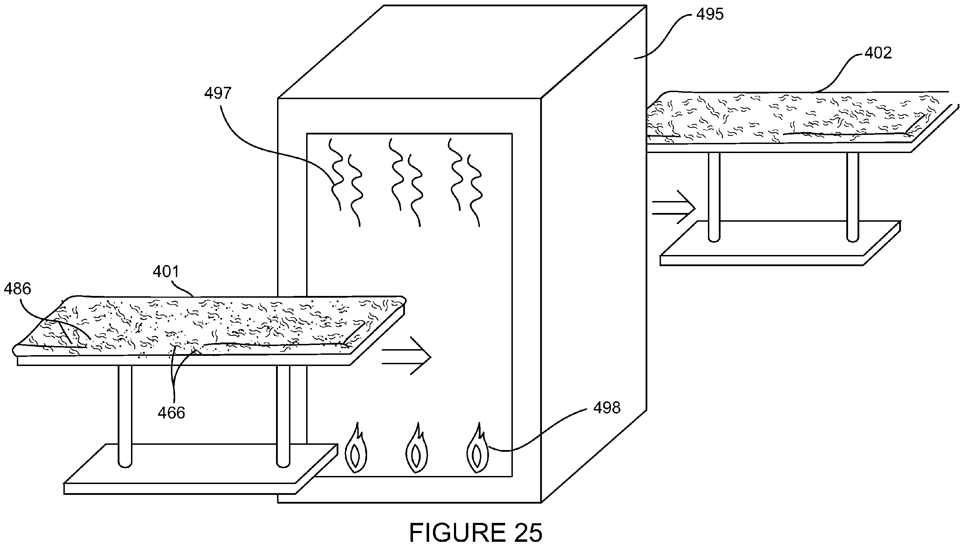

Third step 220 through fifth step 230 may be repeated in this manner until the desired number of plies or material thickness is achieved. Once the desired number of plies is laid down, a seventh step 245 in the method shown in FIG. 4 may be performed: the adhesive may be cured. Depending upon the type of adhesive, curing may be achieved by exposing the layers to heat, convection, and/or the flow of ambient temperature air over the layers. FIG. 25 shows an embodiment of curing utilizing an oven 495. Oven 495 may be any type of oven known in the art, such as a convection oven or an industrial oven configured to receive a conveyor belt. As shown, oven 495 is a convection oven configured so that uncured fabric 401 may be passed into oven 495 where uncured fabric 401 is exposed to heat 498 and air flow 497 at a temperature and for a duration sufficient to cure adhesive particles 486. In one embodiment, where the adhesive is LocTite spray adhesive, the adhesive is cured with heat applied at about 120 degrees Celsius for about one minute. Cured fabric 402 then exits oven 495.

Once the adhesive is cured, the nonwoven fabric is completed. At this point, an eighth step 250 in the method shown in FIG. 4 may be performed. Eighth step 250 includes removing the nonwoven fabric from the substrate. Because the layers of the nonwoven fabric were built up and cured directly on the surface of the substrate, the nonwoven fabric will have the same contours as the substrate.

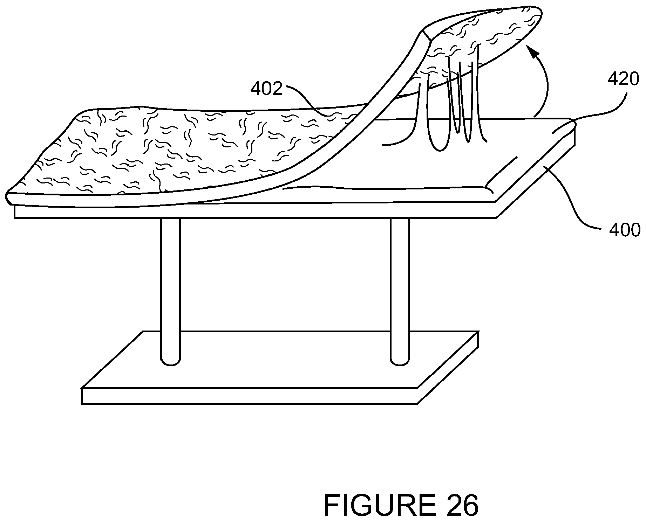

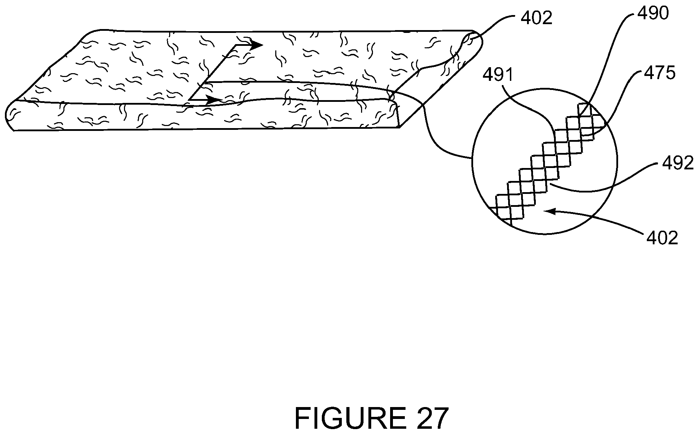

FIG. 26 shows an embodiment of eighth step 250. Second nonwoven fabric 402 has conformed to the shape of the substantially flat substrate 400. In this embodiment, second nonwoven fabric 402 is a two-ply seamless nonwoven sheet of fabric as shown in FIG. 27. Second nonwoven fabric 402 may be pulled off of substantially flat substrate 400 as shown in FIG. 26. Second substance 420 may facilitate the removal of second nonwoven fabric 402. In addition to making substantially flat substrate 400 able to receive fiber particles, second substance 420 may lubricate the surface of substantially flat substrate 402 so that second nonwoven fabric 402 slips more easily off of substantially flat substrate 400.

An optional ninth step 260 of the method of FIG. 4 includes additional finishing steps for the nonwoven material. Depending upon the final article for which the nonwoven material is intended, no additional finishing steps may be necessary. In some embodiments, an additional finishing step may be washing or otherwise laundering the nonwoven material to remove any remnants of the substance used to coat the substrate. In other embodiments, additional components may be associated with the nonwoven fabric to complete an article like an article of footwear or an article of apparel. In other embodiments, such as when making an article of apparel, the additional finishing steps may include cutting the nonwoven fabric and joining the cut pieces to each other or to other pieces of fabric to make another article, like an article of apparel. An embodiment of these types of finishing steps is discussed below with respect to FIGS. 47 and 48.

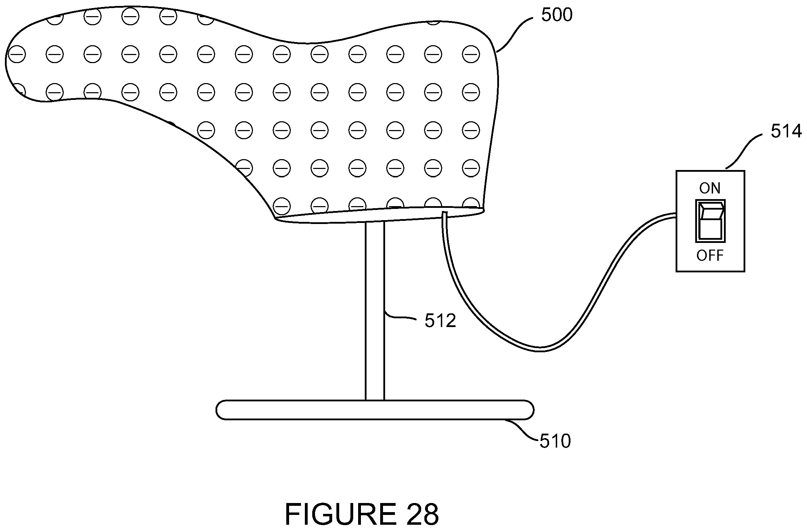

FIGS. 28-37 show another embodiment of the method generally set forth in FIG. 4. In this embodiment, a shaped substrate a last is provided to make a seamless nonwoven upper.

FIG. 28 shows an embodiment of a shaped substrate 500 used in an embodiment of a method of making a nonwoven upper. In the embodiment shown in FIG. 28, shaped substrate 500 is a last configured to make a nonwoven fabric having the shape of an upper, similar to last 300 described above. Shaped substrate 500 may be supported on a manufacturing floor or otherwise a manufacturing facility by a third base 510. Third base 510 may be any type of structure capable of supporting and stabilizing shaped substrate 500, such as a weighted plate. In some embodiments, a pole 512 may be associated with third base 510 so that shaped substrate 500 may be positioned at a predetermined height above third base 510. In some embodiments, pole 512 may elevate shaped substrate 500 so that shaped substrate 500 is positioned at a comfortable working height for a user standing or sitting on the manufacturing floor. In other embodiments, pole 512 may position shaped substrate 500 so that all sides of shaped substrate 500 are accessible to the manufacturing process. In some embodiments, shaped substrate 500 may include provisions for associating with pole 512. For example, in one embodiment shaped substrate 500 may include a recess or hole configured to receive a free end of pole 512. The free end of pole 512 may be inserted into shaped substrate 500 and fitted there by an interference fit or with threading. In other embodiments, pole 512 may be an extension of shaped substrate 500.

In some embodiments, shaped substrate 500 may be a solid, rigid material. Shaped substrate 500 may be last for making an article of footwear, similar to substrate 300 described above.

Like substrate 300 discussed above, shaped substrate 500 is generally a material to which fiber particles may not adhere without an additional adhesive or other substance to which the fiber particles may adhere. The fiber particles may be any types of fiber particle discussed above. The fiber particles may have any length or denier discussed above. In order to receive the fiber particles and hold the fiber particles in position on the surface of shaped substrate 500, shaped substrate 500 may be prepared with a substance to which the fiber particles may temporarily adhere. In the embodiment shown in FIG. 28, shaped substrate 500 is prepared by applying an electromagnetic charge or field to shaped substrate 500. The electromagnetic charge may be provided using any method of charging an object known in the art. In some embodiments, the charge may be produced by turning on a switch 514 that controls the flow of power from a power source to shaped substrate 500. The power source may be any type of power source known in the art, such as a wall outlet connected to the local power grid, a battery, or a generator. In some embodiments, shaped substrate 500 may include circuitry that produces a charge when switch 514 is in the ON position. In other embodiments, current from the power source may simply flow through shaped substrate 500 so that the electromagnetic field of the current produces the charge. In other embodiments, shaped substrate 500 may include a magnet that spins when switch 514 is in the ON position to generate the magnetic field. In some embodiments, shaped substrate 500 may be positioned within a chamber that imparts a charge to the surface of shaped substrate 500.

In other electrostatic embodiments, substrate 500 may have a positive charge or remain neutral or uncharged. In those embodiments, the fiber particles will have an opposite charge to the substrate or be charged when the substrate is uncharged. The substrate attracts and holds onto the fiber particles due to electrostatic attraction.

Once shaped substrate 500 has been charged, the method of making the nonwoven fabric occurs in a substantially similar manner to the embodiments described above.

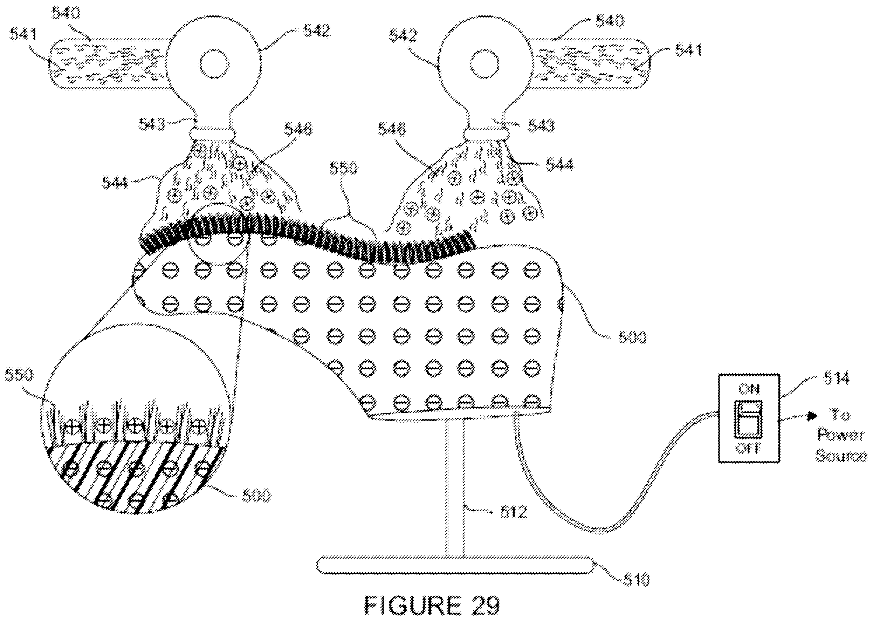

Second step 210 of the method shown in FIG. 4 includes dispensing the fiber particles onto the substrate. FIG. 29 shows an embodiment of second step 210. In the embodiment shown in FIG. 29, shaped substrate 500 has been prepared with a negative charge. A third dispenser 542 is associated with a third reservoir 540 containing a plurality of third fiber particles 541, which may be any type of fiber particle as discussed above. Third reservoir 540 may be any container capable of holding a desired quantity of third fiber particle 541 and communicating that fiber particle to third dispenser 542. Third dispenser 542 is configured to dispense second fiber particles 441 onto shaped substrate 500. Third dispenser 542 may be any type of dispenser capable of propelling third fiber particle 541 from third reservoir 540 onto shaped substrate 500.

In the embodiment shown in FIG. 29, third dispenser 542 is a blower or other type of pneumatic device equipped with a third nozzle 543. Third dispenser 542 may be automated, such as by using a robot arm such as the robotic arms described above. Third dispenser 542 may be any type of blower known in the art. Third dispenser 542 is configured to draw a plurality of third fiber particles 541 from third reservoir 540 and expel the plurality of fiber particles through third nozzle 543 towards shaped substrate 500. Once expelled, the fiber particles become third ambient fiber particles 546. Third ambient fiber particles 546 are carried along streams of third airflow 544 propelled from third dispenser 542. Third ambient fiber particles 546 have a positive charge in this embodiment.

Third ambient fiber particles 546 move towards shaped substrate 500 until third ambient fiber particles 546 stick to shaped substrate 500. Once stuck onto the charged surface of shaped substrate 500, the fiber particles become attached fiber particles 550. In some embodiments, attached fiber particles 550 are positioned on shaped substrate 500 so that attached fiber particles 550 are substantially normal to the surface of shaped substrate 500. In other embodiments, attached fiber particles 550 are positioned at other angles with respect to the surface of shaped substrate 500. In some embodiments, attached fiber particles 550 are positioned at random angles with respect to the surface of shaped substrate 500.

Third dispenser 542 and shaped substrate 500 may move relative to one another to ensure that the entire surface of shaped substrate 500 is exposed to third ambient fiber particles 546. In one embodiment, third dispenser 542 may move around a stationary shaped substrate 500. In another embodiment, shaped substrate 500 may move and rotate relative to a stationary third dispenser 542. In some embodiments, more than one third dispenser 542 may be positioned at various locations around shaped substrate 500.

Third dispenser 542 is configured to dispense third fiber particle 541 until third ambient fiber particles 546 no longer adhere to substrate 500. In some embodiments, the duration of dispensing may be sensed by one or more sensors positioned proximate shaped substrate 500. In some embodiments, the duration of dispensing may be determined by an operator visually inspecting shaped substrate 500 and third ambient fiber particles 546. Excess third ambient fiber particles 546 may be removed from the proximity of shaped substrate 500 by additional blowing air or a vacuum.

Third step 220 of the method shown in FIG. 4 includes applying an adhesive to the embedded fiber particles, which is achieved in substantially the same manner as the embodiment of third step 220 shown in FIG. 8. The types and application styles for the adhesive are also the same.

FIG. 30 shows an embodiment of third step 220. In the embodiment shown in FIG. 30, a third sprayer 3060 is configured to apply a third adhesive 562 onto attached fiber particles 550. Third sprayer 3060 may be any kind of spray device known in the art capable of aerosolizing and propelling third adhesive 562 towards attached fiber particles 550. In some embodiments, third sprayer 3060 may be a trigger-type intermittent sprayer, such as a manual spray bottle. In some embodiments, third sprayer 3060 may be a compressor-driven continuous sprayer, such as a power sprayer.

In some embodiments, such as the embodiment shown in FIG. 30, third sprayer 3060 may be a factory line mechanism. In some embodiments, the factory line mechanism may include a factory track 3010 disposed on a ceiling or otherwise suspended above charged substrate 500. A base 3006 may be attached to factory track 3010 so that base 3006 may translate along track 3010 using known techniques such as servo motors and rollers or wheels. A controller such as a processor with associated memory containing a program for manipulating base 3006 and/or nozzle 564 may be linked wirelessly or via wireline to base 3006 or any other part of the factory line mechanism. A spray reservoir may be in fluid communication with nozzle 564 through track 3010, such as with a tube embedded within track 3010 or a channel formed in track 3010. In other embodiments, a feeder line may be provided to link nozzle 564 to a spray reservoir.

Third sprayer 3060 may include any number of members and joints to allow nozzle 564 to move over the entire surface of substrate 500. In the embodiment shown in FIG. 30, a first factory joint 3001 may attach base 3006 directly to an articulated grip 3005 that holds nozzle 564, and, in some embodiments, feeds the spray to nozzle 564. Articulated grip 3005 may include a number of members and joints. A first grip joint 3002 may attach first grip member 3007 to a second grip member 3009. A second factory joint 3003 may attach third grip member 3011 to fourth grip member 3013. Each joint may be any type of joint known in the art, such as hinge joints and rotary joints. Each joint may be independently moved by a controller. Each joint may be configured to allow the attached member to move, pivot, swivel, rotate, or otherwise move with respect to each other. By translating along track 3010 and by moving the joints, the entire surface of substrate 500 may be exposed to spray 562.

Third sprayer 560 and shaped substrate 500 may move relative to one another to ensure that third adhesive 562 is applied to the entire surface of shaped substrate 500. In one embodiment, third sprayer 560 may move around a stationary shaped substrate 500. In another embodiment, shaped substrate 500 may move and rotate relative to a stationary third sprayer 560. In some embodiments, more than one third sprayer 560 may be positioned at various locations around shaped substrate 500.

In some embodiments, a large amount of adhesive may be applied to attached fiber particles 550, such as when a dip-type adhesive is used. In other embodiments, such as shown in the enlarged view in FIG. 30, a relatively light coating of adhesive is applied to attached fiber particles 550. The enlarged view in FIG. 30 shows fifth adhesive droplets 566 dispersed within attached fiber particles 550. Fifth adhesive droplets 566 may be adhered to an individual fiber particle 546 or fifth adhesive droplets 566 may be adhered to multiple attached fiber particles 550. Fifth adhesive droplets 566 remain uncured at this point in the manufacturing process.

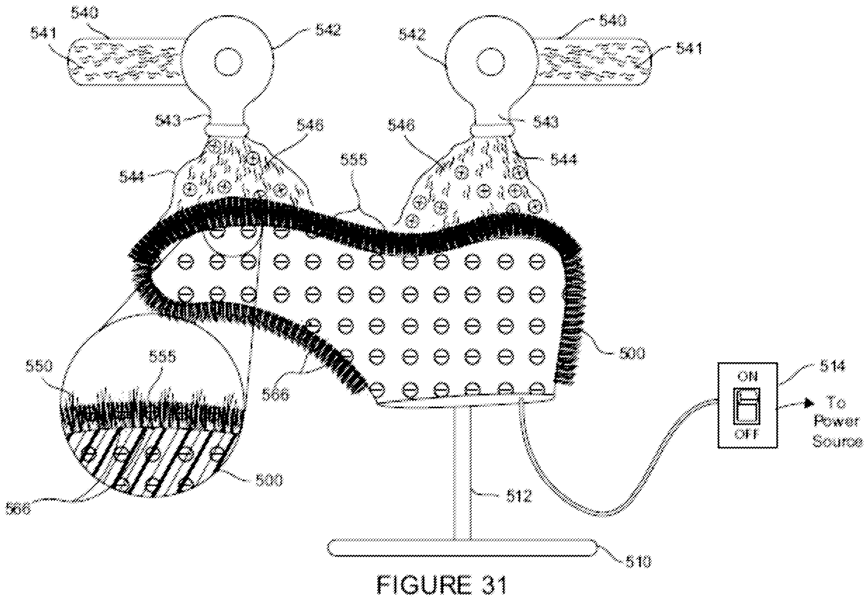

Fourth step 225 of the method shown in FIG. 4 includes applying a second layer of fiber particles onto attached fiber particles 550 and fifth adhesive droplets 566. FIG. 31 shows an embodiment of a layer of second attached fiber particles 555 being deposited onto last 500, attached fiber particles 550, and fifth adhesive droplets 566. The electrostatic charge, the geometry of attached fiber particles 550, and fifth adhesive droplets 566 hold second attached fiber particles 555 in position on last 500.

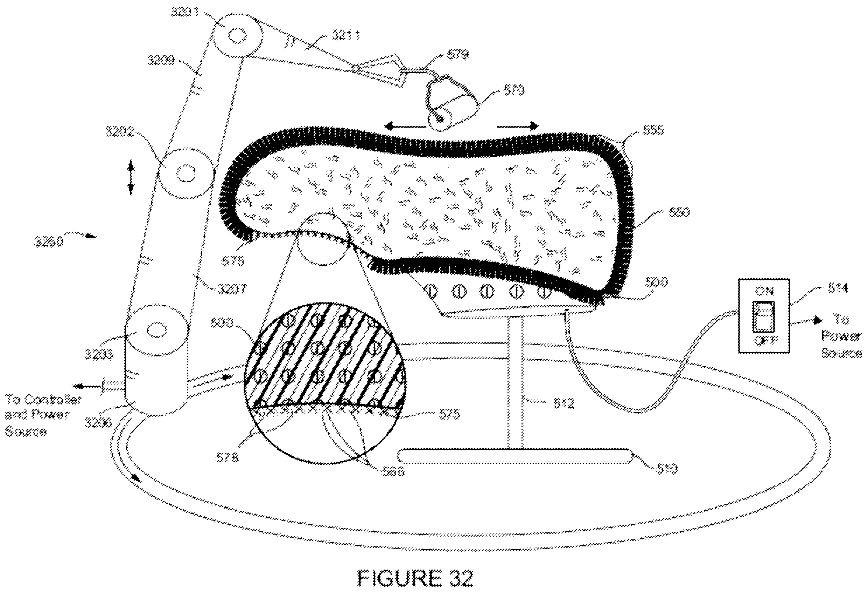

Fifth step 230 of the method shown in FIG. 4 includes matting the fiber particles. In this embodiment, fifth step 230 may be achieved as discussed above. FIG. 32 shows an embodiment of fifth step 230 in which a third roller 570 is passed over attached fiber particles 550 and second attached fiber particles 555. Third roller 570 may be any type of roller known in the art, such as a roller on a robotic arm or a manually-manipulated roller. The movement of a robotic arm may be guided by a controller such as a processor, a computer, or a handheld mobile device that send movement signals to the third roller 570. Third roller 570 compresses and entangles attached fiber particles 550 and second attached fiber particles 555 together to form a base ply 575 of nonwoven fabric.

Third roller 570 may be automated, such as by employing a robotic arm like articulated robotic arm 3260. The movement of articulated robotic arm 3260 may be guided by a controller such as a processor, a computer, or a handheld mobile device that send movement signals to the roller 570. Articulated robotic arm 3260 may include multiple members and joints so that the height and/or orientation of roller 570 may be manipulated. While articulated robotic arm 3260 may include any number of members and joint, in some embodiments such as the embodiment shown in FIG. 32, articulated robotic arm 3260 may include a base 3206, a first member 3207, a second member 3209, a third member 3211, and a grip 3205. A first joint 3201 may connect third member 3211 and second member 3209. A second joint 3202 may connect second member 3209 and first member 3207. A third joint 3203 may connect first member 3207 and base 3206. Each member such as base 3206, first member 3207, second member 3209, third member 3211, and grip 3205, may be any type of member known in the art, such as solid rods, hollow tubes, flat bars, and combinations of these types of members. Grip 3205 may be a clamp or similar mechanism. In some embodiments, third roller 570 may include a handle 579 configured to be securely and optionally removably or interchangeably supported by grip 3205. Each joint such as first joint 3201, second joint 3202, and third joint 3203 may be any type of joint known in the art, such as hinge joints and rotary joints. Each joint may be independently moved by controller. Moving the joints to push the members apart may control the height of the robotic arm. Each joint may be configured to allow the attached member to move, pivot, swivel, rotate, or otherwise move with respect to each other so that roller 570 may have access to the entirety of substrate 500 an any particles on substrate 500.

The robotic arm and substrate 500 may move relative to one another to ensure that roller 570 may contact the entire surface of substrate 500. In one embodiment, the robotic arm may move around a stationary substrate 500. For example, in the embodiment shown in FIG. 32, the robotic arm may be mounted onto a track that encircles, surrounds, or partially surrounds substrate 500. A connector may be attached to base 3206 and slidably positioned within the track. The connector may be actuated by the controller and the power source using known techniques to translate the connector, and, by extension, the robotic arm, along the track. In this manner, the robotic arm may move to multiple positions around substrate 500. Further, base 3206 may be configured to rotate with respect to track 3210 to allow roller 570 to face substrate 500 regardless of the position of the robotic arm on the track. In another embodiment, substrate 500 may move and rotate relative to a stationary the robotic arm. In some embodiments, more than one the robotic arm may be positioned at various locations around substrate 500.

As with the embodiments discussed above, an optional sixth step 240 of the method shown in FIG. 4 involves repeating third step 220 through fifth step 240 to build up additional plies of nonwoven fabric. Sixth step 240 may be repeated as many times as desired until the desired number of plies is formed. The number and thicknesses of the layers are the same as those discussed above.

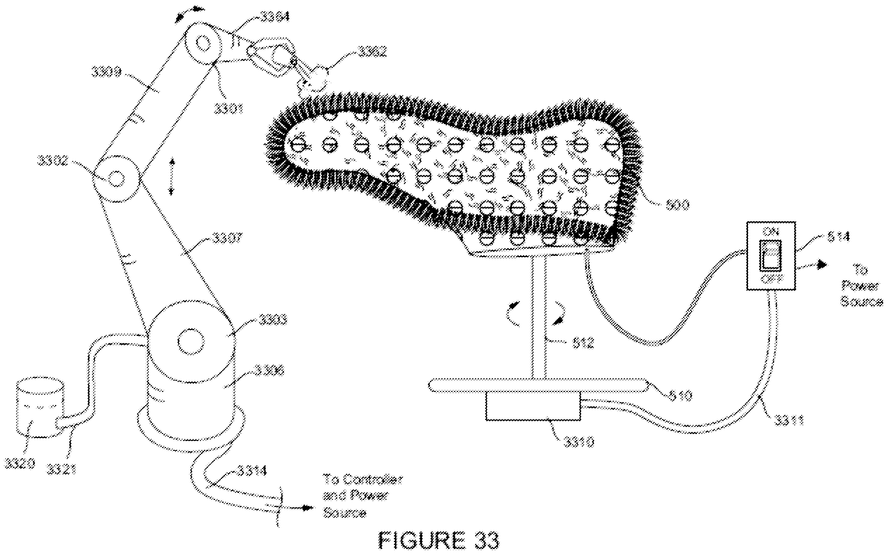

FIGS. 33-35 show an embodiment of forming a second ply of nonwoven fabric on top of base ply 575 of third nonwoven fabric 501. As shown in FIG. 33, third step 220 of the method shown in FIG. 4 is essentially repeated, using any of the adhesive application techniques shown and/or discussed above. FIG. 33 shows sprayer 3364, which may be any type of sprayer discussed above. Sprayer 3364 applies sixth adhesive droplets 586 to base ply 575. In FIG. 33, sprayer 3364 is incorporated into a robotic arm similar to the robotic arms discussed above. Multiple members such as base 3306, first member 3307, and second member 3309 are connected together by joints such as first joint 3301, second joint 3302, and third joint 3303. A feeder line 3321 connected to a spray reservoir 3320 may feed sprayer 3364 so that spray 3362 may be propelled towards substrate 500. The operation of sprayer 3364 may be the same or similar to any automated sprayer discussed above, such as by changing height or position and controlling the amount and duration of spray.

Sprayer 3364 and substrate 500 may move with respect to each other so that the entirety of substrate 500 may exposed to spray 3362. In some embodiments, such as those discussed above, sprayer 3364 may move around substrate 500. However, in the embodiment shown in FIG. 33, substrate 500 may be configured to spin. For example, a motor and gearbox 3310 may be attached to platform 510 and powered by a battery or a powerline 3311 controlled by switch 514. When switch 514 is in the ON position, gearbox 3310 may cause substrate 500 to spin using known techniques. Between the rotating of substrate 500 and the ability of sprayer 3364 to change height and other spatial positions, sprayer 3364 may be able to expose the entirety of rotating substrate 500 to spray 3362.

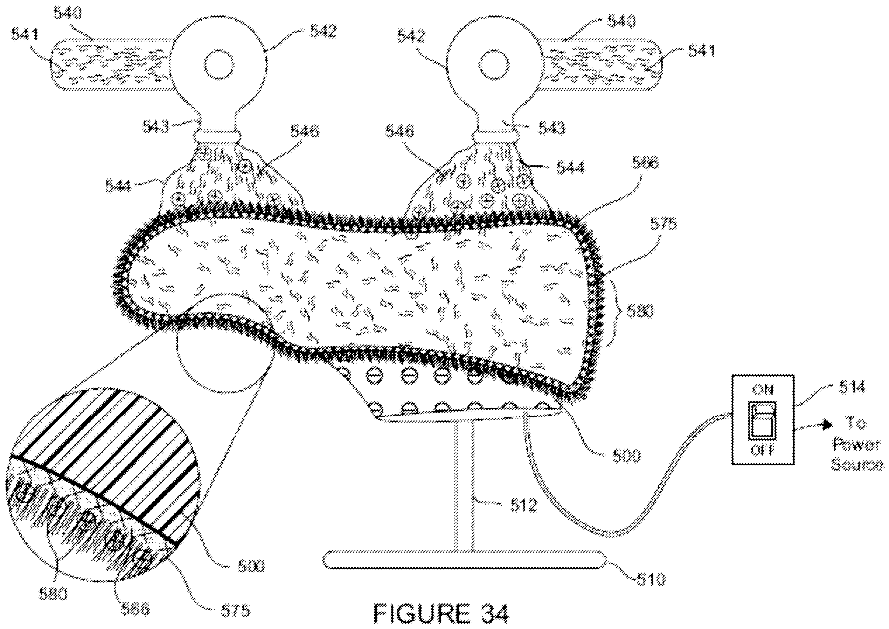

Fourth step 225 of the method shown in FIG. 4 is also repeated, using any technique for fourth step 225 discussed above. FIG. 34 shows an embodiment of fourth step 225. Dispensers 542 deposit charged fiber particles 546 onto last 500, base ply 575, and sixth adhesive droplets 586 until third attached fiber particles 580 attach to base ply 575. Sixth adhesive droplets 586 assist in maintaining third attached fiber particles 580 in position. As noted above, charged fiber particles 546 are dispensed until no additional fiber particles adhere to last 500 and/or a visual inspection of last 500 shows the desired level of coverage.

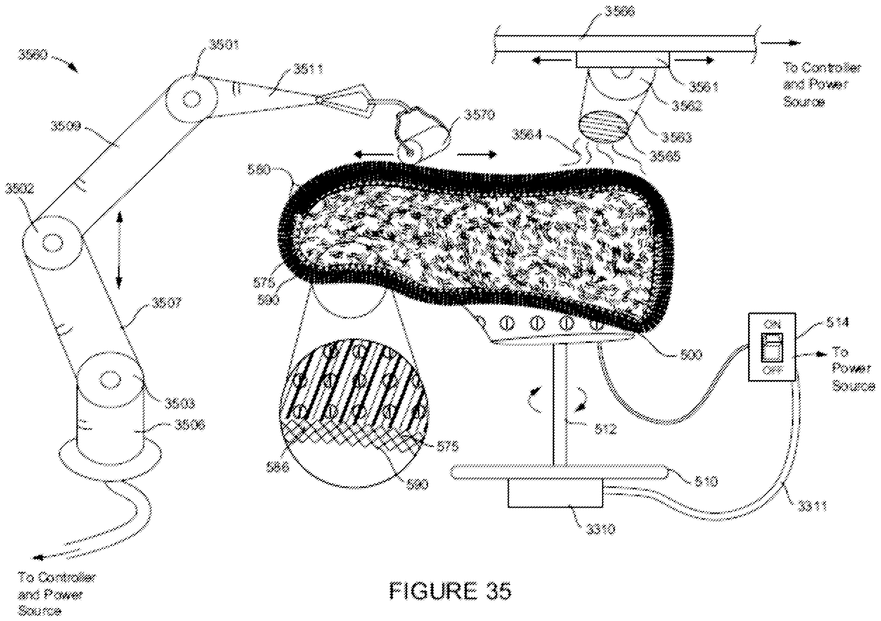

FIG. 35 shows an embodiment of repeating fifth step 230 in which third roller 570 is passed over third attached fiber particles 580 to mat and interconnect third attached fiber particles 580. As discussed above with respect to FIG. 10, third roller 570 may be any type of roller known in the art, such as a roller on a robotic arm 3560 or a manually-manipulated roller. A controller such as a processor, a computer, or a handheld mobile device that sends signals to the third roller 570 may guide the movement of a robotic arm. The movement of a robotic arm may be guided by a controller such as a processor, a computer, or a handheld mobile device that send movement signals to the roller 570. The robotic arm may include multiple members and joints so that the height and/or orientation of roller 570 may be manipulated. While the robotic arm may include any number of members and joint, in some embodiments such as the embodiment shown in FIG. 35, the robotic arm may include a base 3506, a first member 3507, a second member 3509, a third member 3511, and a grip 3505. A first joint 3501 may connect third member 3511 and second member 3509. A second joint 3502 may connect second member 3509 and first member 3507. A third joint 3503 may connect first member 3507 and base 3506. Each member such as base 3506, first member 3507, second member 3509, third member 3511, and grip 3505, may be any type of member known in the art, such as solid rods, hollow tubes, flat bars, and combinations of these types of members. Grip 3505 may be a clamp or similar mechanism. In some embodiments, roller 570 may include a handle 579 configured to be securely and optionally removably held by grip 3505. Each joint such as first joint 3501, second joint 3502, and third joint 3503 may be any type of joint known in the art, such as hinge joints and rotary joints. Each joint may be independently moved by controller. Moving the joints to push the members apart may control the height of the robotic arm. Each joint may be configured to allow the attached member to move, pivot, swivel, rotate, or otherwise move with respect to each other.

The robotic arm and substrate 500 may move relative to one another to ensure that roller 570 may contact the entire surface of substrate 500. Similar to the embodiment shown in FIG. 33, substrate 500 may be configured to rotate or spin to expose the entirety of substrate to roller 570.

Third roller 570 compresses and entangles third attached fiber particles 580 together to form an additional ply 590 of nonwoven fabric. Additionally, third roller 570 also entangles third attached fiber particles 580 to the fibers of base ply 575. In other embodiments, repeating fifth step 230 may involve other methods of matting third attached fiber particles 580, such as vacuum entanglement or manual entanglement.

Third step 220 through fifth step 230 may be repeated in this manner until the desired number of layers is achieved. Once the desired number of plies is laid down, seventh step 245 in the method shown in FIG. 4 may be performed: the adhesive may be cured. Depending upon the type of adhesive, curing may be achieved by exposing the layers to heat, convection, and/or the flow of ambient temperature air over the layers. In the embodiment shown in FIG. 35, a curing device 3565 mounted on a track 3566 propels heated air 3564 towards substrate 500 at a desired temperature and for a desired duration. Curing device 3565 may be a factory line mechanism as discussed above, having a base 3561 slidably mounted to track 3566. An articulated joint 3562 may connect base 3561 to body 3563. A controller and power source may feed information and power through track 3566 or through other lines connected to curing device 3565. In one embodiment, where the adhesive is LocTite spray adhesive, the adhesive is cured with heat applied at about 120 degrees Celsius for about one minute. Any of the adhesive curing methods, including temperature and duration, discussed above may be used in this embodiment.

Once the adhesive is cured, the nonwoven fabric is completed. At this point, an eighth step 250 in the method shown in FIG. 4 may be performed. Eighth step 250 includes removing the nonwoven fabric from the substrate. Because the layers of the nonwoven fabric were built up and cured directly on the surface of the substrate, the nonwoven fabric will have the same contours as the substrate.

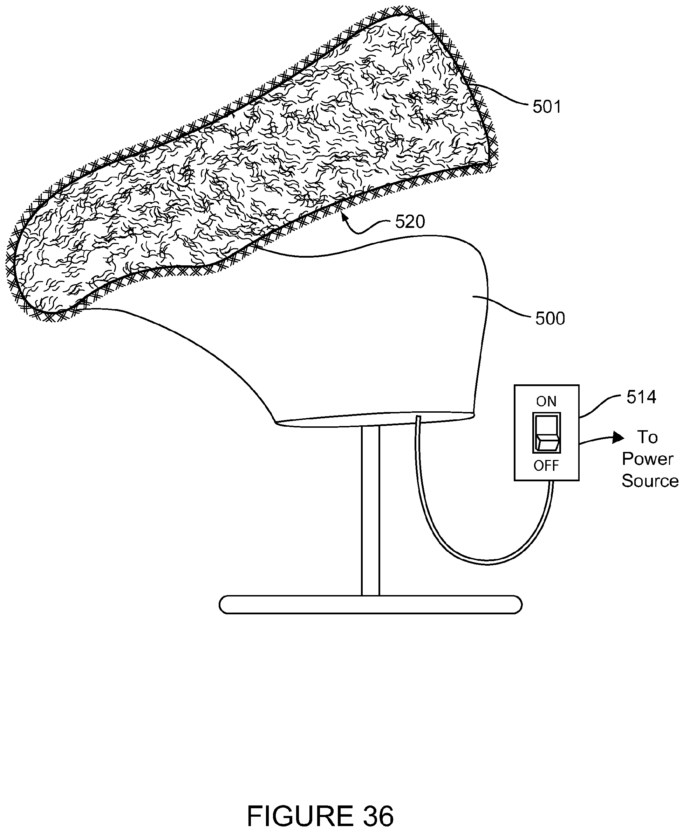

FIG. 36 shows an embodiment of eighth step 250. Third nonwoven fabric 501 has conformed to the shape of the substantially shaped substrate 500. In this embodiment, third nonwoven fabric 501 is a seamless nonwoven upper. Third nonwoven fabric 501 includes a throat opening 520 that allows third nonwoven fabric 501 to be pulled off of shaped substrate 500 as shown in FIG. 36. Switch 514 has been turned to the OFF position, which removes or neutralizes the charge on shaped substrate 500. Neutralizing the charge on shaped substrate 500 allows third nonwoven fabric 501 to slip more easily off of shaped substrate 500. In another embodiment, the charge on shaped substrate 500 may even switch polarity for this step, so that shaped substrate 500 and third nonwoven fabric 501 may have the same polarity and will repel each other for easy removal of the third nonwoven fabric 501 from shaped substrate 500.

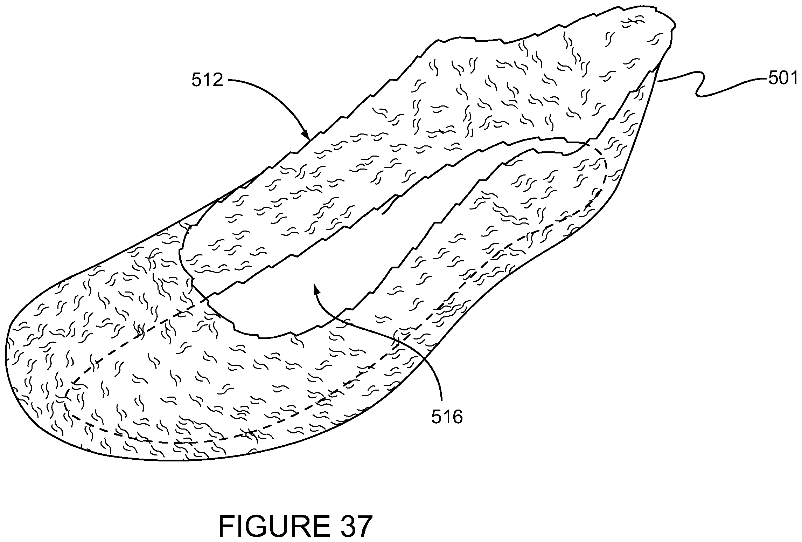

An optional ninth step 260 of the method of FIG. 4 includes additional finishing steps for the nonwoven material, which in this embodiment is a seamless nonwoven upper 501 as shown in FIG. 37. Depending upon the final article for which the nonwoven material is intended, no additional finishing steps may be necessary. In some embodiments, an additional finishing step may be washing or otherwise laundering the nonwoven material to remove any remnants of the substance used to coat the substrate. In other embodiments, additional components may be associated with the nonwoven fabric to complete an article like an article of footwear or an article of apparel. In other embodiments, such as when making an article of apparel, the additional finishing steps may include cutting the nonwoven fabric and joining the cut pieces to each other or to other pieces of fabric to make another article, like an article of apparel. For example a ragged edge such as throat opening edge 512 may be finished with cutting, sealing, or additional material adhered, welded or sewn into position for a more durable and aesthetically pleasing article. In another example, bottom opening 516 may be closed and/or sealed with a sole.

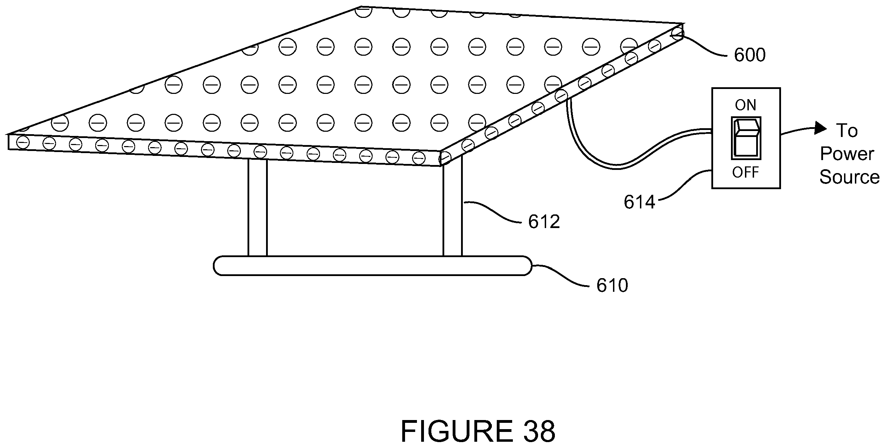

FIGS. 38-46 show another embodiment of the method generally set forth in FIG. 4. In this embodiment, a charged, substantially flat substrate is provided to make a substantially flat nonwoven material. This method is similar to the method described above with respect to FIGS. 28-37, though the intention is to produce a flat sheet of material as opposed to a shaped, three-dimensional article. Only the shapes of the substrate and the resultant article differ from the embodiment shown and discussed above with respect to FIGS. 28-37.

The resultant nonwoven fabric will take on the shape of the substrate. FIG. 38 shows an embodiment of a substantially flat charged substrate 600 used in an embodiment of a method of making a flat sheet of nonwoven material or fabric. In the embodiment shown in FIG. 38, substantially flat charged substrate 600 is a substantially flat surface like a table configured to make a substantially flat nonwoven fabric. Substantially flat charged substrate 600 may be supported on a manufacturing floor or otherwise a manufacturing facility by a fourth base 610. Fourth base 610 may be any type of structure capable of supporting and stabilizing substantially flat charged substrate 600, such as a weighted plate. In some embodiments, a leg 612 may be associated with fourth base 610 so that substantially flat charged substrate 600 may be positioned at a predetermined height above fourth base 610. In some embodiments, leg 612 may elevate substantially flat charged substrate 600 so that substantially flat charged substrate 600 is positioned at a comfortable working height for a user standing or sitting on the manufacturing floor. In other embodiments, leg 612 may position substantially flat charged substrate 600 so that all sides of substantially flat charged substrate 600 are accessible to the manufacturing process. In some embodiments, substantially flat charged substrate 600 may include provisions for associating with leg 612. For example, in one embodiment substantially flat charged substrate 600 may include a recess or hole configured to receive a free end of leg 612. The free end of leg 612 may be inserted into substantially flat charged substrate 600 and fitted there by an interference fit or with threading. In other embodiments, leg 612 may be an extension of substantially flat charged substrate 600.

In some embodiments, substantially flat charged substrate 600 may be a solid, rigid material. Substantially flat charged substrate 600 may have a substantially flat surface, similar to substantially flat substrate 400 described above.

Like substantially flat substrate 400 discussed above, substantially flat charged substrate 600 may be a material to which fiber particles may not adhere without a charge. In other embodiments, flat substrate 600 may have no charge while the fiber particles are charged. The fiber particles may be any types of fiber particle discussed above. The fiber particles may have any length or denier discussed above. In this embodiment, substantially flat charged substrate 600 is prepared by applying an electromagnetic charge or field to substantially flat charged substrate 600 so that the fiber particles may attach to charged substrate 600 electrostatically. The electromagnetic charge may be provided using any method of charging an object known in the art. In some embodiments, the charge may be produced by turning on a second switch 614 that controls the flow of power from a power source to substantially flat charged substrate 600. The power source may be any type of power source known in the art, such as a wall outlet connected to the local power grid, a battery, or a generator. In some embodiments, substantially flat charged substrate 600 may include circuitry that produces a charge when second switch 614 is in the ON position. In other embodiments, current from the power source may simply flow through substantially flat charged substrate 600 so that the electromagnetic field of the current produces the charge. In other embodiments, substantially flat charged substrate 600 may include a magnet that spins when second switch 614 is in the ON position to generate the magnetic field.

Once substantially flat charged substrate 600 has been charged, the method of making the nonwoven fabric occurs in a substantially similar manner to the embodiments described above.

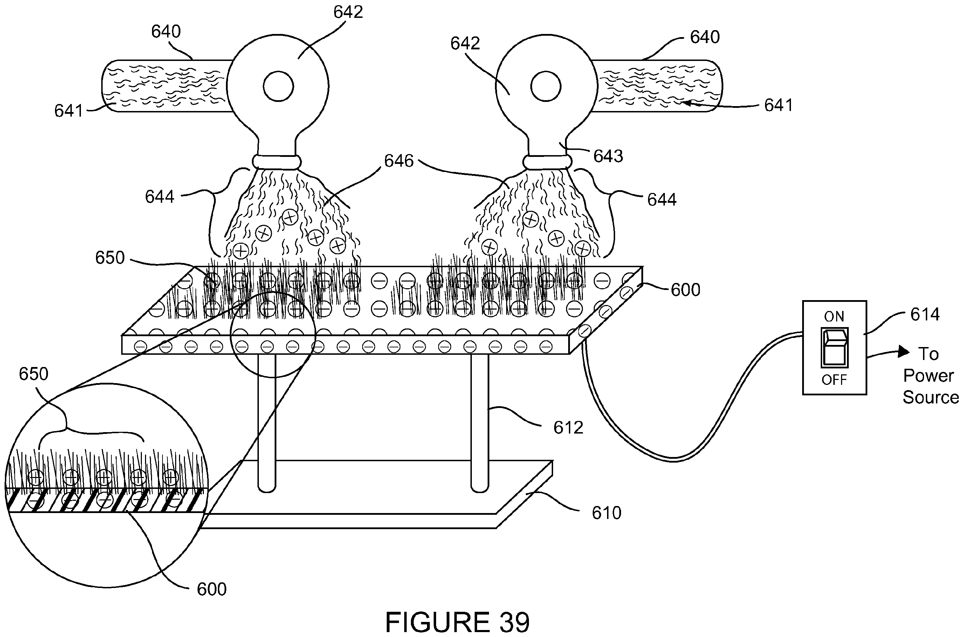

Second step 210 of the method shown in FIG. 4 includes dispensing the fiber particles onto the substrate. FIG. 39 shows an embodiment of second step 210. In the embodiment shown in FIG. 39, substantially flat charged substrate 600 has been prepared with a negative charge. A fourth dispenser 642 is associated with a fourth reservoir 640 containing a plurality of fourth fiber particles 641, which may be any type of fiber particle as discussed above. Fourth reservoir 640 may be any container capable of holding a desired quantity of fourth fiber particles 641 and communicating that fiber particle to fourth dispenser 642. Fourth dispenser 642 is configured to dispense fourth fiber particles 641 onto substantially flat charged substrate 600. Fourth dispenser 642 may be any type of dispenser capable of propelling fourth fiber particles 641 from fourth reservoir 640 onto substantially flat charged substrate 600.

In the embodiment shown in FIG. 39, fourth dispenser 642 is a blower or other type of pneumatic device equipped with a fourth nozzle 643. Fourth dispenser 642 may be any type of blower known in the art. Fourth dispenser 642 is configured to draw fourth fiber particles 641 from fourth reservoir 640 and expel the fiber particles through fourth nozzle 643 towards substantially flat charged substrate 600. Once expelled, the fiber particles become fourth ambient fiber particles 646. Fourth ambient fiber particles 646 are carried along streams of fourth air flow 644 propelled from fourth dispenser 642. Fourth ambient fibers 646 also carry a positive charge, which is the opposite electromagnetic state as that of substantially flat charged substrate. Fourth ambient fiber particles 646 are drawn towards substantially flat charged substrate 600 due in part to the electromagnetic attraction until fourth ambient fiber particles 646 stick to substantially flat charged substrate 600 due to the electromagnetic attraction. Once positioned onto the charged surface of substantially flat charged substrate 600, the fiber particles become fifth attached fiber particles 650. In some embodiments, fifth attached fiber particles 650 are positioned on substantially flat charged substrate 600 so that fifth attached fiber particles 650 are substantially normal to the surface of substantially flat charged substrate 600. In other embodiments, fifth attached fiber particles 650 are attached at other angles with respect to the surface of substantially flat charged substrate 600. In some embodiments, fifth attached fiber particles 650 are positioned at random angles with respect to the surface of substantially flat charged substrate 600.

Fourth dispenser 642 and substantially flat charged substrate 600 may move relative to one another to ensure that the entire surface of substantially flat charged substrate 600 is exposed to fourth ambient fiber particles 646. In one embodiment, fourth dispenser 642 may move around a stationary substantially flat charged substrate 600. In another embodiment, substantially flat charged substrate 600 may move and rotate relative to a stationary fourth dispenser 642. In some embodiments, more than one fourth dispenser 642 may be positioned at various locations around substantially flat charged substrate 600.

Fourth dispenser 642 is configured to dispense fourth fiber particles 641 until fourth ambient fiber particles 646 no longer adhere to substantially flat charged substrate 600. In some embodiments, the duration of dispensing may be sensed by one or more sensors positioned proximate substantially flat charged substrate 600. In some embodiments, the duration of dispensing may be determined by an operator visually inspecting substantially flat charged substrate 600 and fourth ambient fiber particles 646. Excess fourth ambient fiber particles 646 may be removed from the proximity of substantially flat charged substrate 600 by additional blowing air or a vacuum.

Third step 220 of the method shown in FIG. 4 includes applying an adhesive to the embedded fiber particles, which is achieved in substantially the same manner as the embodiment of third step 220 shown in FIG. 8. The types and application styles for the adhesive are also the same.

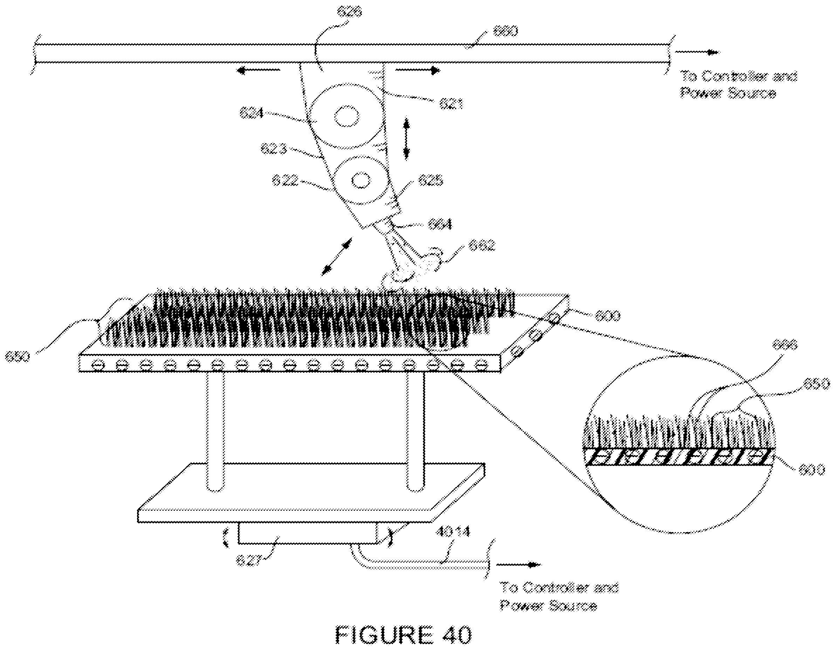

FIG. 40 shows an embodiment of third step 220. In the embodiment shown in FIG. 40, a fourth sprayer 4360 is configured to apply a fourth adhesive 662 onto fifth attached fiber particles 650. Fourth sprayer 4360 may be any kind of spray device known in the art capable of aerosolizing and propelling fourth adhesive 662 towards fifth attached fiber particles 650. In some embodiments, fourth sprayer 4360 may be a trigger-type intermittent sprayer, such as a manual spray bottle. In some embodiments, fourth sprayer 4360 may be a compressor-driven continuous sprayer, such as a power sprayer.

In some embodiments, fourth sprayer 4360 may be a factory line mechanism 626 that may include a factory track 660 disposed on a ceiling or otherwise suspended above flat substrate 600. A base 621 may be attached to factory track 660 so that base 621 may translate along track 660 using known techniques such as servo motors and rollers or wheels. A controller such as a processor with associated memory containing a program for manipulating base 621 and/or nozzle 664 may be linked wirelessly or via wireline to base 621 or any other part of the factory line mechanism. The factory line mechanism may include any number of members and joints to allow nozzle 664 to move over the entire surface of flat substrate 600. In the embodiment shown in FIG. 40, a first factory joint 624 may attach base 621 to a first factory member 623. A second factory joint 622 may attach first factory member 623 to a second factory member 625 that support nozzle 664. Each joint may be any type of joint known in the art, such as hinge joints and rotary joints. Each joint may be independently moved by a controller. Moving the joints to push the members apart may control the height of sprayer 360. Each joint may be configured to allow the attached member to move, pivot, swivel, rotate, or otherwise move with respect to each other.

Fourth sprayer 4360 and substantially flat charged substrate 600 may move relative to one another to ensure that fourth adhesive 662 is applied to the entire surface of substantially flat charged substrate 600. In one embodiment, fourth sprayer 4360 may move around a stationary substantially flat charged substrate 600. In another embodiment, substantially flat charged substrate 600 may move and rotate relative to a stationary fourth sprayer 4360. In some embodiments, more than one fourth sprayer 4360 may be positioned at various locations around substantially flat charged substrate 600.

In this embodiment, such as shown in the enlarged view in FIG. 40, a relatively light coating of adhesive is applied to fifth attached fiber particles 650. The enlarged view in FIG. 40 shows seventh adhesive droplets 666 dispersed within fifth attached fiber particles 650. Seventh adhesive droplets 666 may be adhered to an individual fiber particle 646 or seventh adhesive droplets 666 may be adhered to multiple fifth attached fiber particles 650. Seventh adhesive droplets 666 remain uncured at this point in the manufacturing process.

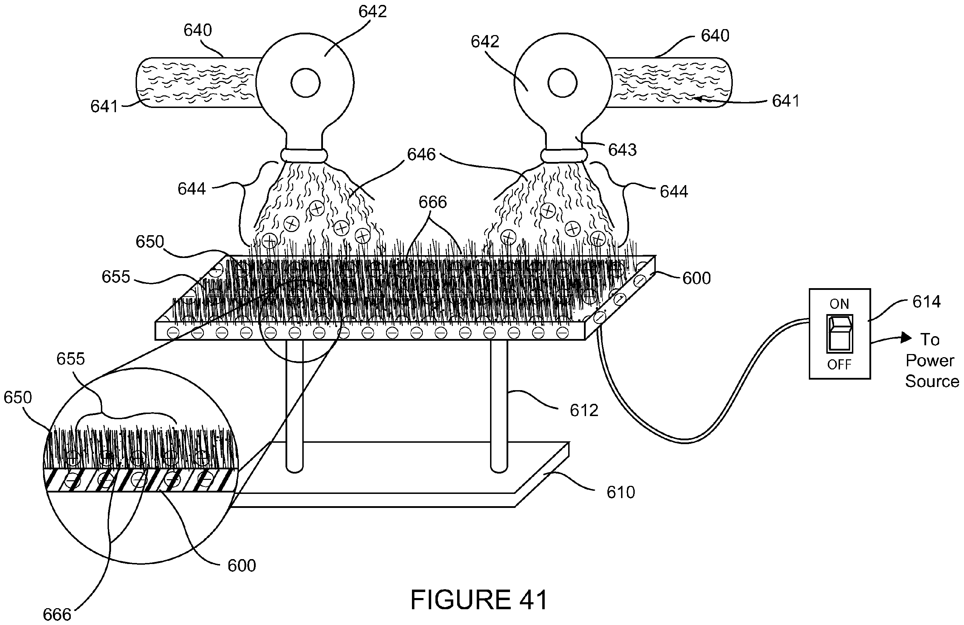

Fourth step 225 of the method shown in FIG. 4 includes applying a second layer of fiber particles onto fifth attached fiber particles 650 and seventh adhesive droplets 666. FIG. 41 shows an embodiment of a layer of sixth attached fiber particles 655 being deposited onto charged substrate 600, fifth attached fiber particles 650, and seventh adhesive droplets 666. The electrostatic charge, the geometry of fifth attached fiber particles 650, and seventh adhesive droplets 666 hold sixth attached fiber particles 655 in position on substrate 600.

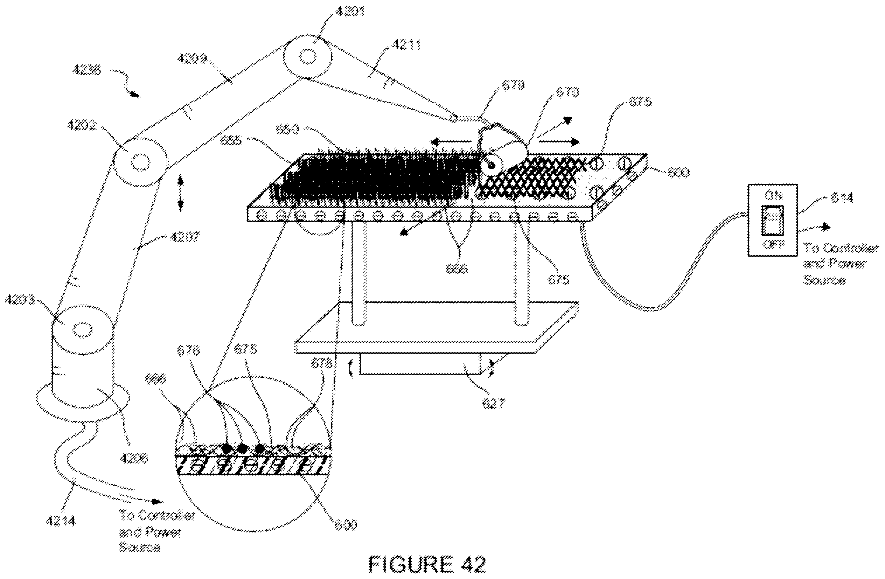

Fifth step 230 of the method shown in FIG. 4 includes matting the fiber particles. In this embodiment, fifth step 230 may be achieved as discussed above. FIG. 42 shows an embodiment of fifth step 230 in which a fourth roller 670 is passed over fifth attached fiber particles 650 and sixth attached fiber particles 655. Fourth roller 670 may be any type of roller known in the art, such as a roller on a robotic arm or a manually-manipulated roller. The movement of a robotic arm such as robot 4236 may be guided by a controller such as a processor, a computer, or a handheld mobile device that sends movement signals to the fourth roller 670.

The movement of robot 4236 may be guided by a controller such as a processor, a computer, or a handheld mobile device that send movement signals to the roller 670. Robot 4236 may include multiple members and joints so that the height and/or orientation of roller 670 may be manipulated. While the robotic arm may include any number of members and joint, in some embodiments such as the embodiment shown in FIG. 42, the robotic arm may include a base 4206, a first member 4207, a second member 4209, and a third member 4211. A first joint 4201 may connect third member 4211 and second member 4209. A second joint 4202 may connect second member 4209 and first member 4207. A third joint 4203 may connect first member 4207 and base 4206. Each member such as base 4206, first member 4207, second member 4209, and third member 4211, may be any type of member known in the art, such as solid rods, hollow tubes, flat bars, and combinations of these types of members. In some embodiments, roller 670 may include a handle 679 configured to be securely and optionally removably supported by third member 4211. Each joint such as first joint 4201, second joint 4202, and third joint 4203 may be any type of joint known in the art, such as hinge joints and rotary joints. Each joint may be independently moved by controller. Moving the joints to push the members apart may control the height of robot 4236. Each joint may be configured to allow the attached member to move, pivot, swivel, rotate, or otherwise move with respect to each other.

Fourth roller 670 compresses and entangles fifth attached fiber particles 650 and sixth attached fiber particles together to form a bottom ply 675 of nonwoven fabric. As shown in the enlarged portion of FIG. 42, the fibers are loosely attached to each other, being attached at various points 676 while leaving significant air gaps 678 throughout bottom ply 675.

As with the embodiments discussed above, an optional sixth step 240 of the method shown in FIG. 4 involves repeating second step 210 through fourth step 240 to build up additional plies of nonwoven fabric. Sixth step 240 may be repeated as many times as desired until the desired number of plies is formed. The number and thicknesses of the plies are the same as those discussed above.

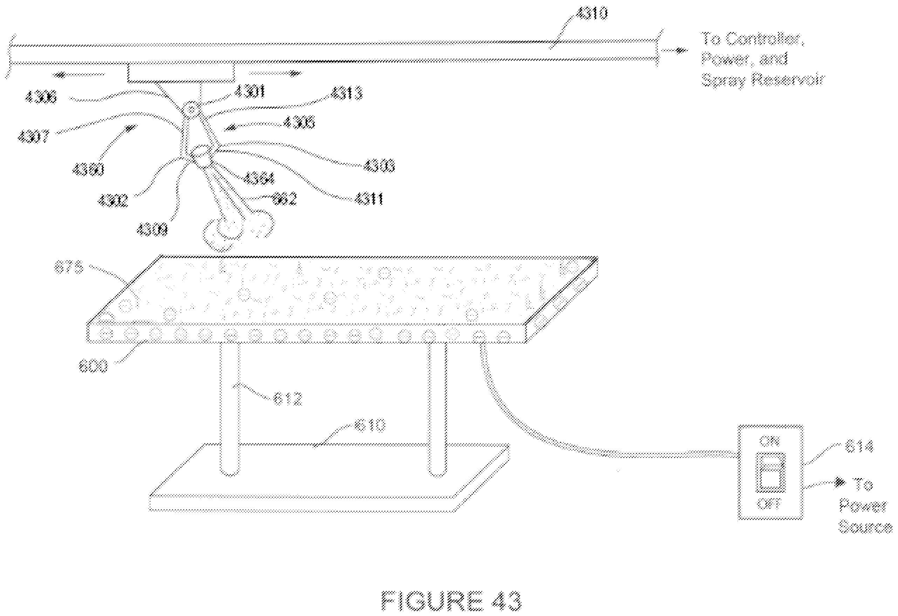

FIGS. 43-45 show an embodiment of forming a second ply of nonwoven fabric on top of bottom ply 675 of fourth nonwoven fabric 601. As shown in FIG. 43 shows an embodiment of repeating third step 220. In the embodiment shown in FIG. 43, fourth sprayer 4360 is configured to apply an fourth adhesive 662 onto bottom ply 675. In some embodiments, fourth sprayer 4360 may be part of a factory line.

In some embodiments, fourth sprayer 4360 may include a track 4310 disposed on a ceiling or otherwise suspended above flat substrate 600. A base 4306 may be attached to track 4310 so that base 4306 may translate along track 4310 using known techniques such as servo motors and rollers or wheels. A controller such as a processor with associated memory containing a program for manipulating base 4306 and/or nozzle 4364 may be linked wirelessly or via wireline to base 4306 or any other part of fourth sprayer 4360. Fourth sprayer 4360 may include any number of members and joints to allow nozzle 4364 to move over the entire surface of flat substrate 600. In the embodiment shown in FIG. 43, a first joint 4301 may attach base 4306 to an articulated grip 4305. Articulated grip 4305 may include any number of members and joints. A first grip joint 4302 may attach first grip member 4307 to a second grip member 4309. A second factory joint 4303 may attach third grip member 4311 to fourth grip member 4313. Each joint may be any type of joint known in the art, such as hinge joints and rotary joints. Each joint may be independently moved by a controller. Each joint may be configured to allow the attached member to move, pivot, swivel, rotate, or otherwise move with respect to each other. By translating along track 4310 and by moving the joints, the entire surface of substrate 600 may be exposed to fourth adhesive or spray 662.

Fourth sprayer 4360 and substantially flat charged substrate 600 may move relative to one another to ensure that fourth adhesive 662 is applied to the entirety of bottom ply 675. In one embodiment, fourth sprayer 4360 may move around a stationary substantially flat charged substrate 600. In another embodiment, substantially flat charged substrate 600 may move and rotate relative to a stationary fourth sprayer 4360. In some embodiments, more than one fourth sprayer 4360 may be positioned at various locations around substantially flat charged substrate 600. Eighth adhesive droplets 686 remain uncured and dispersed throughout seventh attached fiber particles 680.

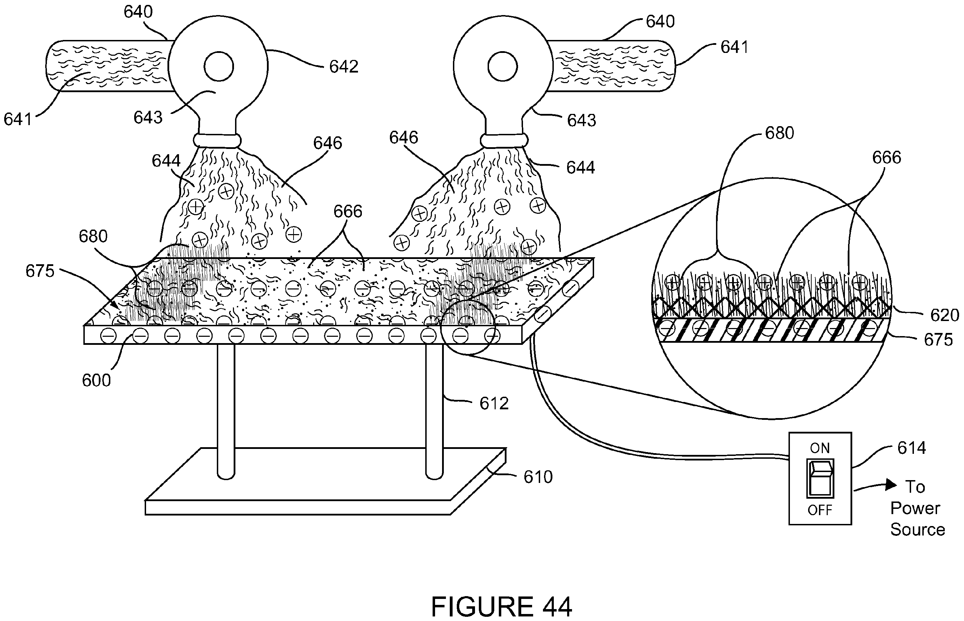

FIG. 44 shows an embodiment of repeating fourth step 225 of the method shown in FIG. 4, which includes applying another layer of fiber particles onto bottom ply 675 and eighth adhesive droplets 686. The embodiment shown in FIG. 44 is similar in most respects to the embodiments of repeating fourth step 225 as discussed above with respect to the other embodiments. FIG. 44 shows an embodiment of a layer of seventh attached fiber particles 680 being deposited onto substrate 600, bottom ply 675, and eighth adhesive droplets 686.

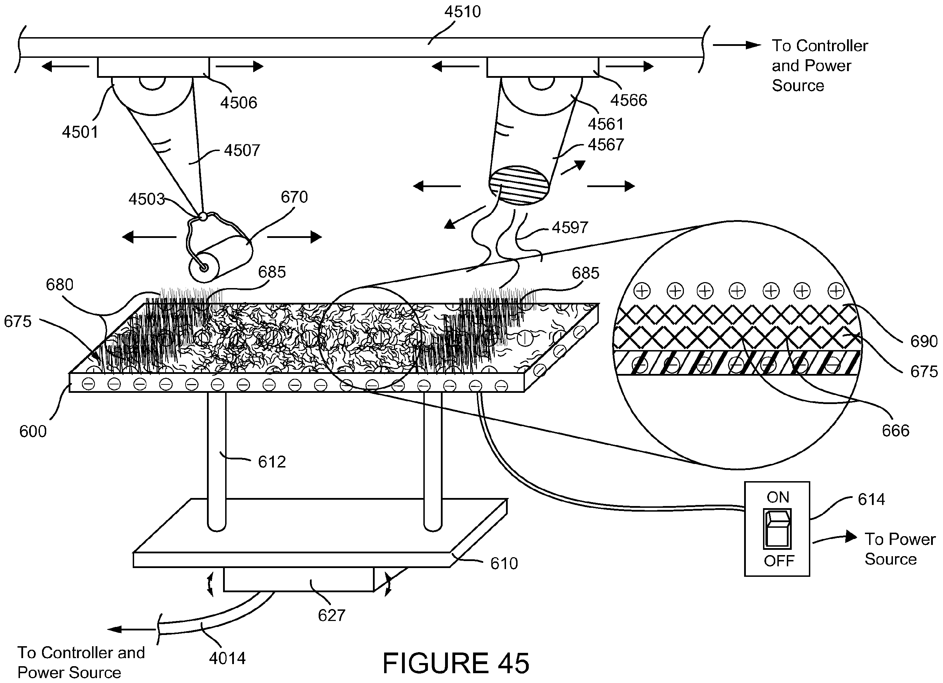

FIG. 45 shows an embodiment of repeating fifth step 230 in which fourth roller 670 is passed over seventh attached fiber particles 680. The embodiment shown in FIG. 45 is similar in most respects to the embodiments of repeating fifth step 230 as discussed above with respect to the other embodiments. Fourth roller 670 compresses and entangles seventh attached fiber particles 680 together to form an appended ply 690 of nonwoven fabric. Additionally, fourth roller 670 also entangles seventh attached fiber particles 680 to the fibers of bottom ply 675 to attach appended ply 690 to bottom ply 675. In other embodiments, repeating fifth step 230 may involve other methods of matting seventh attached fiber particles 680, such as vacuum entanglement or manual entanglement.

FIG. 45 shows an embodiment of repeating fifth step 230 in which fourth roller 670 is passed over third attached fiber particles 680 to mat and interconnect third attached fiber particles 680. As discussed above with respect to FIG. 10, fourth roller 670 may be any type of roller known in the art, such as a roller on a robotic arm or a manually-manipulated roller. A controller such as a processor, a computer, or a handheld mobile device that sends signals to the fourth roller 670 may guide the movement of a robotic arm. The movement of a robotic arm may be guided by a controller such as a processor, a computer, or a handheld mobile device that send movement signals to the roller 670.

The robotic arm may be mounted on a track for factory line use, as shown in FIG. 45. While the robotic arm may include any number of members and joint, in some embodiments such as the embodiment shown in FIG. 45, the robotic arm may include a base 4506 and a first member 4507. A first joint 4501 may connect base 4506 and first member 4507. Each member such as base 4506 and first member 4507, may be any type of member known in the art, such as solid rods, hollow tubes, flat bars, and combinations of these types of members. In some embodiments, roller 670 may be directly attached to first member 4507 by a connector 4503. Connector 4503 may be a mechanical connector like a pin, a weld, or a joint. First joint 4501 and optionally connector 4503 may be any type of joint known in the art, such as hinge joints and rotary joints. Each joint may be independently moved by controller. Moving the joints to push the members apart may control the height of the robotic arm. Each joint may be configured to allow the attached member to move, pivot, swivel, rotate, or otherwise move with respect to each other.

The robotic arm and substrate 500 may move relative to one another to ensure that roller 670 may contact the entire surface of substrate 500. Similar to the embodiment shown in FIG. 33, substrate 500 may be configured to rotate or spin on a motorized gear box 627 to expose the entirety of substrate 600 to roller 670.

Fourth roller 670 compresses and entangles third attached fiber particles 680 together to form an additional ply 690 of nonwoven fabric. Additionally, fourth roller 670 also entangles third attached fiber particles 680 to the fibers of base ply 675. In other embodiments, repeating fifth step 230 may involve other methods of matting third attached fiber particles 680, such as vacuum entanglement or manual entanglement.

Third step 220 through fifth step 230 may be repeated in this manner until the desired number of layers is achieved. Once the desired number of plies is laid down, seventh step 245 in the method shown in FIG. 4 may be performed: the adhesive may be cured. Depending upon the type of adhesive, curing may be achieved by exposing the layers to heat, convection, and/or the flow of ambient temperature air over the layers. In the embodiment shown in FIG. 45, a curing device 4567 mounted on a track 4510 may propel heated air 4597 towards substrate 600 at a desired temperature and for a desired duration. Curing device 4567 may be a factory line mechanism as discussed above, having a base 4566 slidably mounted to track 4510. An articulated joint 4561 may connect base 4566 to curing device 4567. A controller and power source may feed information and power through track 4510 or through other lines connected to curing device 4567. In one embodiment, where the adhesive is LocTite spray adhesive, the adhesive is cured with heat applied at about 120 degrees Celsius for about one minute. Any of the adhesive curing methods, including temperature and duration, discussed above may be used in this embodiment.

Once the adhesive is cured, the nonwoven fabric is completed. At this point, an eighth step 250 in the method shown in FIG. 4 may be performed. Eighth step 250 includes removing the nonwoven fabric from the substrate. Because the layers of the nonwoven fabric were built up and cured directly on the surface of the substrate, the nonwoven fabric will have the same contours as the substrate.

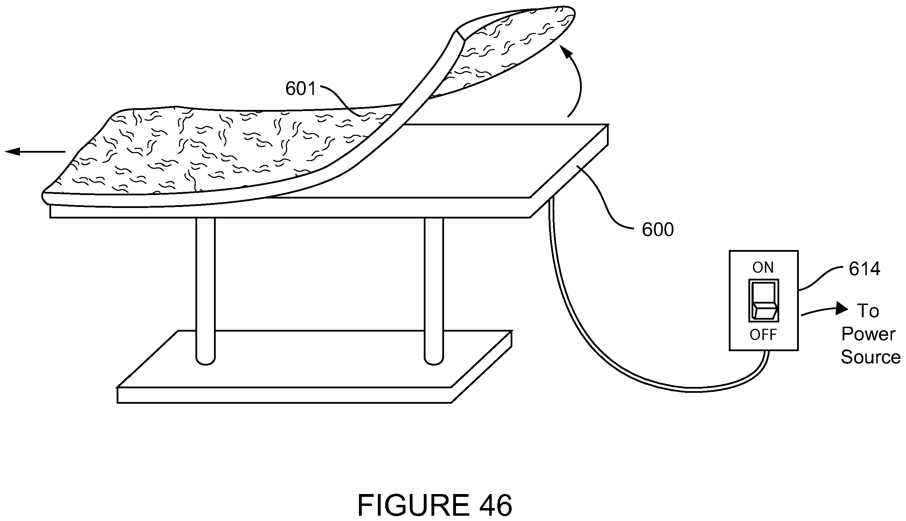

FIG. 46 shows an embodiment of eighth step 250. Fourth nonwoven fabric 601 has conformed to the shape of the substantially flat charged substrate 600. In this embodiment, fourth nonwoven fabric 601 is a sheet of nonwoven material. Second switch 614 has been turned to the OFF position, which removes or neutralizes the charge on substantially flat charged substrate 600. Neutralizing the charge on substantially flat charged substrate 600 allows fourth nonwoven fabric 601 to slip more easily off of substantially flat charged substrate 600. In some embodiments, switch 614 may control the polarity of the charge in addition to or instead of merely controlling the flow of power. If the polarity is reversed, the charge of substantially flat charged substrate 600 may repel fourth nonwoven fabric 601 for easy removal.

An optional ninth step 260 of the method of FIG. 4 includes additional finishing steps for the nonwoven material. Depending upon the final article for which the nonwoven material is intended, no additional finishing steps may be necessary. In some embodiments, an additional finishing step may be washing or otherwise laundering the nonwoven material to remove any remnants of the substance used to coat the substrate. In other embodiments, additional components may be associated with the nonwoven fabric to complete an article like an article of footwear or an article of apparel. In other embodiments, such as when making an article of apparel, the additional finishing steps may include cutting the nonwoven fabric and joining the cut pieces to each other or to other pieces of fabric to make another article, like an article of apparel.

FIGS. 47 and 48 show an embodiment of using a sheet of nonwoven material 770 to make an article of apparel 790 using a body last or a dressmaker's mannequin 700. Body last 700 may be any type of body last known in the art as long as body last 700 is capable of receiving cut portions of material so that a technician or tailor may join the material pieces into an article of apparel. Although shown as a torso-shaped body last, body last 700 may in other embodiments be a full body last for making suits that cover both a torso and the legs, or a lower body last for making shorts, pants, trousers, and the like.

Nonwoven material 770 may be made using any method known in the art, including those methods described above. However, the method of making nonwoven material 770 is not restricted to those methods described above.

FIG. 47 also shows how components of an article of apparel may be associated with body last 700 to be joined together into the article of apparel. The components may all be made of the same material, such as is shown in the embodiment of FIG. 47, or the components may be made of different materials. In FIG. 47, a single apparel material 770 is provided. Outlines of the components to be cut or developed from apparel material 770 are shown on apparel material 770: a first sleeve component 771, a second sleeve component 772, a front component 773, and a back component 774. To associate first sleeve component 771 with body last 700 in the proper position, first sleeve component 771 is positioned proximate first shoulder 721. First sleeve component 771 is placed on top of body last 700 so that first sleeve component 771 covers at least a portion of first shoulder 721. To associate second sleeve component 772 with body last 700 in the proper position, second sleeve component 772 is positioned proximate second shoulder 723. Second sleeve component 772 is placed on top of body last 700 so that second sleeve component 772 covers at least a portion of second shoulder 723. In this embodiment, the sleeve components substantially cover the shoulder regions, but do not extend a significant length along first arm 710 or second arm 712. In other embodiments, these coverage amounts could vary, with the shoulders and arms having more or less coverage than shown in this embodiment.

To associate front component 773 with body last 700, front component 773 is positioned proximate chest portion 702 and abdomen portion 714. Front component 773 is placed on top of body last 700 so that front component covers at least a portion of chest portion 702 and abdomen portion 714. In this embodiment, front component 773 would substantially cover both chest portion 702 and abdomen portion 714. Other embodiments would have varying levels of coverage, either greater than or less than the amount of coverage shown in FIG. 47. To associate back component 774 with body last 700, back component 774 is positioned proximate a back portion of third last (not shown but generally opposite chest portion 702 and abdomen 714.) Back component 774 is placed on top of body last 700 so that back component 774 covers at least a portion of the back portion. In this embodiment, back component 774 would substantially cover the back portion. Other embodiments would have varying levels of coverage, either greater than or less than the amount of coverage shown in FIG. 47.

The number of components depends on the design of the article of apparel. For example, in other embodiments, multiple components may be used in place of any single component discussed in this embodiment. Similarly, a single component may be used in place of any two or more components discussed in this embodiment. The embodiment shown in FIG. 47 is of a short-sleeved shirt, but a similar method could be used to make any type of torso-covering garment. FIG. 48 shows how the components correspond to portions of article of apparel 790.

The components shown in FIG. 47 may be attached directly to body last 700 (when the components are touching an outer surface of body last 700), or the components may be indirectly attached to body last 700 where another layer is positioned between the outer surface of body last 700 and the components.) The type of attachment depends on factors including the material(s) used to make body last 700. For example, body last 700 may include a rigid, inflexible material to withstand the external pressure applied by the pressure applicator. The rigid material may include metals, plastics, ceramics, composites, foam materials, and combinations. Some of these materials may have a smooth surface. In such embodiments, a covering or other material may be included with body last 700. In some embodiments, body last 700 itself may include a covering, such as a fabric, soft foam, elastomeric material, or the like. The covering layer may be thin enough that any texture on the smooth surface of the rigid material is still able to be imparted to the apparel. However, the covering layer may allow pins or other fasteners to be used to attach the components to body last 700. In another embodiment, body last 700 may only include the rigid material. A layer of another material may be provided between the outer surface of body last 700 and the apparel. For example, a release film may be employed, where one side of the release film is able to stick or adhere to body last 700 while the components of the apparel may be positioned on the other side of the release film using a tacky surface, pins or other fasteners, or static electricity. Finally, even if body last 700 includes a smooth surface, static electricity, temporary adhesives, or other fasteners may be used to attach the components to body last 700. Any of these materials, attachment mechanisms, and configurations may be used with any of the embodiments described herein.

As will be apparent to a person of ordinary skill in the art, body last 700 may be adapted to be a substrate for the method shown in FIG. 4, according to any embodiment discussed above. In such embodiments, the cutting and shaping of the nonwoven material on a separate body last may be eliminated if the nonwoven material itself can be formed and shaped simultaneously on a body last.

While various embodiments of the invention have been described, the description is intended to be exemplary, rather than limiting and it will be apparent to those of ordinary skill in the art that many more embodiments and implementations are possible that are within the scope of the invention. Any feature of any embodiment may be used with and/or substituted for another element of any other embodiment except where specifically restricted. Accordingly, the invention is not to be restricted except in light of the attached claims.

## Claims

1. A method of making a nonwoven article, the method comprising:
preparing a substrate (300, 400, 500, 600) to receive fiber particles (341, 346, 350, 355, 380, 441, 446, 450, 455, 480, 541, 546, 550, 555, 580, 641, 646, 650, 655, 680);
depositing a first plurality of fiber particles onto the substrate;
applying an adhesive (362, 462, 562, 662) to the plurality of fiber particles;
depositing a second plurality of fiber particles onto the substrate;
matting the first plurality of fiber particles and the second plurality of fiber particles together to form a first matted ply (375, 475, 575, 675) of a resultant nonwoven article;
curing the resultant nonwoven article; and
removing the resultant nonwoven article (301, 401, 501, 601) from the substrate,
the method further comprising the step of applying a mask to a portion of the substrate prior to depositing the plurality of fiber particles onto the substrate.

2. The method according to claim 1,
wherein the substrate is configured to produce an article having curvature along at least two axes, wherein the substrate (300, 500) preferably is a last for an article of footwear or wherein the substrate (400, 600) preferably is substantially flat to produce a sheet of fabric.

3. The method according to claim 1 further comprising the steps of applying a second adhesive to the first matted ply;
depositing a third plurality of fiber particles onto the first matted ply; and matting the third plurality of fiber particles together to form a second matted ply of the resultant nonwoven article,
the method preferably further comprising the step of applying a mask (385) to a portion of the first matted ply prior to depositing at least one of the second adhesive and the third plurality of fiber particles onto the first matted ply.

4. The method according to claim 1, wherein matting the fiber particles includes a mechanical compressing of the first plurality of fiber particles and second plurality of fiber particles.

5. The method according to claim 4, wherein the mechanical compressing includes using a roller (370, 470, 570, 670) to entangle the first plurality of fiber particles and the second plurality of fiber particles.

6. A method of making a nonwoven upper, the method comprising:
preparing a last (300, 500) to receive a plurality of fiber particles (341, 346, 350, 355, 380, 441, 446, 450, 455, 480, 541, 546, 550, 555, 580, 641, 646, 650, 655, 680);
depositing the plurality of fiber particles onto the last in the shape of an upper, including a throat opening (302, 520)
applying an adhesive to the plurality of fiber particles;
matting the fiber particles to form a matted layer (375, 575) of the upper;
curing the adhesive; and
removing the resultant upper (301, 501) from the last,
the method further comprising the step of applying a mask to a portion of the last prior to depositing the plurality of fiber particles onto the last.

7. The method according to claim 6, wherein the step of preparing the last includes applying to the last a substance designed to capture the plurality of fiber particles,
wherein the substance is preferably applied to the last to form an outline of the throat opening of the upper,
wherein the substance preferably facilitates removing the upper from the last,
wherein the substance preferably is petroleum jelly or silicone.

8. The method according to claim 6 further comprising the step of incorporating the resultant upper into an article of footwear (100),
the method preferably further comprising associating the resultant upper with a sole (102, 124).

9. A method of making a nonwoven fabric, the method comprising:
preparing a substantially flat substrate (400, 600) to receive a plurality of fiber particles (441, 446, 450, 455, 480, 641, 646, 650, 655, 680);
depositing the plurality of fiber particles onto the substantially flat substrate;
applying an adhesive to the plurality of fiber particles;
matting the fiber particles to form a matted layer (475, 675) of the nonwoven fabric;
curing the adhesive; and
removing the resultant nonwoven fabric (401, 601) from the substantially flat substrate,
the method further comprising the step of applying a mask to a portion of the substantially flat substrate prior to depositing the plurality of fiber particles onto the substantially flat substrate.

10. The method according to claim 9, wherein the step of preparing the substantially flat substrate includes applying to the substantially flat substrate a substance designed to capture the plurality of fiber particles,
wherein the substance preferably facilitates removing the upper from the substantially flat substrate
wherein the substance preferably is one of petroleum jelly and silicone.

11. The method according to claim 9 further comprising incorporating the nonwoven fabric into an article (100, 790).

12. The method according to claim 11, wherein the article is an article of apparel.

13. An article incorporating a nonwoven fabric, the article comprising:
a first layer incorporating a first plurality of matted fiber particles (341, 346, 350, 355, 380, 441, 446, 450, 455, 480, 541, 546, 550, 555, 580, 641, 646, 650, 655, 680) and an adhesive, wherein each fiber in the first plurality of matted fiber particles is a monofilament, and where all of the fibers in the first plurality of matted fiber particles is the same monofilament; and
a second layer incorporating a second plurality of matted fiber particles and the adhesive, wherein each fiber in the second plurality of matted fiber particles is a monofilament, and where all of the fibers in the second plurality of matted fiber particles is the same monofilament,
wherein the first layer includes a gap devoid of matted fiber particles, and the second layer spans the gap so that the nonwoven fabric is continuous.

14. The article according to claim 13, wherein the fabric has curvature along at least two axes,
wherein the article preferably is an upper of an article of footwear, wherein the upper is preferably seamless and preferably includes a throat opening, or
wherein the article is an article of apparel, wherein the nonwoven fabric preferably is associated with a second fabric to form the article of apparel.

## Patentansprüche

1. Verfahren zum Herstellen eines Vliesstoffartikels, das Verfahren umfassend:
das Herstellen eines Substrats (300, 400, 500, 600) zum Empfangen von Faserteilchen (341, 346, 350, 355, 380, 441, 446, 450, 455, 480, 541, 546, 550, 555, 580, 641, 646, 650, 655, 680);
das Ablegen einer ersten Mehrzahl von Faserteilchen auf das Substrat;
das Aufbringen eines Haftmittels (362, 462, 562, 662) auf die Mehrzahl von Faserteilchen;
das Ablegen einer zweiten Mehrzahl von Faserteilchen auf das Substrat;
das miteinander Verfilzen der ersten Mehrzahl von Faserteilchen und der zweiten Mehrzahl von Faserteilchen zum Bilden einer ersten verfilzten Lage (375, 475, 575, 675) eines resultierenden Vliesstoffartikels;
das Härten des resultierenden Vliesstoffartikels; und
das Entfernen des resultierenden Vliesstoffartikels (301, 401, 501, 601) von dem Substrat,
das Verfahren weiter umfassend den Schritt des Aufbringens einer Maske auf einen Teil des Substrats vor dem Ablegen der Mehrzahl von Faserteilchen auf das Substrat.

2. Verfahren nach Anspruch 1,
wobei das Substrat eingerichtet ist, einen Artikel mit Krümmung entlang mindestens zweier Achsen zu erzeugen, wobei das Substrat (300, 500) vorzugsweise eine Leiste eines Fußbekleidungsartikels ist oder wobei das Substrat (400, 600) vorzugsweise im Wesentlichen flach ist, um eine Stoffbahn zu erzeugen.

3. Verfahren nach Anspruch 1, weiter umfassend die Schritte des Aufbringens eines zweiten Haftmittels auf die erste verfilzte Lage;
Ablegens einer dritten Mehrzahl von Faserteilchen auf die erste verfilzte Lage, und
miteinander Verfilzens der dritten Mehrzahl von Faserteilchen zum Bilden einer zweiten verfilzten Lage des resultierenden Vliesstoffartikels,
das Verfahren vorzugsweise weiter umfassend den Schritt des Aufbringens einer Maske (385) auf einen Teil der ersten verfilzten Lage vor dem Ablegen von mindestens einem des zweiten Haftmittels und der dritten Mehrzahl von Faserteilchen auf die erste verfilzte Lage.

4. Verfahren nach Anspruch 1, wobei das Verfilzen der Faserteilchen ein mechanisches Verdichten der ersten Mehrzahl von Faserteilchen und der zweiten Mehrzahl von Faserteilchen einschließt.

5. Verfahren nach Anspruch 4, wobei das mechanische Verdichten das Verwenden einer Walze (370, 470, 570, 670) zum Verheddern der ersten Mehrzahl von Faserteilchen und der zweiten Mehrzahl von Faserteilchen einschließt.

6. Verfahren zum Herstellen eines Vliesstoff-Obermaterials, das Verfahren umfassend:
das Herstellen einer Leiste (300, 500) zum Empfangen einer Mehrzahl von Faserteilchen (341, 346, 350, 355, 380, 441, 446, 450, 455, 480, 541, 546, 550, 555, 580, 641, 646, 650, 655, 680);
das Ablegen der Mehrzahl von Faserteilchen auf die Leiste in der Form eines Obermaterials, einschließend eine Schaftöffnung (302, 520) das Aufbringen eines Haftmittels auf die Mehrzahl von Faserteilchen;
das Verfilzen der Faserteilchen zum Bilden einer verfilzten Schicht (375, 575) des Obermaterials;
das Härten des Haftmittels; und
das Entfernen des resultierenden Obermaterials (301, 501) von der Leiste,
das Verfahren weiter umfassend den Schritt des Aufbringens einer Maske auf einen Teil der Leiste vor dem Ablegen der Mehrzahl von Faserteilchen auf die Leiste.

7. Verfahren nach Anspruch 6, wobei der Schritt des Herstellens der Leiste das Aufbringen einer Substanz, ausgelegt zum Einfangen der Mehrzahl von Faserteilchen, auf die Leiste einschließt,
wobei die Substanz vorzugsweise zum Bilden eines Umrisses der Schaftöffnung des Obermaterials auf die Leiste aufgebracht wird,
wobei die Substanz vorzugsweise das Entfernen des Obermaterials von der Leiste erleichtert,
wobei die Substanz vorzugsweise Petrolatum oder Silikon ist.

8. Verfahren nach Anspruch 6, weiter umfassend den Schritt des Einbauens des resultierenden Obermaterials in einen Fußbekleidungsartikel (100),
das Verfahren vorzugsweise weiter umfassend das Verbinden des resultierenden Obermaterials mit einer Sohle (102, 124).

9. Verfahren zum Herstellen eines Vliesstoffes, das Verfahren umfassend:
das Herstellen eines im Wesentlichen flachen Substrats (400, 600) zum Empfangen einer Mehrzahl von Faserteilchen (441, 446, 450, 455, 480, 641, 646, 650, 655, 680);
das Ablegen der Mehrzahl von Faserteilchen auf das im Wesentlichen flache Substrat;
das Aufbringen eines Haftmittels auf die Mehrzahl von Faserteilchen;
das Verfilzen der Faserteilchen zum Bilden einer verfilzten Schicht (475, 675) des Vliesstoffes;
das Härten des Haftmittels; und
das Entfernen des resultierenden Vliesstoffes (401, 601) von dem im Wesentlichen flachen Substrat,
das Verfahren weiter umfassend den Schritt des Aufbringens einer Maske auf einen Teil des im Wesentlichen flachen Substrats vor dem Ablegen der Mehrzahl von Faserteilchen auf das im Wesentlichen flache Substrat.

10. Verfahren nach Anspruch 9, wobei der Schritt des Herstellens des im Wesentlichen flachen Substrats das Aufbringen einer Substanz, ausgelegt zum Einfangen der Mehrzahl der Faserteilchen, einschließt,
wobei die Substanz vorzugsweise das Entfernen des Obermaterials von dem im Wesentlichen flachen Substrat erleichtert,
wobei die Substanz vorzugsweise eines von Petrolatum und Silikon ist.

11. Verfahren nach Anspruch 9, weiter umfassend das Einarbeiten des Vliesstoffes in einen Artikel (100, 790).

12. Verfahren nach Anspruch 11, wobei der Artikel ein Bekleidungsartikel ist.

13. Artikel, enthaltend einen Vliesstoff, der Artikel umfassend:
eine erste Schicht, enthaltend eine erste Mehrzahl von verfilzten Faserteilchen (341, 346, 350, 355, 380, 441, 446, 450, 455, 480, 541, 546, 550, 555, 580, 641, 646, 650, 655, 680) und ein Haftmittel, wobei jede Faser in der ersten Mehrzahl von verfilzten Faserteilchen ein Monofilament ist und wobei sämtliche der Fasern in der ersten Mehrzahl von verfilzten Faserteilchen das gleiche Monofilament ist; und
eine zweite Schicht, enthaltend eine zweite Mehrzahl von verfilzten Faserteilchen und das Haftmittel, wobei jede Faser in der zweiten Mehrzahl von verfilzten Faserteilchen ein Monofilament ist und wobei sämtliche der Fasern in der zweiten Mehrzahl von verfilzten Faserteilchen das gleiche Monofilament ist,
wobei die erste Schicht eine Aussparung ohne verfilzte Faserteilchen einschließt und die zweite Schicht die Aussparung überbrückt, sodass der Vliesstoff kontinuierlich ist.

14. Artikel nach Anspruch 13, wobei der Stoff eine Krümmung entlang mindestens zweier Achsen aufweist,
wobei der Artikel vorzugsweise ein Obermaterial eines Fußbekleidungsartikels ist, wobei das Obermaterial vorzugsweise nahtlos ist und vorzugsweise eine Schaftöffnung einschließt, oder
wobei der Artikel ein Bekleidungsartikel ist, wobei der Vliesstoff vorzugsweise mit einem zweiten Stoff verbunden ist, um den Bekleidungsartikel zu bilden.

## Revendications

1. Procédé de fabrication d'un article non tissé, ce procédé comprenant:
la préparation d'un substrat (300, 400, 500, 600) pour recevoir les particules fibreuses (341 346, 350, 355, 380, 441, 446, 450, 455, 480, 541, 546, 550, 555, 580, 641, 646, 650, 655, 680);
le dépôt d'une première pluralité de particules fibreuses sur le substrat;
l'application d'un adhésif (362, 462, 562, 662) sur la pluralité de particules fibreuses;
le dépôt d'une deuxième pluralité de particules fibreuses sur le substrat;
l'emmêlement de la première pluralité de particules fibreuses et de la deuxième pluralité de particules fibreuses ensemble pour former une première nappe emmêlée (375, 475, 575, 675) d'un article non tissé obtenu;
le durcissement de l'article non tissé obtenu; et
le retrait de l'article non tissé obtenu (301, 401, 501, 601) du substrat,
le procédé comprenant en outre l'étape où l'on applique un masque à une partie du substrat avant de déposer la pluralité de particules fibreuses sur le substrat.

2. Procédé selon la revendication 1,
dans lequel le substrat est configuré pour produire un article présentant une courbure le long d'au moins deux axes, dans lequel le substrat (300, 500) est de préférence pour au moins un article chaussant ou dans lequel le substrat (400, 600) est de préférence substantiellement plat pour produire une feuille de tissu.

3. Procédé selon la revendication 1 comprenant en outre les étapes où l'on applique un deuxième adhésif à la première nappe emmêlée;
dépose une troisième pluralité de particules fibreuses sur la première nappe emmêlée; et
on emmêle la troisième pluralité de particules fibreuses ensemble pour former une deuxième nappe emmêlée de l'article non tissé obtenu,
ce procédé comprenant de préférence en outre l'étape où l'on applique un masque (385) à une partie de la première nappe emmêlée avant de déposer au moins un du deuxième adhésif et la troisième pluralité de particules fibreuses sur la première nappe emmêlée.

4. Procédé selon la revendication 1, dans lequel l'emmêlement des particules fibreuses comprend une compression mécanique de la première pluralité de particules fibreuses et de la deuxième pluralité de particules fibreuses.

5. Procédé selon la revendication 4, dans lequel la compression mécanique comprend l'utilisation d'un rouleau (370, 470, 570, 670) pour entremêler la première pluralité de particules fibreuses avec la deuxième pluralité de particules fibreuses.

6. Procédé de fabrication d'une empeigne non tissée, ce procédé comprenant:
la préparation d'une forme (300, 500) pour recevoir la pluralité de particules fibreuses (341, 346, 350, 355, 380, 441, 446, 450, 455, 480, 541, 546, 550, 555, 580, 641, 646, 650, 655, 680);
le dépôt de la pluralité de particules fibreuses sur la forme en empeigne, comprenant une ouverture (302, 520);
l'application d'un adhésif à la pluralité de particules fibreuses;
l'emmêlement des particules fibreuses pour former une couche emmêlée (375, 575) de l'empeigne;
le durcissement de l'adhésif; et
le retrait de l'empeigne obtenue (301, 501) de la forme,
le procédé comprenant en outre l'étape où l'on applique un masque à une partie de la forme avant de déposer la pluralité de particules fibreuses sur la forme.

7. Procédé selon la revendication 6, dans lequel l'étape où l'on prépare la forme comprend l'application à la forme d'une substance conçue pour capturer la pluralité de particules fibreuses,
dans lequel la substance est de préférence appliquée à la forme pour constituer une ligne de l'ouverture de l'empeigne,
dans lequel la substance facilite de préférence le retrait de l'empeigne, de la forme, dans lequel la substance est de préférence de la gelée de pétrole ou du silicone.

8. Procédé selon la revendication 6, comprenant en outre l'étape où l'on incorpore l'empeigne obtenue à un article chaussant (100),
ce procédé comprenant de préférence en outre l'association de l'empeigne obtenue avec la semelle (102, 124).

9. Procédé de fabrication d'un tissu non tissé, ce procédé comprenant:
la préparation d'un substrat substantiellement plat (400, 600) pour recevoir une pluralité de particules fibreuses (441, 446, 450, 455, 480, 641, 646, 650, 655, 680);
le dépôt de la pluralité de particules fibreuses sur le substrat substantiellement plat;
l'application d'un adhésif à la pluralité de particules fibreuses;
l'emmêlement des particules fibreuses pour former une couche emmêlée (475, 675) du tissu non tissé;
le durcissement de l'adhésif; et
le retrait de l'article non tissé obtenu (301, 401, 501, 601) du substrat substantiellement plat,
le procédé comprenant en outre l'étape où l'on applique un masque à une partie du substrat substantiellement plat avant de déposer la pluralité de particules fibreuses sur le substrat substantiellement plat.

10. Procédé selon la revendication 9, dans lequel l'étape où l'on prépare le substrat substantiellement plat comprend l'application au substrat substantiellement plat d'une substance conçue pour capturer la pluralité de particules fibreuses,
dans lequel la substance facilite de préférence le retrait de l'empeigne du substrat substantiellement plat,
dans lequel la substance est de préférence l'une entre la gelée de pétrole et le silicone.

11. Procédé selon la revendication 9 comprenant en outre l'incorporation du tissu non tissé dans un article (100, 790).

12. Procédé selon la revendication 11, dans lequel l'article est un article vestimentaire.

13. Article incorporant un tissu non tissé, cet article comprenant:
une première couche incorporant une première pluralité de particules fibreuses emmêlées (341, 346, 350, 355, 380, 441, 446, 450, 455, 480, 541, 546, 550, 555, 580, 641, 646, 650, 655, 680) et un adhésif, dans lequel chaque fibre dans la première pluralité de particules fibreuses emmêlées est un monofilament, et où toutes les fibres de la première pluralité de particules fibreuses emmêlées est le même monofilament; et
une deuxième couche incorporant une deuxième pluralité de particules fibreuses emmêlées et l'adhésif, dans lequel chaque fibre de la deuxième pluralité de particules fibreuses emmêlées est un monofilament, et où toutes les fibres de la deuxième pluralité de particules fibreuses emmêlées est le même monofilament, dans lequel la première couche comprend un vide dénué de particules fibreuses emmêlées, et la deuxième couche couvre le vide de sorte que le tissu non tissé est continu.

14. Article selon la revendication 13, dans lequel le tissu a une courbure le long d'au moins deux axes,
dans lequel l'article est de préférence l'empeigne d'un article chaussant, dans lequel l'empeigne est de préférence sans couture et comprend de préférence une ouverture, ou
dans lequel l'article est un article vestimentaire, dans lequel le tissu non tissé est de préférence associé à un deuxième tissu pour former l'article vestimentaire.
